# EUROPÄISCHE PATENTSCHRIFT

(11) **EP 4 623 213 B1**
(45) Veröffentlichungstag und Bekanntmachung des Hinweises auf die Patenterteilung: **18.03.2026**
(21) Anmeldenummer: 23820758.3
(22) Anmeldetag: 22.11.2023
(51) Int. Cl.: F16C 11/12, F16C 29/00

(54) **DREHGELENK-ANORDNUNG UND POSITIONIERVORRICHTUNG MIT DER DREHGELENK-ANORDNUNG UND EINER LINEARFÜHRUNGSVORRICHTUNG**
SWIVEL JOINT ASSEMBLY AND POSITIONING DEVICE HAVING THE SWIVEL JOINT ASSEMBLY AND A LINEAR GUIDE DEVICE
ENSEMBLE JOINT ROTOÏDE ET DISPOSITIF DE POSITIONNEMENT ÉQUIPÉ DE CET ENSEMBLE JOINT ROTOÏDE ET D'UN DISPOSITIF DE GUIDAGE LINÉAIRE

(30) Priorität: 22.11.2022 US 202263427260 P
(43) Veröffentlichungstag der Anmeldung: 01.10.2025
(73) Patentinhaber: Schneeberger Holding AG, 4914 Roggwil (CH)
(72) Erfinder: HÖRMANNSDORFER, Andreas, 68128 Village Neuf (FR); FANKHAUSER, Roger, 4900 Langenthal (CH); ZIHLMANN, Jean-Claude, 6247 Schötz (CH)
(74) Vertreter: EGLI-EUROPEAN PATENT ATTORNEYS
(86) Internationale Anmeldenummer: PCT/EP2023/082684
(87) Internationale Veröffentlichungsnummer: WO 2024/110531

(56) Entgegenhaltungen:
- CN-A- 113 977 294
- US-A- 5 991 005
- US-A1- 2003 098 965

## Beschreibung

### Technisches Gebiet

Die Erfindung bezieht sich auf eine Drehgelenk-Anordnung mit einem ersten Teil, einem zweiten Teil und einer Kopplungseinrichtung mit mindestens einem Festkörpergelenk zum Verbinden des ersten Teils und des zweiten Teils und auf eine die Drehgelenk-Anordnung umfassende Positioniervorrichtung mit einer Linearführungsvorrichtung.

### Stand der Technik

Drehgelenk-Anordnungen der vorstehend genannten Art sind in der Regel derart konzipiert, dass die Kopplungseinrichtung dazu ausgebildet ist, das erste Teil und das zweite Teil über das mindestens eine Festkörpergelenk derart zu verbinden, dass das zweite Teil relativ zum ersten Teil um eine sich in einer Richtung erstreckende Drehachse drehbar ist, wobei das erste Teil und das zweite Teil jeweils eine Erstreckung senkrecht zur Drehachse aufweisen. Eine Drehung des ersten Teils relativ zum zweiten Teil um die Drehachse geht dabei einher mit einer elastischen Deformation des Festkörpergelenks, welches das erste Teil und das zweite Teil verbindet.

Es sind eine Vielzahl unterschiedlicher Festkörpergelenke der vorstehend genannte Art bekannt, welche jeweils aus einem festen Ende und einem flexiblen Ende bestehen, wobei das feste Ende und das flexible Ende durch einen dünnen, federnden Steg verbunden sind und das feste Ende des Festkörpergelenks beispielsweise dazu bestimmt ist, mit dem ersten Teil einer Drehgelenk-Anordnung der vorstehend genannten Art verbunden zu sein, während das flexible Ende des Festkörpergelenks dazu bestimmt ist, mit dem zweiten Teil der Drehgelenk-Anordnung verbunden zu sein.

Drehgelenk-Anordnungen der vorstehend genannten Art finden beispielsweise Anwendung in Positioniervorrichtungen zum Positionieren eines beweglichen Elements, welche geeignet sind, ein bewegliches Element bezüglich einer an einer Basis ausgebildeten ebenen Oberfläche entlang von zwei verschiedenen, rechtwinklig zueinander angeordneten Richtungen zu bewegen. Derartige Positioniervorrichtungen weisen häufig zwei verschiedene, rechtwinklig zueinander angeordnete und sich parallel zur ebenen Oberfläche der Basis erstreckende Achsen auf, wobei die eine Achse ausserdem mit Führungsmitteln an der anderen Achse derart geführt ist, dass die eine Achse relativ zur anderen Achse in Längsrichtung der anderen Achse bewegbar ist. Ein Festkörpergelenk einer Drehgelenk-Anordnung der vorstehend genannten Art kommt hierbei beispielsweise zum Einsatz, um die Führungsmittel mit der einen Achse derart zu verbinden, dass die Führungsmittel relativ zu der einen Achse um eine Drehachse drehbar sind, welche sich beispielsweise im Wesentlichen senkrecht zur ebenen Oberfläche der Basis erstreckt. Mittels des Festkörpergelenks sind in diesem Fall die Führungsmittel derart an die eine Achse gekoppelt, dass die Führungsmittel mit Bezug auf die eine Achse zumindest in einem bestimmten Winkelbereich um die Drehachse schwenkbar sind und die räumliche Lage der Führungsmittel relativ zu der einen Achse somit veränderbar ist. Dadurch können die Führungsmittel mit Bezug auf die andere Achse stets in einer vorgegebenen räumlichen Lage gehalten sein, selbst wenn die räumliche Lage der einen Achse relativ zu der anderen Achse innerhalb bestimmter Toleranzen verändert werden sollte. Die jeweiligen Toleranzen hinsichtlich der räumlichen Lage der einen Achse relativ zu der anderen Achse können hierbei durch eine Deformation des Festkörgelenks kompensiert werden.

Derartige Positioniervorrichtungen werden beispielsweise in der Halbleiterindustrie verwendet, um u.a. Halbleiterwafer während Prozessschritten zur Herstellung von Mikrostrukturen an einer Oberfläche eines Halbleiterwafers in unterschiedliche Positionen zu bringen oder Halbleiterwafer zu metrologischen Zwecken relativ zu Messvorrichtungen zu positionieren.

Beispielsweise im Hinblick auf industrielle Anwendungen zur Durchführung von Prozessschritten zur Herstellung von Mikrostrukturen oder zur Inspektion und/oder zur messtechnischen Charakterisierung von Mikrostrukturen besteht ein Bedarf an Positioniervorrichtungen, welche geeignet sind, ein bewegliches Element (beispielsweise eine Plattform bzw. einen Tisch zur Aufnahme eines zu positionierenden Gegenstands) in einer ersten Richtung und in einer zweiten Richtung (d.h. zweidimensional relativ zu einer vorgegebenen Ebene) mit einer möglichst grossen Geschwindigkeit und gegebenenfalls mit einer möglichst grossen Beschleunigung (z.B. im Bereich von 2g oder mehr) zu bewegen und dabei wiederholt und reproduzierbar in vorgegebene Positionen jeweils mit einer grossen Präzision (d.h. mit einer Genauigkeit im Sub-Mikrometer-Bereich) zu positionieren.

Um ein schnelles und präzises Positionieren eines beweglichen Elements in einer ersten Richtung und in einer zweiten Richtung zu ermöglichen, umfassen Positioniervorrichtungen der vorstehend genannten Art häufig eine Basis (z.B. einen Block aus Granit) mit einer ebenen Führungsfläche, welche parallel zu einer ersten Richtung und parallel zu einer zweiten Richtung angeordnet ist, und eine Bewegungsvorrichtung zum Bewegen des beweglichen Elements mit Bezug auf die ebene Führungsfläche der Basis. Eine Bewegungsvorrichtung der vorstehend genannten Art kann hierbei beispielsweise **u.a.** eine erste Bewegungseinrichtung in Gantry-Bauweise aufweisen, welche einen über der ebenen Führungsfläche angeordneten, sich in der zweiten Richtung in einem Abstand zur ebenen Führungsfläche erstreckenden Gantry-Balken und einen Gantry-Antrieb zum Bewegen des Gantry-Balkens relativ zur Basis in der ersten Richtung umfasst. Der Gantry-Balken weist hierbei ein erstes Ende und ein dem ersten Ende gegenüberliegendes zweites Ende auf, wobei der Gantry-Antrieb zwei sich in der ersten Richtung erstreckende erste Linearachsen mit je einem Linearantrieb umfasst und die zwei sich in der ersten Richtung erstreckenden ersten Linearachsen derart konzipiert sind, dass der Linearantrieb einer der zwei ersten Linearachsen mit dem ersten Ende des Gantry-Balkens und der Linearantrieb der anderen der zwei ersten Linear-Achsen mit dem zweiten Ende des Gantry-Balkens verbunden ist.

Um ein Bewegen des beweglichen Elements in der ersten Richtung und in der zweiten Richtung zu ermöglichen, ist dabei das bewegliche Element am Gantry-Balken derart gelagert, dass das bewegliche Element am Gantry-Balken linear in der zweiten Richtung bewegbar ist, wobei der Gantry-Balken eine sich in der zweiten Richtung erstreckende zweite Linearachse mit einem mit dem beweglichen Element verbundenen Linearantrieb zum Bewegen des beweglichen Elements in der zweiten Richtung aufweist.

Um zu ermöglichen, dass das bewegliche Element wiederholt und reproduzierbar in vorgegebene Positionen jeweils mit einer grossen Präzision (d.h. mit einer Genauigkeit im Bereich von Nanometern) relativ zur Führungsfläche der Basis positioniert werden kann, kann es für viele Anwendungen vorteilhaft sein, den Gantry-Balken der ersten Bewegungseinrichtung bei einer Bewegung entlang der ebenen Führungsfläche der Basis mittels Luftlagern an der Basis zu lagern, sodass bei einer Bewegung des Gantry-Balkens relativ zur Basis gegenüberliegende und relativ zueinander bewegte Oberflächenbereiche des Gantry-Balkens und der Führungsfläche der Basis im Bereich der Luftlager jeweils durch Luftkissen separiert sind und deshalb berührungslos relativ zueinander bewegt werden können.

Im Hinblick auf viele Anwendungen von Positioniervorrichtungen der vorstehend genannten Art besteht ein Bedarf, derartige Positioniervorrichtungen "hochdynamisch" auszubilden, sodass sie geeignet sind, ein bewegliches Element mit einer grossen Beschleunigung (z.B. im Bereich von 2g oder mehr) zu bewegen. Bei einer hochdynamischen Positioniervorrichtung der vorstehend genannten Art besteht eine wesentliche Anforderung darin, dass die Positioniervorrichtung und insbesondere der Gantry-Balken der ersten Bewegungseinrichtung infolge der Massenträgheit sowohl während einer grossen Beschleunigung des Gantry-Balkens mittels der Linearantriebe der zwei ersten Linearachsen in der ersten Richtung als auch bei einer grossen Beschleunigung des beweglichen Elements mittels des Linearantriebs der zweiten Linearachse in der zweiten Richtung möglichst wenig deformiert wird und deshalb eine möglichst grosse Steifigkeit mit Bezug auf eine Deformation in Form einer Biegung und/oder einer Torsion um die erste Richtung und/oder die zweite Richtung aufweisen sollte.

Hinsichtlich Positioniervorrichtungen der vorstehend genannten Art, bei welchen der Gantry-Balken mittels Luftlagern an der Basis geführt ist und welche hochdynamisch ausgebildet sind, sind insbesondere Konstruktionen bekannt geworden, welche eine "flache" Bauform aufweisen, derart, dass die beiden Linearantriebe der ersten Linearachsen möglichst auf der Höhe des Massenschwerpunktes aller mittels dieser beiden Linearantriebe bewegten Teile der Positioniervorrichtung angeordnet sind, um die dynamische Torsionssteifigkeit (entsprechend einer Eigenfrequenz) des Gantry-Balkens zu maximieren. Letzteres steht im Zusammenhang mit der Tatsache, dass je grösser der vertikale Abstand (d.h. senkrecht zur ebenen Führungsfläche der Basis) zwischen dem auf den Gantry-Balken wirkenden Kraftvektor der Linearantriebe der zwei ersten Linearachsen und dem Masseschwerpunkt aller mittels der Linearantriebe der zwei ersten Linearachsen bewegten Teile der Positioniervorrichtung ist, umso stärker wird sich der Gantry-Balken bei einer beschleunigten Bewegung in der ersten Richtung aufgrund der Massenträgheit der mittels der Linearantriebe der zwei ersten Linearachsen bewegten Teile der Positioniervorrichtung verdrehen, was in nachteiliger Weise die Einschwingzeit verlängert, welche der Gantry-Balken benötigt, um nach einer Beschleunigung des Gantry-Balkens in der ersten Richtung wieder in eine stabile Lage zu gelangen.

Eine hochdynamisch ausgebildete Positioniervorrichtung der vorstehend genannten Art, bei welcher der Gantry-Balken mittels Luftlagern an einer ebenen Führungsfläche einer Basis geführt ist, ist beispielsweise aus der Druckschrift CN 113977294 A bekannt. Diese Positioniervorrichtung ist konzipiert für eine präzise Positionierung eines beweglichen Elements in Form eines bewegbaren Tischs zur Aufnahme eines Werkstücks (beispielsweise für eine Mikrobearbeitung des Werkstücks). Der Gantry-Balken dieser Positioniervorrichtung ist an einer ebenen Führungsfläche an der Oberseite der Basis mittels zwei horizontalen Luftlagern geführt, wobei eines der zwei horizontalen Luftlager am ersten Ende des Gantry-Balkens angeordnet ist, um das erste Ende des Gantry-Balkens bei einer Bewegung in der ersten Richtung auf der ebenen Führungsfläche der Basis zu stützen bzw. zu führen, und wobei das andere der zwei horizontalen Luftlager am zweiten Ende des Gantry-Balkens angeordnet ist, um das zweite Ende des Gantry-Balkens bei einer Bewegung in der ersten Richtung auf der ebenen Führungsfläche an der Oberseite der Basis zu stützen bzw. zu führen. Der zu positionierende bewegbare Tisch ist mittels des Linearantriebs der am Gantry-Balken angeordneten zweiten Linearachse in der zweiten Richtung (Längsrichtung des Gantry-Balkens) bewegbar und ebenfalls mittels horizontaler Luftlager an der ebenen Führungsfläche an der Oberseite der Basis gestützt bzw. geführt. Um den Gantry-Balken bei einer Bewegung in der ersten Richtung seitlich zu führen, ist eine seitliche Führungsfläche vorgesehen, welche sich parallel zur ersten Richtung und senkrecht zur ebenen Führungsfläche der Basis erstreckt. Die seitliche Führungsfläche ist mit Bezug auf die ebene Führungsfläche an der Oberseite der Basis in etwa auf derselben Höhe angeordnet wie der Gantry-Balken, derart, dass die seitliche Führungsfläche seitlich neben dem Gantry-Balken in der Nähe eines der Enden des Gantry-Balkens in einem Abstand zu diesem einen Ende des Gantry-Balkens platziert ist. Der Gantry-Balken ist an der einen seitlichen Führungsfläche mittels eines seitlichen Luftlagers geführt, welches zu diesem Zweck an einer Seitenfläche des Gantry-Balkens an dem einen Ende des Gantry-Balkens befestigt ist, welches in der Nähe der seitlichen Führungsfläche angeordnet ist. Die Anordnung der seitlichen Führungsfläche (d.h. seitlich neben dem Gantry-Balken in der Nähe eines der Enden des Gantry-Balken in einem Abstand zu diesem einen Ende des Gantry-Balkens) ermöglicht eine Maximierung der dynamischen Biegesteifigkeit des Gantry-Balkens bei einer Beschleunigung des bewegbaren Tischs in der zweiten Richtung (entsprechend der Längsrichtung des Gantry-Balkens). Letzteres steht im Zusammenhang mit der Tatsache, dass je grösser der Abstand zwischen dem Ort, an dem der Gantry-Balken mittels des seitlichen Luftlagers an der einen seitlichen Führungsfläche geführt ist, und dem Massenschwerpunkt des am Gantry-Balken angeordneten bewegbaren Tischs ist, desto grösser wird das bei einer Beschleunigung des bewegbaren Tischs in der zweiten Richtung auf den Gantry-Balken bzw. das seitliche Luftlager wirkende Biegemoment, was die Biegesteifigkeit des Gantry-Balkens reduziert und in nachteiliger Weise die Einschwingzeit verlängert, welche der Gantry-Balken benötigt, um nach einer Beschleunigung des bewegbaren Tischs in der zweiten Richtung wieder in eine stabile Lage zu gelangen. Zum Ausgleich von Toleranzen und unterschiedlichen Geschwindigkeiten der beiden Linearantriebe der zwei ersten Linearachsen bei einer Bewegung des Gantry-Balkens in der ersten Richtung ist das seitliche Luftlager über ein (zwischen dem seitlichen Luftlager und dem einen Ende des Gantry-Balkens platziertes) Festkörpergelenk derart mit dem einen Ende des Gantry-Balkens verbunden, dass das seitliche Luftlager relativ zum Gantry-Balken schwenkbar ist.

Das Festkörpergelenk umfasst u.a. einen relativ dünnen ersten Stegteil, welcher sich im Wesentlichen parallel zur zweiten Richtung und parallel zu einer sich senkrecht zur ersten Richtung und senkrecht zur zweiten Richtung erstreckenden dritten Richtung erstreckt. Dieser erste Stegteil ist derart flexibel, dass er hinsichtlich einer Biegung um eine sich in der dritten Richtung erstreckenden Achse eine geringe Steifigkeit aufweist, sodass der erste Stegteil des Festkörpergelenks eine Drehung des seitlichen Luftlagers relativ zum Gantry-Balken um eine sich in der dritten Richtung erstreckende Achse ermöglicht. Das Festkörpergelenk umfasst ausserdem einen relativ dünnen zweiten Stegteil, welcher sich im Wesentlichen parallel zur ersten Richtung und parallel zur zweiten Richtung erstreckt. Dieser zweite Stegteil ist derart flexibel, dass er hinsichtlich einer Biegung um eine sich in der ersten Richtung erstreckenden Achse eine geringe Steifigkeit aufweist, sodass der zweite Stegteil des Festkörpergelenks eine Drehung des seitlichen Luftlagers relativ zum Gantry-Balken um eine sich in der ersten Richtung erstreckende Achse ermöglicht.

Die aus der Druckschrift CN 113977294 A bekannte Positioniervorrichtung hat den Nachteil, dass sie - im Vergleich zu den Distanzen, über welche das zu positionierende bewegliche Element mittels der jeweiligen Positioniervorrichtungen relativ zur ebenen Führungsfläche der Basis bewegbar ist, einen verhältnismässig grossen Platzbedarf (hinsichtlich einer Grundfläche parallel zur ersten Richtung und zur zweiten Richtung, über welche die jeweiligen Teile der Positioniervorrichtung räumlich verteilt angeordnet sind) hat, u.a. bedingt durch die räumliche Anordnung der zwei ersten Linearachsen und der zweiten Linearachse und die räumliche Anordnung des seitlichen Luftlagers zur Führung des Gantry-Balkens an der einen seitlichen Führungsfläche, welche seitlich neben dem Gantry-Balken in der Nähe eines der Enden des Gantry-Balken in einem Abstand zu diesem einen Ende des Gantry-Balkens angeordnet ist.

Des Weiteren bildet im Falle der aus der Druckschrift CN 113977294 A bekannten Positioniervorrichtung das vorstehend genannte Festkörpergelenk eine Verbindung zwischen dem seitlichen Luftlager und dem Gantry-Balken, welche eine relativ geringe Steifigkeit aufweist mit Bezug auf eine Drehung des seitlichen Luftlagers relativ zum Gantry-Balken um eine sich in der ersten Richtung erstreckende Achse oder um eine sich in der zweiten Richtung erstreckende Achse und ausserdem eine geringen Steifigkeit aufweist mit Bezug auf eine Translation des seitlichen Luftlagers relativ zum Gantry-Balken in der ersten Richtung oder in der zweiten Richtung. Die durch das Festkörpergelenk gebildete Verbindung zwischen dem seitlichen Luftlager und dem Gantry-Balken kann daher relativ stark deformiert werden bei mechanischen Beanspruchungen des Gantry-Balkens, welche eine Drehung des Gantry-Balkens relativ zum seitlichen Luftlagers um eine sich in der ersten Richtung erstreckende Achse oder um eine sich in der zweiten Richtung erstreckende Achse oder eine Translation des Gantry-Balkens relativ zum seitlichen Luftlager in der ersten Richtung oder in der zweiten Richtung induziert. Letzteres ist limitierend bei hochdynamischen Anwendungen, bei welchen der Gantry-Balken mechanischen Beanspruchungen der vorstehend genannten Art ausgesetzt ist, wenn der bewegbare Tisch in der ersten Richtung und/oder der zweiten Richtung mit einer möglichst grossen Beschleunigung bewegt werden soll.

Eine weitere Drehgelenk-Anordnung mit Festkörpergelenken ist aus der US2003098965A1 bekannt.

### Zusammenfassung der Erfindung

Der vorliegenden Erfindung liegt die Aufgabe zugrunde, die genannten Nachteile zu vermeiden und eine Drehgelenk-Anordnung zu schaffen, welche ein erstes Teil, ein zweites Teil und eine Kopplungseinrichtung mit mindestens einem Festkörpergelenk zum Verbinden des ersten Teils und des zweiten Teils derart umfasst, dass das zweite Teil relativ zum ersten Teil um eine sich in einer ersten Richtung erstreckende Drehachse drehbar ist, wobei die Kopplungseinrichtung insbesondere eine kompakte Anordnung des ersten Teils und des zweiten Teil mit einem geringeren Platzbedarf ermöglichen und ausserdem eine relativ hohe Steifigkeit der Kopplungseinrichtung hinsichtlich einer Rotation des ersten Teils relativ zum zweiten Teil um mindestens eine sich senkrecht zur Drehachse erstreckende Richtung gewährleisten soll.

Ausserdem soll eine Positioniervorrichtung geschaffen werden, welche die Drehgelenk-Anordnung in Kombination mit einer Linearführungsvorrichtung umfasst.

Diese Aufgabe wird gelöst durch eine Drehgelenk-Anordnung mit den Merkmalen des Patentanspruchs 1 und durch eine Positioniervorrichtung mit den Merkmalen des Patentanspruchs 13.

Die Drehgelenk-Anordnung umfasst ein erstes Teil, ein zweites Teil und eine Kopplungseinrichtung mit mindestens einem Festkörpergelenk zum Verbinden des ersten Teils und des zweiten Teils derart, dass das zweite Teil relativ zum ersten Teil um eine sich in einer ersten Richtung erstreckende Drehachse drehbar ist, wobei das erste Teil und das zweite Teil jeweils eine Erstreckung senkrecht zur Drehachse aufweisen, wobei das zweite Teil relativ zum ersten Teil axial zur Drehachse um eine Distanz versetzt angeordnet ist.

Gemäss der Erfindung weist die Kopplungseinrichtung ein erstes Festkörpergelenk und ein zweites Festkörpergelenk auf. Das erste Festkörpergelenk besteht aus einem ersten länglichen Festkörper, welcher sich entlang einer zur ersten Richtung parallelen ersten Ebene senkrecht zur ersten Richtung erstreckt und eine senkrecht zur ersten Richtung angeordnete Längsachse aufweist, wobei der erste längliche Festkörper folgende in Richtung der Längsachse des ersten länglichen Festkörpers hintereinander angeordnete Längsabschnitte aufweist:
- einen ersten Endabschnitt, welcher ein erstes Ende des ersten länglichen Festkörpers bildet;
- einen zweiten Endabschnitt, welcher ein dem ersten Ende des ersten länglichen Festkörpers in Richtung der Längsachse des ersten länglichen Festkörpers gegenüberliegendes zweites Ende des ersten länglichen Festkörpers bildet;
- einen zwischen dem ersten Endabschnitt und dem zweiten Endabschnitt des ersten länglichen Festkörpers angeordneten Mittelabschnitt;
- einen zwischen dem ersten Endabschnitt und dem Mittelabschnitt des ersten länglichen Festkörpers angeordneten, mit dem ersten Endabschnitt und dem Mittelabschnitt verbundenen ersten Stegteil;
- einen zwischen dem zweiten Endabschnitt und dem Mittelabschnitt des ersten länglichen Festkörpers angeordneten, mit dem zweiten Endabschnitt und dem Mittelabschnitt des ersten länglichen Festkörpers verbundenen zweiten Stegteil.

Das zweite Festkörpergelenk besteht aus einem zweiten länglichen Festkörper, welcher sich entlang einer zur ersten Richtung parallelen zweiten Ebene senkrecht zur ersten Richtung erstreckt und eine senkrecht zur ersten Richtung angeordnete Längsachse aufweist, wobei der zweite längliche Festkörper folgende in Richtung der Längsachse des zweiten länglichen Festkörpers hintereinander angeordnete Längsabschnitte aufweist:
- einen ersten Endabschnitt, welcher ein erstes Ende des zweiten länglichen Festkörpers bildet;
- einen zweiten Endabschnitt, welcher ein dem ersten Ende des zweiten länglichen Festkörpers in Richtung der Längsachse des zweiten länglichen Festkörpers gegenüberliegendes zweites Ende des zweiten länglichen Festkörpers bildet;
- einen zwischen dem ersten Endabschnitt und dem zweiten Endabschnitt des zweiten länglichen Festkörpers angeordneten Mittelabschnitt;
- einen zwischen dem ersten Endabschnitt und dem Mittelabschnitt des zweiten länglichen Festkörpers angeordneten, mit dem ersten Endabschnitt und dem Mittelabschnitt verbundenen ersten Stegteil;
- einen zwischen dem zweiten Endabschnitt und dem Mittelabschnitt des zweiten länglichen Festkörpers angeordneten, mit dem zweiten Endabschnitt und dem Mittelabschnitt des zweiten länglichen Festkörpers verbundenen zweiten Stegteil.

Dabei ist das erste Teil mit dem zweiten Teil über das erste Festkörpergelenk und das zweite Festkörpergelenk derart verbunden, dass der erste Endabschnitt des ersten länglichen Festkörpers und der zweite Endabschnitt des ersten länglichen Festkörpers starr mit dem zweiten Teil und der Mittelabschnitt des ersten länglichen Festkörpers starr mit dem ersten Teil verbunden sind und dass der erste Endabschnitt des zweiten länglichen Festkörpers und der zweite Endabschnitt des zweiten länglichen Festkörpers starr mit dem zweiten Teil und der Mittelabschnitt des zweiten länglichen Festkörpers starr mit dem ersten Teil verbunden sind, wobei die erste Ebene und die zweite Ebene relativ zueinander derart geneigt sind, dass die erste Ebene und die zweite Ebene eine sich parallel zur ersten Richtung erstreckende gemeinsame Schnittlinie bilden.

Der erste Stegteil und der zweite Stegteil des ersten länglichen Festkörpers des ersten Festkörpergelenks weisen senkrecht zur ersten Ebene jeweils eine Erstreckung auf, welche geringer ist als eine Erstreckung des ersten Endabschnitts des ersten länglichen Festkörpers senkrecht zur ersten Ebene, eine Erstreckung des zweiten Endabschnitts des ersten länglichen Festkörpers senkrecht zur ersten Ebene und eine Erstreckung des Mittelabschnitts des ersten länglichen Festkörpers senkrecht zur ersten Ebene, sodass der erste Stegteil und der zweite Stegteil des ersten länglichen Festkörpers elastisch deformierbar sind und der Mittelabschnitt des ersten Festkörpergelenks relativ zum ersten Endabschnitt des ersten Festkörpergelenks und zum zweiten Endabschnitt des ersten Festkörpergelenks bewegbar ist.

Der erste Stegteil und der zweite Stegteil des zweiten länglichen Festkörpers des zweiten Festkörpergelenks weisen senkrecht zur zweiten Ebene jeweils eine Erstreckung auf, welche geringer ist als eine Erstreckung des ersten Endabschnitts des zweiten länglichen Festkörpers senkrecht zur zweiten Ebene, eine Erstreckung des zweiten Endabschnitts des zweiten länglichen Festkörpers senkrecht zur zweiten Ebene und eine Erstreckung des Mittelabschnitts des zweiten länglichen Festkörpers senkrecht zur zweiten Ebene, sodass der erste Stegteil und der zweite Stegteil des zweiten länglichen Festkörpers elastisch deformierbar sind und der Mittelabschnitt des zweiten Festkörpergelenks relativ zum ersten Endabschnitt des zweiten Festkörpergelenks und zum zweiten Endabschnitt des zweiten Festkörpergelenks bewegbar ist.

Dabei sind das erste Teil und das zweite Teil mittels des ersten Festkörpergelenks und des zweiten Festkörpergelenks derart verbunden, dass das zweite Teil mittels des ersten Festkörpergelenks und des zweiten Festkörpergelenks an dem ersten Teil um die gemeinsame Schnittlinie der ersten Ebene und der zweiten Ebene drehbar gelagert ist.

Die Verwendung der Festkörpergelenke ermöglicht eine reibungsfreie und spielfreie Relativbewegung zwischen dem ersten Teil und dem zweiten Teil der Drehgelenk-Anordnung und bietet eine einfache Möglichkeit, die Anordnung des ersten Teils relativ zum zweiten Teil präzise kontrollierbar und reproduzierbar zu ändern.

Der Einfachheit halber können das erste Festkörpergelenk und das zweite Festkörpergelenk identisch ausgebildet sein, insbesondere hinsichtlich der Form der Festkörpergelenke und hinsichtlich des Werkstoffs, aus dem die Festkörpergelenke gefertigt sind (z.B. aus Stahl).

Die aus dem ersten Festkörpergelenk und dem zweiten Festkörperlenk bestehende Kopplungseinrichtung gewährleistet eine Verbindung zwischen dem ersten Teil und zweiten Teil derart, dass die gemeinsame Schnittlinie der ersten Ebene und der zweiten Ebene eine virtuelle Drehachse bilden, um welche das erste Teil relativ zum zweiten Teil drehbar ist. Die räumliche Lage der Drehachse relativ zum ersten Teil bzw. zum zweiten Teil wird demnach massgeblich bestimmt durch die räumliche Lage der ersten Ebene und der zweiten Ebene.

Die Drehgelenk-Anordnung bietet deshalb die Möglichkeit, die räumliche Lage der Drehachse relativ zum ersten Teil und zum zweiten Teil je nach Bedarf geeignet zu wählen: Abhängig davon, welche räumliche Lage der Drehachse relativ zum ersten Teil und zum zweiten Teil im Hinblick auf eine spezifische Anwendung der Drehgelenk-Anordnung erwünscht ist, können die räumlichen Lagen des ersten Festkörpergelenks und des zweiten Festkörpergelenks relativ zueinander und relativ zum ersten Teil und zum zweiten Teil gewählt werden, um die gewünschte räumliche Lage der Drehachse zu realisieren.

Dadurch, dass das zweite Teil relativ zum ersten Teil axial zur Drehachse um eine Distanz versetzt angeordnet ist, wird erreicht, dass das erste Teil und das zweite Teil mit Bezug auf die Drehachse in einer Reihe hintereinander angeordnet sind. Auf diese Weise gewährleistet die Drehgelenk-Anordnung eine platzsparende Anordnung des ersten Teils und des zweiten Teils hinsichtlich der räumlichen Erstreckung der Drehgelenk-Anordnung radial zur Drehachse.

Das erste Festkörpergelenk und das zweite Festkörpergelenk der Kopplungseinrichtung sind derart mit dem ersten Teil und dem zweiten Teil verbunden, dass sowohl die beiden Endabschnitte (bzw. der erste Endabschnitt und der zweite Endabschnitt) des ersten Festkörpergelenks als auch die beiden Endabschnitte (bzw. der erste Endabschnitt und der zweite Endabschnitt) des zweiten Festkörpergelenks starr mit dem zweiten Teil der Drehgelenk-Anordnung verbunden sind, während sowohl der Mittelabschnitt des ersten Festkörpergelenks als auch der Mittelabschnitt des zweiten Festkörpergelenks starr mit dem ersten Teil der Drehgelenk-Anordnung verbunden sind. Diese Ausbildung der Kopplungseinrichtung hat den Effekt, dass bei einer Bewegung des ersten Teils relativ zum zweiten Teil zwangsläufig sowohl der Mittelabschnitt des ersten Festkörpergelenks relativ zu den beiden starr mit dem zweiten Teil verbunden Endabschnitten des ersten Festkörpergelenks bewegt werden muss als auch der Mittelabschnitt des zweiten Festkörpergelenks relativ zu den beiden starr mit dem zweiten Teil verbunden Endabschnitten des zweiten Festkörpergelenks bewegt werden muss. Die vorstehend genannte Bewegung des Mittelabschnitts des ersten Festkörpergelenks relativ zu den beiden starr mit dem zweiten Teil verbunden Endabschnitten des ersten Festkörpergelenks setzt voraus, dass während der Bewegung des Mittelabschnitts des ersten Festkörpergelenks sowohl der erste Stegteil als auch der zweite Stegteil des ersten Festkörpergelenks elastisch deformiert werden. Entsprechend setzt die vorstehend genannte Bewegung des Mittelabschnitts des zweiten Festkörpergelenks relativ zu den beiden starr mit dem ersten Teil verbunden Endabschnitten des zweiten Festkörpergelenks voraus, dass während der Bewegung des Mittelabschnitts des zweiten Festkörpergelenks sowohl der erste Stegteil als auch der zweite Stegteil des zweiten Festkörpergelenks elastisch deformiert werden.

Das erste Festkörpergelenk der Kopplungseinrichtung ist mit dem ersten Teil und dem zweiten Teil der Drehgelenk-Anordnung derart verbunden, dass das erste Festkörpergelenk eine Verbindung zwischen dem ersten Teil und dem zweiten Teil bildet, welche eine relativ geringe Steifigkeit im Hinblick auf eine Rotation des ersten Teils relativ zum zweiten Teil um die erste Richtung und im Hinblick auf eine Translation des ersten Teils relativ zum zweiten Teil senkrecht zur ersten Ebene aufweist (verglichen mit einer Steifigkeit dieser Verbindung zwischen dem ersten Teil und dem zweiten Teil hinsichtlich einer Translation des ersten Teils relativ zum zweiten Teil in einer Richtung parallel zur ersten Ebene).

Entsprechend ist das zweite Festkörpergelenk der Kopplungseinrichtung mit dem ersten Teil und dem zweiten Teil der Drehgelenk-Anordnung derart verbunden, dass das zweite Festkörpergelenk eine Verbindung zwischen dem ersten Teil und dem zweiten Teil bildet, welche eine relativ geringe Steifigkeit im Hinblick auf eine Rotation des ersten Teils relativ zum zweiten Teil um die erste Richtung und im Hinblick auf eine Translation des ersten Teils relativ zum zweiten Teil senkrecht zur zweiten Ebene aufweist (verglichen mit einer Steifigkeit dieser Verbindung zwischen dem ersten Teil und dem zweiten Teil hinsichtlich einer Translation des ersten Teils relativ zum zweiten Teil in einer Richtung parallel zur zweiten Ebene) .

Die Anordnung des ersten Festkörpergelenks und des zweiten Festkörpergelenks soll in Kombination miteinander gewährleisten, dass das erste Teil derart drehbar am zweiten Teil angeordnet ist, dass die Anordnung des ersten Festkörpergelenks und des zweiten Festkörpergelenks in Kombination miteinander eine möglichst geringe Rotationssteifigkeit hinsichtlich einer Drehung des ersten Teils relativ zum zweiten Teil um die (sich in der ersten Richtung erstreckende) gemeinsame Schnittlinie der ersten Ebene und der zweiten Ebene aufweist.

Die jeweiligen Steifigkeiten des aus dem ersten Teil, dem zweiten Teil, dem ersten Festkörpergelenk und dem zweiten Festkörpergelenk gebildeten gekoppelten Systems mit Bezug auf eine Rotation des ersten Teils relativ zum zweiten Teil um die erste Richtung und mit Bezug auf eine Translation des ersten Teils relativ zum zweiten Teil entlang einer sich senkrecht zur ersten Richtung erstreckenden Achse oder mit Bezug auf eine Rotation des ersten Teils relativ zum zweiten Teil um eine sich senkrecht zur ersten Richtung erstreckende Achse hängen von der Anordnung des ersten Festkörpergelenks und des zweiten Festkörpergelenks relativ zueinander und insbesondere von der Grösse der Neigung der ersten Ebene bezüglich der zweiten Ebene ab. Die Grösse der Neigung der ersten Ebene bezüglich der zweiten Ebene kann dementsprechend geeignet gewählt werden, um die jeweiligen Steifigkeiten je nach Bedarf geeignet zu wählen.

Das erste Festkörpergelenk und das zweite Festkörpergelenk können so ausgebildet sein, dass die räumliche Erstreckung des ersten Festkörpergelenks und die räumliche Erstreckung des zweiten Festkörpergelenks relativ klein im Vergleich zur räumlichen Erstreckung des ersten Teils und des zweiten Teils der Drehgelenk-Anordnung sind. Das erste Festkörpergelenk und das zweite Festkörpergelenk können deshalb derart bereitgestellt werden, dass die Anordnung des ersten Festkörpergelenks und des zweite Festkörpergelenks relativ wenig Platz beansprucht und somit eine kompakte Verbindung zwischen dem ersten Teil und dem zweiten Teil der Drehgelenk-Anordnung darstellt.

Eine möglichst geringe Rotationssteifigkeit der Anordnung des ersten Festkörpergelenks und des zweiten Festkörpergelenks in Kombination miteinander hinsichtlich einer Drehung des ersten Teils relativ zum zweiten Teil um die erste Richtung hat ausserdem den Vorteil, dass das erste Teil und das zweite Teil gemeinsam ein mittels des ersten Festkörpergelenks und des zweiten Festkörpergelenks gekoppeltes System bilden, welches hinsichtlich einer Drehung des ersten Teils relativ zum zweiten Teil um die erste Richtung eine geringe Eigenfrequenz (z.B. im Bereich von weniger als 30 Hz) aufweist. Die geringe Eigenfrequenz ist in diesem Fall von Vorteil im Hinblick auf das dynamische Verhalten der Drehgelenk-Anordnung bei einer beschleunigten Bewegung der Drehgelenk-Anordnung in einer zur ersten Richtung senkrechten zweiten und/oder dritten Richtung, beispielsweise im Hinblick auf die Steuerung von Antrieben, welche dazu dienen, die Drehgelenk-Anordnung in einer zur ersten Richtung senkrechten zweiten und/oder dritten Richtung zu bewegen. Dieser Vorteil ist beispielsweise relevant im Hinblick auf Anwendungen, in denen ein Teil der Drehgelenk-Anordnung (d.h. das erste Teil oder alternativ das zweite Teil der Drehgelenk-Anordnung) mittels einer Linearführung derart geführt ist, dass dieses Teil in einer zur ersten Richtung senkrechten zweiten Richtung linear bewegbar ist und das jeweilige andere Teil (d.h. das zweite Teil oder alternativ das erste Teil der Drehgelenk-Anordnung) mittels mehrerer Antriebe zum Bewegen des jeweiligen anderen Teils in der zweiten Richtung verbunden ist. Eine möglichst geringe Rotationssteifigkeit der Anordnung des ersten Festkörpergelenks und des zweiten Festkörpergelenk ist in diesem Fall vorteilhaft, weil in diesem Fall die mehreren Antriebe das jeweilige andere Teil nicht perfekt synchron antreiben müssen, sondern stattdessen innerhalb bestimmter Toleranzen unabhängig voneinander gesteuert werden können.

Im Hinblick auf das dynamische Verhalten der Drehgelenk-Anordnung bei einer beschleunigten Bewegung der Drehgelenk-Anordnung in einer zur ersten Richtung senkrechten zweiten und/oder dritten Richtung wäre es andererseits vorteilhaft, dass das erste Teil und das zweite Teil gemeinsam ein mittels des ersten Festkörpergelenks und des zweiten Festkörpergelenks gekoppeltes System bilden, welches bei einer beschleunigten Bewegung des ersten Teils und des zweiten Teil in einer zur ersten Richtung senkrechten zweiten und/oder dritten Richtung jeweils eine grosse Steifigkeit aufweist in Bezug auf eine Translation des ersten Teils relativ zum zweiten Teil in der ersten Richtung und/oder in der zweiten Richtung und/oder in der dritten Richtung und in Bezug auf eine Rotation des ersten Teils relativ zum zweiten Teil um eine zur ersten Richtung senkrechten zweiten und/oder dritten Richtung. Eine grosse Steifigkeit des aus dem ersten Teil, dem zweiten Teil, dem ersten Festkörpergelenk und dem zweiten Festkörpergelenk gebildeten gekoppelten Systems in Bezug auf eine Translation des ersten Teils relativ zum zweiten Teil in der ersten Richtung und/ oder in der zweiten Richtung und/oder in der dritten Richtung und in Bezug auf eine Rotation des ersten Teils relativ zum zweiten Teil um eine zur ersten Richtung senkrechten zweiten und/oder dritten Richtung ermöglichen eine schnellere Regelung von Antrieben zum Bewegen der Drehgelenk-Anordnung um eine zur ersten Richtung senkrechten zweiten und/oder dritten Richtung, verbessern das Schwingverhalten des ersten Teils bzw. des zweiten Teils bei einer beschleunigten Bewegung des ersten Teils und/oder des zweiten Teils in der ersten Richtung und bei einer beschleunigten Bewegung des beweglichen Elements in einer zur ersten Richtung senkrechten zweiten und/oder dritten Richtung und ermöglicht eine höhere Genauigkeit einer Positionierung der Drehgelenk-Anordnung mittels Antrieben.

In einer Ausführungsform der Drehgelenk-Anordnung ist das erste Festkörpergelenk bzw. das zweite Festkörpergelenk derart ausgebildet, dass das erste Festkörpergelenk in einem undeformierten Zustand des ersten Festkörpergelenks symmetrisch zur ersten Ebene ausbildet ist, und/oder das zweite Festkörpergelenk in einem undeformierten Zustand des zweiten Festkörpergelenks symmetrisch zur zweiten Ebene ausgebildet ist.

Eine symmetrische Ausbildung des ersten Festkörpergelenks bzw. des zweiten Festkörpergelenks ermöglicht eine relativ einfache Herstellung und eine kompakte Anordnung des jeweiligen Festkörpergelenks mit einem geringen Platzbedarf.

Die Anordnung des ersten Festkörpergelenks und des zweiten Festkörpergelenks hat dabei den technischen Effekt, dass das zweite Teil mittels des ersten Festkörpergelenks und des zweiten Festkörpergelenks mit Bezug auf das erste Teil in einer Ruhelage gehalten ist, derart, dass das zweite Teil mittels einer Drehung relativ zum ersten Teil um die gemeinsame Schnittlinie der ersten Ebene und der zweiten Ebene aus der Ruhelage herausbewegbar ist. Das zweite Teil befindet sich dabei in der Ruhelage, wenn sich das erste Festkörpergelenk und das zweite Festkörpergelenk jeweils in einem undeformierten Zustand befinden, sodass jeder der Mittelabschnitte dieser Festkörpergelenke jeweils relativ zum ersten Endabschnitt und zum zweiten Endabschnitt des ersten Festkörpergelenks bzw. des zweiten Festkörpergelenks in einer stabilen Lage gehalten ist. Wird der zweite Teil mittels einer Drehung relativ zum ersten Teil aus der Ruhelage bewegt, werden die Stegteile des ersten Festkörpergelenks und des zweiten Festkörpergelenks elastisch deformiert, sodass das erste Festkörpergelenk und das zweite Festkörpergelenk gemeinsam eine auf das zweite Teil wirkende Rückstellkraft generieren, welche der Bewegung des zweiten Teils aus der Ruhelage entgegenwirkt.

Eine andere Ausführungsform der Drehgelenk-Anordnung ist derart ausgebildet, dass: der erste Endabschnitt des ersten länglichen Festkörpers des ersten Festkörpergelenks in der ersten Richtung eine Erstreckung aufweist, welche grösser ist als die Erstreckung des ersten Endabschnitts des ersten länglichen Festkörpers senkrecht zur ersten Ebene; und/oder der zweite Endabschnitt des ersten länglichen Festkörpers des ersten Festkörpergelenks in der ersten Richtung eine Erstreckung aufweist, welche grösser ist als die Erstreckung des zweiten Endabschnitts des ersten länglichen Festkörpers senkrecht zur ersten Ebene; und/oder der Mittelabschnitt des ersten länglichen Festkörpers des ersten Festkörpergelenks in der ersten Richtung eine Erstreckung aufweist, welche grösser ist als die Erstreckung des Mittelabschnitts des ersten länglichen Festkörpers senkrecht zur ersten Ebene; und/oder der erste Stegteil des ersten länglichen Festkörpers des ersten Festkörpergelenks in der ersten Richtung eine Erstreckung aufweist, welche grösser ist als die Erstreckung des ersten Stegteils des ersten länglichen Festkörpers senkrecht zur ersten Ebene; und/oder der zweite Stegteil des ersten länglichen Festkörpers des ersten Festkörpergelenks in der ersten Richtung eine Erstreckung aufweist, welche grösser ist als die Erstreckung des zweiten Stegteils des ersten länglichen Festkörpers senkrecht zur ersten Ebene; und/oder der erste Endabschnitt des zweiten länglichen Festkörpers des zweiten Festkörpergelenks in der ersten Richtung eine Erstreckung aufweist, welche grösser ist als die Erstreckung des ersten Endabschnitts des zweiten länglichen Festkörpers senkrecht zur zweiten Ebene; und/oder der zweite Endabschnitt des zweiten länglichen Festkörpers des zweiten Festkörpergelenks in der ersten Richtung eine Erstreckung aufweist, welche grösser ist als die Erstreckung des zweiten Endabschnitts des zweiten länglichen Festkörpers senkrecht zur zweiten Ebene; und/oder der Mittelabschnitt des zweiten länglichen Festkörpers des zweiten Festkörpergelenks in der ersten Richtung eine Erstreckung aufweist, welche grösser ist als die Erstreckung des Mittelabschnitts des zweiten länglichen Festkörpers senkrecht zur zweiten Ebene; und/oder der erste Stegteil des zweiten länglichen Festkörpers des zweiten Festkörpergelenks in der ersten Richtung eine Erstreckung aufweist, welche grösser ist als die Erstreckung des ersten Stegteils des zweiten länglichen Festkörpers senkrecht zur zweiten Ebene; und/oder der zweite Stegteil des zweiten länglichen Festkörpers des zweiten Festkörpergelenks in der ersten Richtung eine Erstreckung aufweist, welche grösser ist als die Erstreckung des zweiten Stegteils des zweiten länglichen Festkörpers senkrecht zur zweiten Ebene.

Wegen der vorstehend genannten Ausbildung des ersten Festkörpergelenks bzw. des zweiten Festkörpergelenks bildet die Kopplungseinrichtung eine Verbindung zwischen dem ersten Teil und dem zweiten Teil der Drehgelenk-Anordnung, welche eine relativ hohe Steifigkeit aufweist mit Bezug auf eine Translation des ersten Teils relativ zum zweiten Teil in der ersten Richtung (entsprechend der Drehachse der Drehgelenk-Anordnung) und mit Bezug auf eine Rotation des ersten Teils relativ zum zweiten Teil um eine Achse, welche senkrecht zur ersten Richtung gerichtet ist.

Eine andere Ausführungsform der Drehgelenk-Anordnung ist dadurch charakterisiert, dass das erste Festkörpergelenk in einem undeformierten Zustand des ersten Festkörpergelenks und das zweite Festkörpergelenk in einem undeformierten Zustand des zweiten Festkörpergelenks relativ zueinander derart angeordnet sind, dass das erste Festkörpergelenk und das zweite Festkörpergelenk symmetrisch bezüglich einer dritten Ebene angeordnet sind, welche sich parallel zur ersten Richtung erstreckt, wobei die gemeinsame Schnittlinie der ersten Ebene und der zweiten Ebene sich in der dritten Ebene erstreckt.

Bei dieser Anordnung des ersten Festkörpergelenks und des zweiten Festkörpergelenks bilden das erste Teil und das zweite Teil ein mittels der Kopplungseinrichtung gekoppeltes System, welches eine besonders grosse Steifigkeit in Bezug auf eine Translation des ersten Teils relativ zum zweiten Teil entlang einer Achse, welche sich parallel zur dritten Ebene und senkrecht zu ersten Richtung erstreckt, aufweist.

Weiterhin wird erreicht, dass bei einer Translation des ersten Teils relativ zum zweiten Teil entlang einer Achse, welche sich parallel zur dritten Ebene und senkrecht zu ersten Richtung erstreckt, das erste Festkörpergelenk und das zweite Festkörpergelenk jeweils auf dieselbe Weise mechanisch beansprucht und entsprechend deformiert werden. Dies verhindert, dass die Kopplungseinrichtung bei einer mechanischen Belastung, welche eine Translation des ersten Teils relativ zum zweiten Teil parallel zur dritten Ebene und senkrecht zu ersten Richtung induziert, eine Drehung der ersten Teils relativ zum zweiten Teil um die erste Richtung ermöglichen könnte, und ermöglich somit beispielsweise eine Stabilisierung der räumlichen Lage des ersten Teils relativ zum zweiten Teil bei einer dynamischen Belastung der Drehgelenk-Anordnung, welche eine Translation des ersten Teils relativ zum zweiten Teil der vorstehend genannten Art induziert.

Eine Ausführungsform der Drehgelenk-Anordnung ist derart ausgebildet, dass das erste Festkörpergelenk relativ zum zweiten Festkörpergelenk derart angeordnet ist, dass das erste Festkörpergelenk senkrecht zur ersten Richtung einen Abstand zum zweiten Festkörpergelenk aufweist. Dieser Abstand kann geeignet gewählt werden, um beispielsweise das erste Festkörpergelenk und das zweite Festkörpergelenk auf einfache Weise mit dem ersten Teil und dem zweiten Teil der Drehgelenk-Anordnung zu verbinden zu können (beispielsweise abhängig von der jeweiligen Form des ersten Teils bzw. des zweiten Teils) und ausserdem die räumliche Lage der Drehachse der Drehgelenk-Anordnung je nach Bedarf mit Bezug auf das erste Teil und das zweite Teil zu definieren.

Eine Ausführungsform der Drehgelenk-Anordnung ist derart ausgebildet, dass das zweite Teil einen ersten länglichen Hohlraum aufweist, welcher sich in der ersten Richtung entlang der ersten Ebene erstreckt, und das erste Festkörpergelenk im ersten länglichen Hohlraum derart angeordnet ist, dass sich das erste Festkörpergelenk in der ersten Richtung zumindest über einen Teil seiner Erstreckung in der ersten Richtung durch den ersten länglichen Hohlraum erstreckt. Entsprechend kann das zweite Teil einen zweiten länglichen Hohlraum aufweisen, welcher sich in der ersten Richtung entlang der zweiten Ebene erstreckt, wobei das zweite Festkörpergelenk im zweiten länglichen Hohlraum derart angeordnet ist, dass sich das zweite Festkörpergelenk in der ersten Richtung zumindest über einen Teil seiner Erstreckung in der ersten Richtung durch den zweiten länglichen Hohlraum erstreckt.

Diese Ausgestaltung des zweiten Teils bietet die Möglichkeit, das erste Festkörpergelenk und/oder das zweite Festkörpergelenk in das zweite Teil zu integrieren, sodass das erste Festkörpergelenk und/oder das zweite Festkörpergelenk nicht oder allenfalls nur um eine verhältnismässig geringe Distanz in der ersten Richtung aus dem jeweiligen Hohlraum herausragen. Auf diese Weise können der erste Teil und das zweite Teil über das erste Festkörpergelenk und/oder das zweite Festkörpergelenk derart miteinander verbunden werden, dass die Drehgelenk-Anordnung als Ganzes eine relativ geringe Bauhöhe in Richtung der Drehachse aufweist.

In einer Weiterentwicklung der vorstehend genannten Ausführungsform kann vorgesehen sein, dass sich der erste längliche Hohlraum entlang der ersten Ebene derart erstreckt, dass eine Längsachse des ersten länglichen Hohlraums parallel zur ersten Ebene und senkrecht zur ersten Richtung angeordnet ist und der erste längliche Hohlraum seitlich mit Bezug auf die erste Ebene durch zwei einander gegenüberliegende Seitenwände des zweiten Teils begrenzt ist, welche sich jeweils in der ersten Richtung parallel zur ersten Ebene erstrecken und relativ zueinander einen Abstand in einer Richtung senkrecht zur ersten Ebene aufweisen. Entsprechend kann vorgesehen sein, dass sich der zweite längliche Hohlraum entlang der zweiten Ebene derart erstreckt, dass eine Längsachse des zweiten länglichen Hohlraums parallel zur zweiten Ebene und senkrecht zur ersten Richtung angeordnet ist und der zweite längliche Hohlraum seitlich mit Bezug auf die zweite Ebene durch zwei einander gegenüberliegende Seitenwände des zweiten Teils begrenzt ist, welche sich jeweils in der ersten Richtung parallel zur zweiten Ebene erstrecken und relativ zueinander einen Abstand in einer Richtung senkrecht zur zweiten Ebene aufweisen. Der erste Hohlraum und der zweite Hohlraum sind jeweils auf einfache Weise herstellbar und ermöglichen eine einfache, platzsparende Integration des ersten Festkörpergelenks bzw. des zweiten Festkörpergelenks in das zweite Teil.

In einer weiteren Weiterentwicklung der vorstehend genannten Ausführungsform kann vorgesehen sein, dass die zwei einander gegenüberliegenden, den ersten länglichen Hohlraum seitlich mit Bezug auf die erste Ebene begrenzenden Seitenwände des zweiten Teils derart geformt sind, dass sie den ersten Endabschnitt und den zweiten Endabschnitt des ersten Festkörpergelenks umschliessen, sodass der erste Endabschnitt und der zweite Endabschnitt des ersten Festkörpergelenks formschlüssig mit dem zweiten Teil verbunden sind.

Die vorstehend genannte Form der Seitenwände des ersten länglichen Hohlraums ermöglicht es, auf einfache Weise eine starre Verbindung zwischen dem ersten Endabschnitt des ersten Festkörpergelenks und dem zweiten Teil und eine starre Verbindung zwischen dem zweiten Endabschnitt des ersten Festkörpergelenks und dem zweiten Teil zu realisieren. Die Seitenwände des ersten länglichen Hohlraums können beispielsweise derart geformt sein, dass der erste Endabschnitt des ersten Festkörpergelenks und der zweite Endabschnitt des ersten Festkörpergelenks jeweils über die gesamte Länge der Erstreckung des ersten Endabschnitts bzw. des zweiten Endabschnitts in Richtung der Drehachse der Drehgelenk-Anordnung zwischen den Seitenwänden des ersten länglichen Hohlraums formschlüssig gehalten sind. Auf diese Weise können der erste Endabschnitt und der zweite Endabschnitt des ersten Festkörpergelenks derart fest mit dem zweiten Teil verbunden sein, dass der erste Endabschnitt und der zweite Endabschnitt des ersten Festkörpergelenks bei einer Bewegung des ersten Teils relativ zum zweiten Teil nicht verformt werden können.

Die zwei einander gegenüberliegenden, den zweiten länglichen Hohlraum seitlich mit Bezug auf die zweite Ebene begrenzenden Seitenwände des zweiten Teils können derart geformt sein, dass sie den ersten Endabschnitt und den zweiten Endabschnitt des zweiten Festkörpergelenks umschliessen, sodass der erste Endabschnitt und der zweite Endabschnitt des zweiten Festkörpergelenks formschlüssig mit dem zweiten Teil verbunden sind.

Die vorstehend genannte Form der Seitenwände des zweiten länglichen Hohlraums ermöglicht es, auf einfache Weise eine starre Verbindung zwischen dem ersten Endabschnitt des zweiten Festkörpergelenks und dem zweiten Teil und eine starre Verbindung zwischen dem zweiten Endabschnitt des zweiten Festkörpergelenks und dem zweiten Teil zu realisieren. Die Seitenwände des zweiten länglichen Hohlraums können beispielsweise derart geformt sein, dass der erste Endabschnitt des zweiten Festkörpergelenks und der zweite Endabschnitt des zweiten Festkörpergelenks jeweils über die gesamte Länge der Erstreckung des ersten Endabschnitts bzw. des zweiten Endabschnitts in Richtung der Drehachse der Drehgelenk-Anordnung zwischen den Seitenwänden des zweiten länglichen Hohlraums formschlüssig gehalten sind. Auf diese Weise können der erste Endabschnitt und der zweite Endabschnitt des zweiten Festkörpergelenks derart fest mit dem zweiten Teil verbunden sein, dass der erste Endabschnitt und der zweite Endabschnitt des zweiten Festkörpergelenks bei einer Bewegung des ersten Teils relativ zum zweiten Teil nicht verformt werden können.

Die Drehgelenk-Anordnung kann ein oder mehrere Anschlagselemente umfassen, welche als mechanische Anschläge dienen, um eine Rotation des zweiten Teils relativ zum ersten Teil um die Drehachse zu limitieren. Zu diesem Zweck kann das zweite Teil beispielsweise mindestens ein Anschlagselement aufweisen, welches derart angeordnet ist, dass das Anschlagselement einen Abstand zum Mittelabschnitt des ersten Festkörpergelenks aufweist, wenn das zweite Teil relativ zum ersten Teil in der Ruhelage angeordnet ist, und welches Anschlagselement mittels einer Drehung des zweiten Teils um einen vorgegebenen maximalen Drehwinkel um die gemeinsame Schnittlinie der ersten Ebene und der zweiten Ebene in Kontakt mit dem Mittelabschnitt des ersten Festkörpergelenks bringbar ist, sodass der Mittelabschnitt des ersten Festkörpergelenks einen die Drehung des zweiten Teils limitierenden mechanischen Anschlag für das zweite Teil bildet. Alternativ oder zusätzlich kann das zweite Teil mindestens ein Anschlagselement aufweisen, welches derart angeordnet ist, dass das Anschlagselement einen Abstand zum Mittelabschnitt des zweiten Festkörpergelenks aufweist, wenn das zweite Teil relativ zum ersten Teil in der Ruhelage angeordnet ist, und welches Anschlagselement mittels einer Drehung des zweiten Teils um einen vorgegebenen maximalen Drehwinkel um die gemeinsame Schnittlinie der ersten Ebene und der zweiten Ebene in Kontakt mit dem Mittelabschnitt des zweiten Festkörpergelenks bringbar ist, sodass der Mittelabschnitt des zweiten Festkörpergelenks einen die Drehung des zweiten Teils limitierenden mechanischen Anschlag für das zweite Teil bildet. Auf diese Weise kann eine mechanische Überlastung des ersten Festkörpergelenks und des zweiten Festkörpergelenks vermieden werden.

In einer weiteren Weiterentwicklung der vorstehend genannten Ausführungsform kann vorgesehen sein, dass die zwei einander gegenüberliegenden, den ersten länglichen Hohlraum seitlich mit Bezug auf die erste Ebene begrenzenden Seitenwände des zweiten Teils derart geformt sind, dass sie den Mittelabschnitt des ersten Festkörpergelenks umschliessen, wobei die zwei einander gegenüberliegenden, den ersten länglichen Hohlraum seitlich mit Bezug auf die erste Ebene begrenzenden Seitenwände des zweiten Teils senkrecht zur erste Ebene einen Abstand aufweisen, welcher grösser ist als eine Erstreckung des Mittelabschnitts des ersten Festkörpergelenks senkrecht zur ersten Ebene, sodass der Mittelabschnitt des ersten Festkörpergelenks relativ zum zweiten Teil bewegbar ist.

Die vorstehende genannte Form der Seitenwände des ersten länglichen Hohlraums ermöglicht es, dass das erste Teil und das zweite Teil der Drehgelenk-Anordnung relativ zueinander um die Drehachse gedreht werden können, sofern der Mittelabschnitts des ersten Festkörpergelenks bei der Drehung des ersten Teils relativ zum zweiten Teil nicht an eine der zwei einander gegenüberliegenden, den ersten länglichen Hohlraum seitlich mit Bezug auf die erste Ebene begrenzenden Seitenwände des zweiten Teils stösst. Jeder der zwei einander gegenüberliegenden, den ersten länglichen Hohlraum seitlich mit Bezug auf die erste Ebene begrenzenden Seitenwände des zweiten Teils bilden somit einen mechanischen Anschlag für den Mittelabschnitt des ersten Festkörpergelenks und limitieren somit einen Drehwinkel, um welchen das erste Teil relativ zum zweiten Teil um die Drehachse der Drehgelenk-Anordnung gedreht werden kann. Zusätzlich oder alternativ kann vorgesehen sein, dass die zwei einander gegenüberliegenden, den zweiten länglichen Hohlraum seitlich mit Bezug auf die zweite Ebene begrenzenden Seitenwände des zweiten Teils derart geformt sind, dass sie den Mittelabschnitt des zweiten Festkörpergelenks umschliessen, wobei die zwei einander gegenüberliegenden, den zweiten länglichen Hohlraum seitlich mit Bezug auf die zweite Ebene begrenzenden Seitenwände des zweiten Teils senkrecht zur zweiten Ebene einen Abstand aufweisen, welcher grösser ist als eine Erstreckung des Mittelabschnitts des zweiten Festkörpergelenks senkrecht zur zweiten Ebene, sodass der Mittelabschnitt des zweiten Festkörpergelenks relativ zum zweiten Teil bewegbar ist.

Die vorstehende genannte Form der Seitenwände des ersten länglichen Hohlraums bzw. des zweiten länglichen Hohlraums ermöglichen es, dass das erste Teil und das zweite Teil der Drehgelenk-Anordnung relativ zueinander um die Drehachse gedreht werden können, sofern der Mittelabschnitt des zweiten Festkörpergelenks bei der Drehung des ersten Teils relativ zum zweiten Teil nicht an eine der zwei einander gegenüberliegenden, den zweiten länglichen Hohlraum seitlich mit Bezug auf die zweite Ebene begrenzenden Seitenwände des zweiten Teils stösst. Jeder der zwei einander gegenüberliegenden, den zweiten länglichen Hohlraum seitlich mit Bezug auf die zweite Ebene begrenzenden Seitenwände des zweiten Teils bilden somit einen mechanischen Anschlag für den Mittelabschnitt des zweiten Festkörpergelenks und limitieren somit einen Drehwinkel, um welchen das erste Teil relativ zum zweiten Teil um die Drehachse der Drehgelenk-Anordnung gedreht werden kann.

Eine Ausführungsform der Drehgelenk-Anordnung ist derart ausgebildet, dass der Mittelabschnitt des ersten Festkörpergelenks relativ zum zweiten Teil in einer translatorischen Bewegung senkrecht zur ersten Ebene bewegbar ist, und/oder der Mittelabschnitt des ersten Festkörpergelenks relativ zum zweiten Teil mittels einer Drehung um eine sich in der ersten Richtung erstreckende Drehachse bewegbar ist. Analog kann vorgesehen sein, dass der Mittelabschnitt des zweiten Festkörpergelenks relativ zum zweiten Teil in einer translatorischen Bewegung senkrecht zur zweiten Ebene bewegbar ist, und/oder der Mittelabschnitt des zweiten Festkörpergelenks relativ zum zweiten Teil mittels einer Drehung um eine sich in der ersten Richtung erstreckende Drehachse bewegbar ist. Dadurch, dass der Mittelabschnitt des ersten Festkörpergelenks und der Mittelabschnitt des zweiten Festkörpergelenks auf die vorstehend genannte Weise bewegbar sind, ist gewährleistet dass das erste Teil relativ zum zweiten Teil der Drehgelenk-Anordnung um die sich in der ersten Richtung erstreckende Drehachse der Drehgelenk-Anordnung drehbar ist.

Eine Ausführungsform der Drehgelenk-Anordnung ist derart ausgebildet, dass die erste Ebene und die zweite Ebene relativ zueinander derart geneigt sind, dass sich die erste Ebene und die zweite Ebene in der gemeinsamen Schnittlinie unter einem Winkel schneiden, welcher grösser oder gleich 10° und kleiner oder gleich 120° ist.

Bei dieser Ausführungsform ist gewährleitet, dass das aus dem ersten Teil, dem zweiten Teil, dem ersten Festkörpergelenk und dem zweiten Festkörpergelenk gebildete gekoppelte System mit Bezug auf eine Rotation des ersten Teils relativ zum zweiten Teil um die erste Richtung eine relativ geringe Steifigkeit aufweist und zudem mit Bezug auf eine Translation des ersten Teils relativ zum zweiten Teil entlang einer sich senkrecht zur ersten Richtung erstreckenden Achse oder mit Bezug auf eine Rotation des ersten Teils relativ zum zweiten Teil um eine sich senkrecht zur ersten Richtung erstreckende Achse eine relativ grosse Steifigkeit aufweist, welche für eine Vielzahl von Anwendungen hinreichend gross ist.

Dementsprechend hat das aus dem ersten Teil, dem zweiten Teil, dem ersten Festkörpergelenks und dem zweiten Festkörpergelenk gebildete gekoppelte System eine relativ geringe Eigenfrequenz hinsichtlich Schwingungen des gekoppelten Systems, welche auf einer Rotation des ersten Teils relativ zum zweiten Teil um die erste Richtung beruhen, und relativ hohe Eigenfrequenzen hinsichtlich Schwingungen des gekoppelten Systems, welche auf einer Translation des ersten Teils relativ zum zweiten Teil entlang einer sich senkrecht zur ersten Richtung erstreckenden Achse oder auf einer Rotation des ersten Teils relativ zum zweiten Teil um eine sich senkrecht zur ersten Richtung erstreckende Achse beruhen. Das ist vorteilhaft im Hinblick auf das Einschwingverhalten der Drehgelenk-Anordnung in dynamischen Anwendungen, in welchen die Drehgelenk-Anordnung als Ganzes mit einer grossen Beschleunigung bewegt werden muss.

Eine Ausführungsform kann derart ausgebildet seine, dass die erste Ebene und die zweite Ebene relativ zueinander derart geneigt sind, dass sich die erste Ebene und die zweite Ebene in der gemeinsamen Schnittlinie unter einem Winkel schneiden, welcher grösser oder gleich 30° und kleiner oder gleich 90° ist.

Bei dieser Ausführungsform ist gewährleitet, dass das aus dem ersten Teil, dem zweiten Teil, dem ersten Festkörpergelenk und dem zweiten Festkörpergelenk gebildete gekoppelte System mit Bezug auf eine Translation des ersten Teils relativ zum zweiten Teil entlang einer sich senkrecht zur ersten Richtung erstreckenden Achse oder mit Bezug auf eine Rotation des ersten Teils relativ zum zweiten Teil um eine sich senkrecht zur ersten Richtung erstreckende Achse eine besonders grosse Steifigkeit aufweist.

Die erfindungsgemässe Drehgelenk-Anordnung kann in vorteilhafter Weise als integraler Bestandteil einer Positioniervorrichtung zum Positionieren eines beweglichen Elements verwendet werden, beispielsweise derart, dass die Drehgelenk-Anordnung als Tragstruktur für das zu positionierende bewegliche Element dient.

Eine entsprechende Positioniervorrichtung kann beispielsweise eine erfindungsgemässe Drehgelenk-Anordnung und eine Linearführungsvorrichtung zum Führen des zweiten Teils der Drehgelenk-Anordnung aufweisen, wobei das zweite Teil der Drehgelenk-Anordnung mittels der Linearführungsvorrichtung derart geführt ist, dass das zweite Teil linear in einer zweiten Richtung bewegbar ist, welche sich senkrecht zur ersten Richtung erstreckt. Dadurch, dass das zweite Teil der Drehgelenk-Anordnung mittels der Linearführungsvorrichtung geführt ist, kann die Drehgelenk-Anordnung als Ganzes in der zweiten Richtung geführt bewegt werden, wobei die Konstruktion der Drehgelenk-Anordnung es ermöglicht, dass das erste Teil relativ zum zweiten Teil um die sich in der ersten Richtung erstreckende Drehachse drehbar ist.

Alternativ kann die Positioniervorrichtung eine erfindungsgemässe Drehgelenk-Anordnung und eine Linearführungsvorrichtung zum Führen des ersten Teils der Drehgelenk-Anordnung aufweisen, wobei das erste Teil der Drehgelenk-Anordnung mittels der Linearführungsvorrichtung derart geführt ist, dass das erste Teil linear in einer zweiten Richtung bewegbar ist, welche sich senkrecht zur ersten Richtung erstreckt.

Die Linearführungsvorrichtung kann mittels bekannter Technologien realisiert sein. Beispielsweise kann das zweite Teil mittels Wälzkörper an einer Führungsfläche oder Führungsschiene geführt sein, alternativ kann das zweite Teil mittels eines Gleitlagers oder Luftlagers an einer Führungsfläche geführt sein.

Eine Ausführungsform der Positioniervorrichtung ist derart ausgebildet, dass sie mit mindestens einem mit dem ersten Teil der Drehgelenk-Anordnung verbundenen Linearantrieb zum Bewegen des ersten Teils in der zweiten Richtung ausgestattet ist. Es können auch mehrere mit dem ersten Teil der Drehgelenk-Anordnung verbundene Linearantriebe zum Bewegen des ersten Teils vorhanden sein, welche räumlich verteilt angeordnet sein können und unabhängig voneinander steuerbar sein können. Als Linearantriebe der Positioniervorrichtung sind beispielsweise Linearmotoren geeignet. Die Positioniervorrichtung kann beispielsweise derart ausgebildet sein, dass jeder Linearantrieb ein Linearmotor ist. Linearantriebe anderer Bauart sind prinzipiell ebenfalls geeignet, beispielsweise Linearantriebe mit Gewindespindel oder Kugel- oder Rollengewindetrieb.

Eine Weiterentwicklung der vorstehend genannten Ausführungsform der Positioniervorrichtung umfasst eine Basis mit mindestens einer ebenen Führungsfläche und/oder einen Führungsbalken mit mindestens einer ebenen Führungsfläche, wobei das zweite Teil mittels mindestens einem Luftlager an der ebenen Führungsfläche der Basis und/oder an der ebenen Führungsfläche des Führungsbalkens geführt ist. Die Drehgelenk-Anordnung gewährleistet, dass das zweite Teil zusammen mit dem mindestens einen Luftlager relativ zum ersten Teil um die sich in der ersten Richtung erstreckende Drehachse drehbar ist. Auf diese Weise ist die räumliche Lage des Luftlagers relativ zum ersten Teil veränderbar, beispielsweise um Toleranzen hinsichtlich der Anordnung des ersten Teils relativ zur ebenen Führungsfläche bzw. zu dem Führungsbalken auszugleichen. Auf diese Weise kann vermieden werden, dass das Luftlager bei einer Bewegung der Drehgelenk-Anordnung in der zweiten Richtung mit der ebenen Führungsfläche bzw. mit dem Führungsbalken in Kontakt gerät und dabei beschädigt werden könnte.

Eine Ausführungsform der Positioniervorrichtung kann alternativ derart konzipiert sein, dass das erste Teil mittels der Linearführungsvorrichtung geführt ist und mindestens ein mit dem zweiten Teil der Drehgelenk-Anordnung verbundener Linearantrieb zum Bewegen des zweiten Teils in der zweiten Richtung vorhanden ist.

In einer Weiterentwicklung dieser Ausführungsform der Positioniervorrichtung kann die Linearführungsvorrichtung eine Basis mit mindestens einer ebenen Führungsfläche und/oder einen Führungsbalken mit mindestens einer ebenen Führungsfläche umfassen und das erste Teil mittels mindestens einem Luftlager an der ebenen Führungsfläche der Basis und/oder an der ebenen Führungsfläche des Führungsbalken geführt sein.

### Kurze Beschreibung der Zeichnungen

Weitere Einzelheiten der Erfindung und insbesondere beispielhafte Ausführungsformen der erfindungsgemässen Drehgelenk-Anordnung und der Positioniervorrichtung werden im Folgenden anhand der beigefügten Zeichnungen erläutert. Es zeigen:
- Fig. 1: eine perspektivische Ansicht einer erfindungsgemässen Drehgelenk-Anordnung, umfassend ein erstes Teil, ein zweites Teil und eine Kopplungseinrichtung zum Verbinden des ersten Teils und des zweiten Teils derart, dass das zweite Teil relativ zum ersten Teil um eine Drehachse DZ drehbar ist, wobei die Kopplungseinrichtung eine Anordnung von zwei Festkörpergelenken umfasst, in einer Explosionsdarstellung, in welcher die Einzelteile der Drehgelenk-Anordnung in Richtung der Drehachse DZ voneinander separiert sind;
- Fig. 2: die Drehgelenk-Anordnung gemäss Fig. 1, in einer Seitenansicht in einer sich senkrecht zur Drehachse DZ erstreckenden Richtung;
- Fig. 3: die Drehgelenk-Anordnung gemäss Fig. 1, in einer Draufsicht in einer sich entlang der Drehachse DZ erstreckenden Richtung;
- Fig. 4A: eine perspektivische Ansicht eines der zwei Festkörpergelenke gemäss Fig. 1;
- Fig. 4B: das Festkörpergelenk gemäss Fig. 4A, in einer Draufsicht in Richtung der Drehachse DZ;
- Fig. 4C: das Festkörpergelenk gemäss Fig. 4B, in einer Seitenansicht in einer Richtung senkrecht zu der in Fig. 4B dargestellten Symmetrie-Ebene ME1 bzw. ME2;
- Fig. 5A: das Festkörpergelenk gemäss Fig. 4A, in einer Draufsicht in Richtung der Dreh-Achse DZ, wobei sich das Festkörpergelenk in einem undeformierten Zustand befindet, mit einer Darstellung von zwei Bewegungsfreiheitsgraden eines Mittelabschnitts des Festkörpergelenks relativ zu einem ersten Endabschnitt und zu einem zweiten Endabschnitt des Festkörpergelenks;
- Fig. 5B: das Festkörpergelenk gemäss Fig. 5A, in einer Draufsicht in Richtung der Drehachse DZ, wobei sich das Festkörpergelenk in einem deformierten Zustand nach einer Bewegung des Mittelabschnitts des Festkörpergelenks relativ zu dem ersten Endabschnitt und zu dem zweiten Endabschnitt des Festkörpergelenks gemäss einem ersten Bewegungsfreiheitsgrad befindet;
- Fig. 5C: das Festkörpergelenk gemäss Fig. 5A, in einer Draufsicht in Richtung der Dreh-Achse DZ, wobei sich das Festkörpergelenk in einem deformierten Zustand nach einer Bewegung des Mittelabschnitts des Festkörpergelenks relativ zu dem ersten Endabschnitt und zu dem zweiten Endabschnitt des Festkörpergelenks gemäss einem zweiten Bewegungsfreiheitsgrad befindet;
- Fig. 6A: eine perspektivische Ansicht eines konventionellen Festkörpergelenks gemäss dem Stand der Technik;
- Fig. 6B: das konventionelle Festkörpergelenk gemäss Fig. 6A, in einer Draufsicht in Richtung einer Achse Z, in einem undeformierten Zustand;
- Fig. 6C: das konventionelle Festkörpergelenk gemäss Fig. 6A, in einer Draufsicht in Richtung einer Achse Z, in einem deformierten Zustand;
- Fig. 7: das zweite Teil der Drehgelenk-Anordnung gemäss Fig. 1, in einer Draufsicht in einer sich entlang der Drehachse DZ erstreckenden Richtung Z,;
- Fig. 8: das zweite Teil der Drehgelenk-Anordnung gemäss Fig. 1 in einer Draufsicht in einer sich entlang der Drehachse DZ erstreckenden Richtung Z, in einer vergrösserten Darstellung;
- Fig. 9: eine Positioniervorrichtung mit einer Drehgelenk-Anordnung gemäss Fig. 1 und einer Linearführungsvorrichtung zum Führen des zweiten Teils der Drehgelenk-Anordnung;
- Fig. 10: eine perspektivische Ansicht von Teilen der Positioniervorrichtung gemäss Fig. 9, in einer Explosionsdarstellung.

### Beschreibung von Ausführungsformen

Für dieselben Elemente in den Figuren sind jeweils dieselben Bezugszeichen verwendet, wenn nichts anderes erwähnt ist.

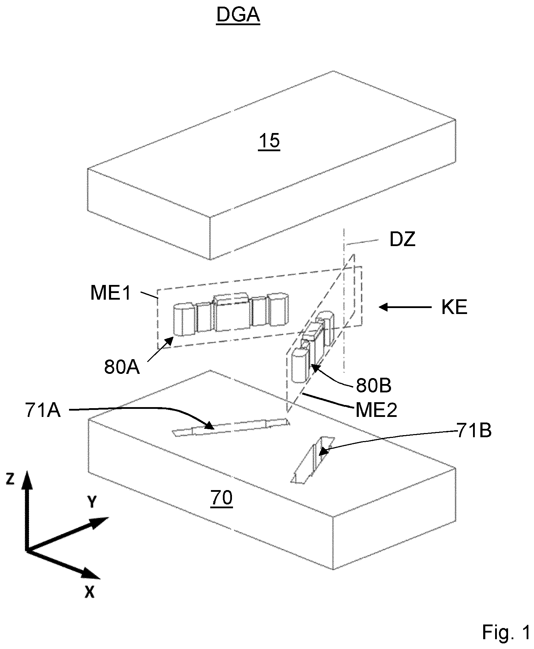

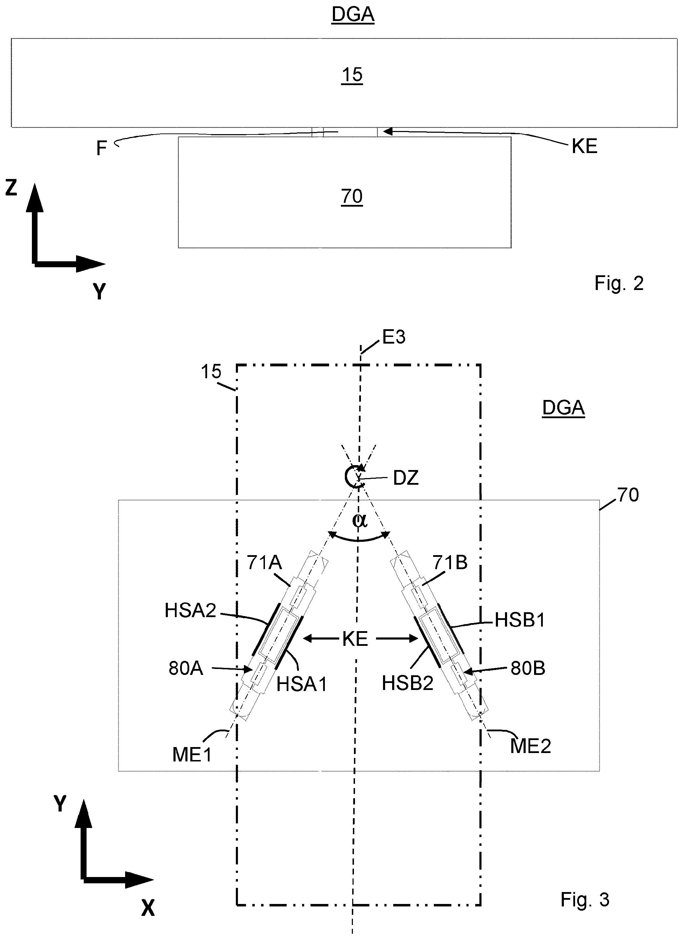

Die Fig. 1-3 zeigen eine erfindungsgemässe Drehgelenk-Anordnung DGA in verschiedenen Ansichten aus verschiedenen Perspektiven. Die Fig. 1 zeigt dabei die Drehgelenk-Anordnung DGA in einer perspektivischen Ansicht mit Bezug auf ein in der Fig. 1 dargestelltes Koordinatensystem mit den drei (relativ zueinander orthogonalen) Achsen X, Y, Z (X-Achse, Y-Achse, Z-Achse), die Fig. 2 und 3 zeigen dieselbe Drehgelenk-Anordnung DGA in Ansichten aus anderen Perspektiven, insbesondere in einer (Seiten-) Ansicht senkrecht zur Z-Achse (im vorliegenden Beispiel entlang der X-Achse) und in einer Draufsicht entlang der Z-Achse.

Die Drehgelenk-Anordnung DGA umfasst: ein erstes Teil 15, ein zweites Teil 70 und eine Kopplungseinrichtung KE zum Verbinden des ersten Teils 15 und des zweiten Teils 70 derart, dass das zweite Teil 70 relativ zum ersten Teil um eine sich in einer ersten Richtung Z erstreckende Drehachse DZ drehbar ist. Die Konstruktion und Funktion der Kopplungseinrichtung wird im Folgenden detaillierter erläutert.

Im vorliegenden Beispiel haben das erste Teil 15 und das zweite Teil 70 jeweils die Form eines Quaders. Alternativ können das erste Teil 15 und das zweite Teil 70 grundsätzlich jeweils Bauteile mit einer beliebigen Form sein.

Das erste Teil 15 und das zweite Teil 70 weisen jeweils eine Erstreckung senkrecht zur Drehachse DZ auf, wobei das zweite Teil 70 relativ zum ersten Teil 15 axial zur Drehachse DZ um eine Distanz versetzt angeordnet ist.

Die Kopplungseinrichtung KE weist im vorliegenden Beispiel ein erstes Festkörpergelenk 80A und ein zweites Festkörpergelenk 80B auf.

Die Fig. 1 zeigt die Drehgelenk-Anordnung DGA in einer Explosionsdarstellung, in welcher alle Einzelteile der Drehgelenk-Anordnung DGA - in diesem Falle das erste Teil 15, das zweite Teil 70 und die beiden Festkörpergelenke 80A und 80B der Kopplungseinrichtung KE - in Richtung der Z-Achse voneinander separiert sind. Hingegen zeigt die Fig. 2 die Drehgelenk-Anordnung DGA in einem zusammengesetzten Zustand, in welchem das erste Teil 15 und das zweite Teil 70 über die beiden Festkörpergelenke 80A und 80B der Kopplungseinrichtung KE miteinander verbunden sind, was im Folgenden näher erläutert wird.

Wie Fig. 1 und 3 andeuten, sind im zweiten Teil 70 an einer dem ersten Teil 15 zugewandten Seite ein erster länglicher Hohlraum 71A und ein zweiter länglicher Hohlraum 71B ausgebildet, welche dazu dienen, das erste Festkörpergelenk 80A und das zweite Festkörpergelenk 80B aufzunehmen, sodass sich (in einem zusammengesetzten Zustand der Drehgelenk-Anordnung DGA) zumindest ein Abschnitt des ersten Festkörpergelenks 80A im ersten länglichen Hohlraum 71A erstreckt und zumindest ein Abschnitt des zweiten Festkörpergelenks 80B im zweiten länglichen Hohlraum 71B erstreckt.

Wie aus Fig. 1-3 und 4A ersichtlich, besteht das erste Festkörpergelenk 80A aus einem ersten länglichen Festkörper, welcher sich entlang einer zur ersten Richtung Z parallelen ersten Ebene ME1 senkrecht zur ersten Richtung Z erstreckt und eine senkrecht zur ersten Richtung Z angeordnete Längsachse aufweist, wobei der erste längliche Festkörper folgende in Richtung der Längsachse des ersten länglichen Festkörpers hintereinander angeordnete Längsabschnitte aufweist:
- einen ersten Endabschnitt E1, welcher ein erstes Ende des ersten länglichen Festkörpers bildet;
- einen zweiten Endabschnitt E2, welcher ein dem ersten Ende des ersten länglichen Festkörpers in Richtung der Längsachse des ersten länglichen Festkörpers gegenüberliegendes zweites Ende des ersten länglichen Festkörpers bildet;
- einen zwischen dem ersten Endabschnitt und dem zweiten Endabschnitt des ersten länglichen Festkörpers angeordneten Mittelabschnitt F;
- einen zwischen dem ersten Endabschnitt E1 und dem Mittelabschnitt F des ersten länglichen Festkörpers angeordneten, mit dem ersten Endabschnitt E1 und dem Mittelabschnitt F verbundenen ersten Stegteil S1;
- einen zwischen dem zweiten Endabschnitt E2 und dem Mittelabschnitt F angeordneten, mit dem zweiten Endabschnitt E2 und dem Mittelabschnitt F des ersten länglichen Festkörpers verbundenen zweiten Stegteil S2.

Entsprechend besteht das zweite Festkörpergelenk 80B aus einem zweiten länglichen Festkörper, welcher sich entlang einer zur ersten Richtung Z parallelen zweiten Ebene ME2 senkrecht zur ersten Richtung Z erstreckt und eine senkrecht zur ersten Richtung Z angeordnete Längsachse aufweist, wobei der zweite längliche Festkörper folgende in Richtung der Längsachse des zweiten länglichen Festkörpers hintereinander angeordnete Längsabschnitte aufweist(Fig. 1-3 und 4A):
- einen ersten Endabschnitt E1, welcher ein erstes Ende des zweiten länglichen Festkörpers bildet;
- einen zweiten Endabschnitt E2, welcher ein dem ersten Ende des zweiten länglichen Festkörpers in Richtung der Längsachse des zweiten länglichen Festkörpers gegenüberliegendes zweites Ende des zweiten länglichen Festkörpers bildet;
- einen zwischen dem ersten Endabschnitt und dem zweiten Endabschnitt des zweiten länglichen Festkörpers angeordneten Mittelabschnitt F;
- einen zwischen dem ersten Endabschnitt E1 und dem Mittelabschnitt F des zweiten länglichen Festkörpers angeordneten, mit dem ersten Endabschnitt E1 und dem Mittelabschnitt verbundenen ersten Stegteil S1;
- einen zwischen dem zweiten Endabschnitt E2 und dem Mittelabschnitt F des zweiten länglichen Festkörpers angeordneten, mit dem zweiten Endabschnitt E2 und dem Mittelabschnitt F des zweiten länglichen Festkörpers verbundenen zweiten Stegteil S2.

Das zweite Teil 70 ist mit dem ersten Teil 15 über das erste Festkörpergelenk 80A und das zweite Festkörpergelenk 80B derart verbunden, dass der erste Endabschnitt E1 des ersten länglichen Festkörpers und der zweite Endabschnitt E2 des ersten länglichen Festkörpers starr mit dem zweiten Teil 70 und der Mittelabschnitt F des ersten länglichen Festkörpers starr mit dem ersten Teil 15 verbunden sind und dass der erste Endabschnitt E1 des zweiten länglichen Festkörpers und der zweite Endabschnitt E2 des zweiten länglichen Festkörpers starr mit dem zweiten Teil 70 und der Mittelabschnitt F des zweiten länglichen Festkörpers starr mit dem ersten Teil 15 verbunden sind.

Die erste Ebene ME1 und die zweite Ebene ME2 sind relativ zueinander derart geneigt, dass die erste Ebene ME1 und die zweite Ebene ME2 eine sich parallel zur ersten Richtung (Z) erstreckende gemeinsame Schnittlinie DZ bilden (Fig. 1, 3).

Der erste Stegteil S1 und der zweite Stegteil S2 des ersten länglichen Festkörpers des ersten Festkörpergelenks 80A weisen senkrecht zur ersten Ebene ME1 jeweils eine Erstreckung auf, welche geringer ist als eine Erstreckung des ersten Endabschnitt E1 des ersten länglichen Festkörpers senkrecht zur ersten Ebene ME1, eine Erstreckung des zweiten Endabschnitts E2 des ersten länglichen Festkörpers senkrecht zur ersten Ebene ME1 und eine Erstreckung des Mittelabschnitts F des ersten länglichen Festkörpers senkrecht zur ersten Ebene ME1, sodass der erste Stegteil S1 und der zweite Stegteil S2 des ersten länglichen Festkörpers elastisch deformierbar sind und der Mittelabschnitt F des ersten Festkörpergelenks 80A relativ zum ersten Endabschnitt E1 des ersten Festkörpergelenks 80A und zum zweiten Endabschnitt E2 des ersten Festkörpergelenks 80A bewegbar ist.

Entsprechend weisen der erste Stegteil S1 und der zweite Stegteil S2 des zweiten länglichen Festkörpers des zweiten Festkörpergelenks 80B senkrecht zur zweiten Ebene ME2 jeweils eine Erstreckung auf, welche geringer ist als eine Erstreckung des ersten Endabschnitt E1 des zweiten länglichen Festkörpers senkrecht zur zweiten Ebene ME2, eine Erstreckung des zweiten Endabschnitts E2 des zweiten länglichen Festkörpers senkrecht zur zweiten Ebene ME2 und eine Erstreckung des Mittelabschnitts F des zweiten länglichen Festkörpers senkrecht zur zweiten Ebene ME2, sodass der erste Stegteil S1 und der zweite Stegteil S2 des zweiten länglichen Festkörpers elastisch deformierbar sind und der Mittelabschnitt F des zweiten Festkörpergelenks 80B relativ zum ersten Endabschnitt E1 des zweiten Festkörpergelenks 80B und zum zweiten Endabschnitt E2 des zweiten Festkörpergelenks 80B bewegbar ist.

Die Anordnung des ersten Festkörpergelenks 80A und des zweiten Festkörpergelenks 80B haben hierbei den Effekt, dass das zweite Teil 70 mittels des ersten Festkörpergelenks 80A und des zweiten Festkörpergelenks 80B an dem ersten Teil 15 um die gemeinsame Schnittlinie DZ der ersten Ebene ME1 und der zweiten Ebene ME2 drehbar gelagert ist.

Im vorliegenden Beispiel ist die Drehgelenk-Anordnung DGA derart ausgebildet, dass das erste Festkörpergelenk 80A in einem undeformierten Zustand des ersten Festkörpergelenks 80A symmetrisch zur ersten Ebene ME1 ausbildet ist und das zweite Festkörpergelenk 80B in einem undeformierten Zustand des zweiten Festkörpergelenks 80B symmetrisch zur zweiten Ebene ME2 ausgebildet ist (Fig. 1, 3 und 4B).

Im vorliegenden Beispiel sind das erste Festkörpergelenk 80A und das zweite Festkörpergelenk 80B identisch ausgebildet.

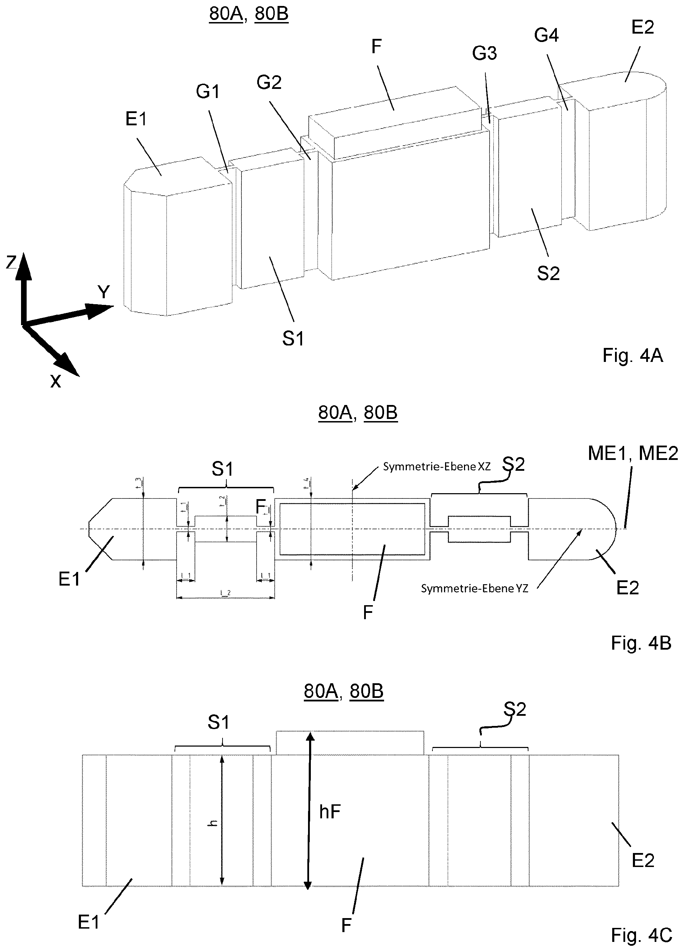

Im vorliegenden Beispiel ist die Drehgelenk-Anordnung (DGA) ausserdem derart ausgebildet, dass (Fig. 1, 4A, 4B, 4C):
- der erste Endabschnitt E1 des ersten länglichen Festkörpers des ersten Festkörpergelenks 80A in der ersten Richtung Z eine Erstreckung h aufweist, welche grösser ist als die Erstreckung t_3 des ersten Endabschnitts E1 des ersten länglichen Festkörpers senkrecht zur ersten Ebene ME1;
- der zweite Endabschnitt E2 des ersten länglichen Festkörpers des ersten Festkörpergelenks 80A in der ersten Richtung Z eine Erstreckung h aufweist, welche grösser ist als die Erstreckung t_3 des zweiten Endabschnitts E2 des ersten länglichen Festkörpers senkrecht zur ersten Ebene ME1;
- der Mittelabschnitt F des ersten länglichen Festkörpers des ersten Festkörpergelenks 80A in der ersten Richtung Z eine Erstreckung hF aufweist, welche grösser ist als die Erstreckung t_4 des Mittelabschnitts F des ersten länglichen Festkörpers senkrecht zur ersten Ebene ME1;
- der erste Stegteil S1 des ersten länglichen Festkörpers des ersten Festkörpergelenks 80A in der ersten Richtung Z eine Erstreckung h aufweist, welche grösser ist als die Erstreckung t_2 des ersten Stegteils S1 des ersten länglichen Festkörpers senkrecht zur ersten Ebene ME1;
- der zweite Stegteil S2 des ersten länglichen Festkörpers des ersten Festkörpergelenks 80A in der ersten Richtung Z eine Erstreckung h aufweist, welche grösser ist als die Erstreckung des zweiten Stegteils S2 des ersten länglichen Festkörpers senkrecht zur ersten Ebene ME1;
- der erste Endabschnitt E1 des zweiten länglichen Festkörpers des zweiten Festkörpergelenks 80B in der ersten Richtung Z eine Erstreckung h aufweist, welche grösser ist als die Erstreckung t_3 des ersten Endabschnitts E1 des zweiten länglichen Festkörpers senkrecht zur zweiten Ebene ME2;
- der zweite Endabschnitt E2 des zweiten länglichen Festkörpers des zweiten Festkörpergelenks 80B in der ersten Richtung Z eine Erstreckung h aufweist, welche grösser ist als die Erstreckung t_3 des zweiten Endabschnitts E2 des zweiten länglichen Festkörpers senkrecht zur zweiten Ebene ME2;
- der Mittelabschnitt F des zweiten länglichen Festkörpers des zweiten Festkörpergelenks 80B in der ersten Richtung Z eine Erstreckung hF aufweist, welche grösser ist als die Erstreckung t_4 des Mittelabschnitts F des zweiten länglichen Festkörpers senkrecht zur zweiten Ebene ME2;
- der erste Stegteil S1 des zweiten länglichen Festkörpers des zweiten Festkörpergelenks 80B in der ersten Richtung Z eine Erstreckung h aufweist, welche grösser ist als die Erstreckung t_2 des ersten Stegteils S1 des zweiten länglichen Festkörpers senkrecht zur zweiten Ebene ME2;
- der zweite Stegteil S2 des zweiten länglichen Festkörpers des zweiten Festkörpergelenks 80B in der ersten Richtung Z eine Erstreckung h aufweist, welche grösser ist als die Erstreckung t_2 des zweiten Stegteils S2 des zweiten länglichen Festkörpers senkrecht zur zweiten Ebene ME2.

Wie Fig. 1, 4A und 4B andeuten, müssen der erste Stegteil S1 des ersten Festkörpergelenks 80A bzw. erste Stegteil S1 des zweiten Festkörpergelenks 80B nicht derart ausgebildet sein, dass die Erstreckung des ersten Stegteils S1 des ersten Festkörpergelenks 80A senkrecht zur ersten Ebene ME1 und die Erstreckung des ersten Stegteils S1 des zweiten Festkörpergelenks 80B senkrecht zur zweiten Ebene ME2 jeweils konstant sind über die gesamte Erstreckung l_2 des ersten Stegteils S1 zwischen dem ersten Endabschnitt E1 und dem Mittelabschnitt F entlang der Längsachse des ersten Festkörpergelenks 80A bzw. entlang der Längsachse des zweiten Festkörpergelenks 80B.

Entsprechend müssen der zweite Stegteil S2 des ersten Festkörpergelenks 80A bzw. zweite Stegteil S2 des zweiten Festkörpergelenks 80B nicht derart ausgebildet sein, dass die Erstreckung des zweiten Stegteils S2 des ersten Festkörpergelenks 80A senkrecht zur ersten Ebene ME1 und die Erstreckung des zweiten Stegteils S2 des zweiten Festkörpergelenks 80B senkrecht zur zweiten Ebene ME2 jeweils konstant sind über die gesamte Erstreckung l_2 des zweiten Stegteils S2 zwischen dem zweiten Endabschnitt E2 und dem Mittelabschnitt F entlang der Längsachse des ersten Festkörpergelenks 80A bzw. entlang der Längsachse des zweiten Festkörpergelenks 80B.

Wie Fig. 4A und 4B andeuten, weist im vorliegenden Beispiel der erste Stegteil S1 des ersten Festkörpergelenks 80A eine variable Erstreckung senkrecht zur ersten Ebene ME1 und der erste Stegteil S1 des zweiten Festkörpergelenks 80B eine variable Erstreckung senkrecht zur zweiten Ebene ME2 auf.

Im vorliegenden Beispiel weist der erste Stegteil S1 des ersten Festkörpergelenks 80A bzw. der erste Stegteil S1 des zweiten Festkörpergelenks 80B insbesondere drei in der Längsrichtung des Festkörpergelenks hintereinander angeordnete Längsabschnitte auf: einen an den ersten Endabschnitt E1 grenzenden ersten dünnen Längsabschnitt G1, einen an den Mittelabschnitt F angrenzenden zweiten dünnen Längsabschnitt G2 und einen den ersten dünnen Längsabschnitt G1 und den zweiten dünnen Längsabschnitt G2 verbindenden mittleren Längsabschnitt.

Der erste dünne Längsabschnitt G1 und der zweite dünne Längsabschnitt G2 weisen dabei entlang der Längsachse des ersten Festkörpergelenks 80A bzw. entlang der Längsachse des zweiten Festkörpergelenks 80B eine Erstreckung l_1 auf.

Im vorliegenden Beispiel weisen der erste dünne Längsabschnitt G1 und der zweite dünne Längsabschnitt G2 des ersten Festkörpergelenks 80A bzw. des zweiten Festkörpergelenks 80B senkrecht zur erste Ebene ME1 bzw. senkrecht zur zweiten Ebene ME2 jeweils eine Erstreckung t_1 auf, welche geringer ist als die Erstreckung t_2 des den ersten dünnen Längsabschnitt G1 und den zweiten dünnen Längsabschnitt G2 verbindenden mittleren Längsabschnitts senkrecht zur erste Ebene ME1 bzw. senkrecht zur zweiten Ebene ME2.

Entsprechend weist im vorliegenden Beispiel der zweite Stegteil S2 des ersten Festkörpergelenks 80A bzw. der zweite Stegteil S2 des zweiten Festkörpergelenks 80B insbesondere drei in der Längsrichtung des Festkörpergelenks hintereinander angeordnete Längsabschnitte auf: einen an den zweiten Endabschnitt E2 grenzenden vierten dünnen Längsabschnitt G4, einen an den Mittelabschnitt F angrenzenden dritten dünnen Längsabschnitt G3 und einen den dritten dünnen Längsabschnitt G3 und den vierten dünnen Längsabschnitt G4 verbindenden mittleren Längsabschnitt.

Der dritte dünne Längsabschnitt G3 und der vierte dünne Längsabschnitt G4 weisen dabei entlang der Längsachse des ersten Festkörpergelenks 80A bzw. entlang der Längsachse des zweiten Festkörpergelenks 80B eine Erstreckung l_1 auf.

Im vorliegenden Beispiel weisen der dritte dünne Längsabschnitt G3 und der vierte dünne Längsabschnitt G4 des ersten Festkörpergelenks 80A bzw. des zweiten Festkörpergelenks 80B senkrecht zur erste Ebene ME1 bzw. senkrecht zur zweiten Ebene ME2 jeweils eine Erstreckung t_1 auf, welche geringer ist als die Erstreckung t_2 des den dritten dünnen Längsabschnitt G3 und den vierten dünnen Längsabschnitt G4 verbindenden mittleren Längsabschnitts senkrecht zur erste Ebene ME1 bzw. senkrecht zur zweiten Ebene ME2.

Wie aus Fig. 3 ersichtlich, ist im vorliegenden Beispiel die Drehgelenk-Anordnung DGA derart ausgebildet, dass das erste Festkörpergelenk 80A in einem undeformierten Zustand des ersten Festkörpergelenks 80A und das zweite Festkörpergelenk 80B in einem undeformierten Zustand des zweiten Festkörpergelenks 80B relativ zueinander derart angeordnet sind, dass das erste Festkörpergelenk 80A und das zweite Festkörpergelenk 80B symmetrisch bezüglich einer dritten Ebene E3 angeordnet sind, welche sich parallel zur ersten Richtung Z erstreckt, wobei die gemeinsame Schnittlinie DZ der ersten Ebene ME1 und der zweiten Ebene ME2 sich in der dritten Ebene E3 erstreckt. Dadurch wird erreicht, dass bei einer Translation des ersten Teils 15 relativ zum zweiten Teil 70 entlang einer Achse, welche sich parallel zur dritten Ebene E3 und senkrecht zu ersten Richtung Z erstreckt, das erste Festkörpergelenk 80A und das zweite Festkörpergelenk 80B jeweils auf dieselbe Weise mechanisch beansprucht und entsprechend deformiert werden.

Im vorliegenden Beispiel ist die Drehgelenk-Anordnung DGA derart ausgebildet, dass das erste Festkörpergelenk 80A relativ zum zweiten Festkörpergelenk 80B derart angeordnet ist, dass das erste Festkörpergelenk 80A senkrecht zur ersten Richtung Z einen Abstand zum zweiten Festkörpergelenk 80B aufweist (Fig. 3). Wie aus Fig. 3 ersichtlich, sind das erste Festkörpergelenk 80A und das zweite Festkörpergelenk 80B symmetrisch zur dritten Ebene E3 angeordnet und dabei senkrecht zur dritten Ebene E3 in Richtung der X-Achse um eine Distanz relativ zueinander versetzt. Diese Anordnung des ersten Festkörpergelenks 80A und des zweiten Festkörpergelenks 80B hat den Effekt, dass die Drehgelenk-Anordnung DGA eine relativ grosse Steifigkeit aufweist hinsichtlich einer Rotation des zweiten Teils 70 relativ zum ersten Teil 15 um die Y-Achse, wobei diese Steifigkeit umso grösser ist, je grösser der Abstand des ersten Festkörpergelenks 80A und des zweiten Festkörpergelenks 80B in Richtung der X-Achse ist.

Wie aus Fig. 1 und Fig. 3 ersichtlich, kann die Drehgelenk-Anordnung DGA derart ausgebildet sein, dass das zweite Teil 70 einen ersten länglichen Hohlraum 71A aufweist, welcher sich in der ersten Richtung Z entlang der ersten Ebene ME1 erstreckt, wobei das erste Festkörpergelenk 80A im ersten länglichen Hohlraum 71A derart angeordnet ist, dass sich das erste Festkörpergelenk 80A in der ersten Richtung Z zumindest über einen Teil seiner Erstreckung in der ersten Richtung Z durch den ersten länglichen Hohlraum 71A erstreckt.

Entsprechend kann das zweite Teil 70 einen zweiten länglichen Hohlraum 71B aufweisen, welcher sich in der ersten Richtung Z entlang der zweiten Ebene ME2 erstreckt, wobei das zweite Festkörpergelenk 80B im zweiten länglichen Hohlraum 71B derart angeordnet ist, dass sich das zweite Festkörpergelenk 80B in der ersten Richtung Z zumindest über einen Teil seiner Erstreckung in der ersten Richtung Z durch den zweiten länglichen Hohlraum 71B erstreckt.

Im vorliegenden Beispiel ist der erste längliche Hohlraum 71A derart dimensioniert, dass sich zumindest der erste Endabschnitt E1 und der zweite Endabschnitt E2 des ersten Festkörpergelenks 80A über ihre gesamte Erstreckung h in der ersten Richtung Z durch den ersten länglichen Hohlraum 71A erstrecken. Entsprechend ist der zweite längliche Hohlraum 71B derart dimensioniert, dass sich der erste Endabschnitt E1 und der zweite Endabschnitt E2 des zweiten Festkörpergelenks 80B über ihre gesamte Erstreckung h in der ersten Richtung Z durch den zweiten länglichen Hohlraum 71B erstrecken. In diesem Fall ist das erste Festkörpergelenk 80A im Wesentlichen vollständig im ersten länglichen Hohlraum 71A und das zweite Festkörpergelenk 80B vollständig im zweiten länglichen Hohlraum 71B eingebettet, sodass diese Ausführungsform der Drehgelenk-Anordnung DGA besonders kompakt ausgebildet ist.

Wie Fig. 2, 4A und 4C andeuten, ist im vorliegenden Beispiel die Erstreckung hF des jeweiligen Mittelabschnitts F des ersten Festkörpergelenks 80A und zweiten Festkörpergelenks 80B in der ersten Richtung grösser als die Erstreckung h des ersten Endabschnitts E1 und des zweiten Endabschnitts E2.

Der Mittelabschnitt F des ersten Festkörpergelenks 80A und der Mittelabschnitt F des zweiten Festkörpergelenks 80B können in diesem Fall in der ersten Richtung Z auf der dem ersten Teil 15 zugewandten Seite aus dem ersten länglichen Hohlraum 71A bzw. dem zweiten länglichen Hohlraum 71B um eine Distanz hinausragen. Dies ist vorteilhaft, um den Mittelabschnitt F des ersten Festkörpergelenks 80A und den Mittelabschnitt F des zweiten Festkörpergelenks 80B an einer dem zweiten Teil 70 zugewandten Seite des ersten Teils 15 mit Befestigungsmitteln befestigen zu können, so dass die jeweiligen Mittelabschnitte F des ersten Festkörpergelenks 80A und des zweiten Festkörpergelenks 80B starr mit dem ersten Teil 15 verbunden sind.

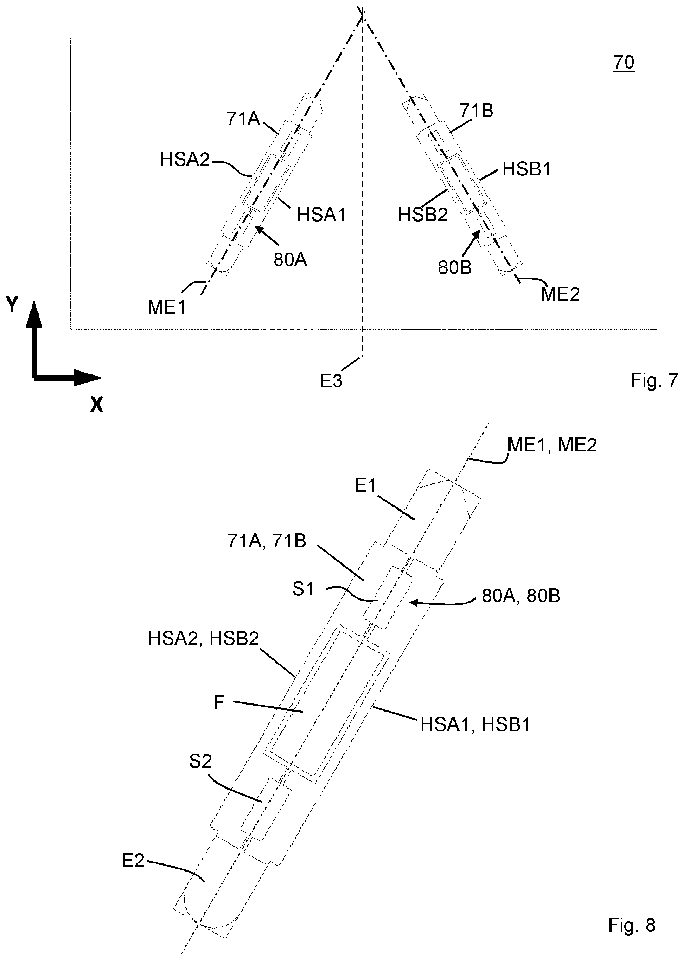

Wie aus Fig. 3, 7 und 8 ersichtlich, ist im vorliegenden Beispiel die Drehgelenk-Anordnung DGA derart ausgebildet, dass sich der erste längliche Hohlraum 71A entlang der ersten Ebene ME1 derart erstreckt, dass eine Längsachse des ersten länglichen Hohlraums 71A parallel zur ersten Ebene ME1 und senkrecht zur ersten Richtung Z angeordnet ist und der längliche Hohlraum 71A seitlich mit Bezug auf die erste Ebene ME1 durch zwei einander gegenüberliegende Seitenwände HSA1 bzw. HSA2 des zweiten Teils 70 begrenzt ist, welche sich jeweils in der ersten Richtung Z parallel zur ersten Ebene ME1 erstrecken und relativ zueinander einen Abstand in einer Richtung senkrecht zur ersten Ebene ME1 aufweisen.

Entsprechend ist die Drehgelenk-Anordnung DGA derart ausgebildet, dass sich der zweite längliche Hohlraum 71B entlang der zweiten Ebene ME2 derart erstreckt, dass eine Längsachse des zweiten länglichen Hohlraums 71B parallel zur zweiten Ebene ME2 und senkrecht zur ersten Richtung Z angeordnet ist und der zweite längliche Hohlraum 71B seitlich mit Bezug auf die zweite Ebene ME2 durch zwei einander gegenüberliegende Seitenwände HSB1 bzw. HSB2 des zweiten Teils 70 begrenzt ist, welche sich jeweils in der ersten Richtung Z parallel zur zweiten Ebene ME2 erstrecken und relativ zueinander einen Abstand in einer Richtung senkrecht zur zweiten Ebene ME2 aufweisen.

Wie aus Fig. 3, 7 und 8 ersichtlich, sind im vorliegenden Beispiel die zwei einander gegenüberliegenden, den ersten länglichen Hohlraum 71A seitlich mit Bezug auf die erste Ebene ME1 begrenzenden Seitenwände HSA1, HSA2 des zweiten Teils 70 derart geformt, dass sie den ersten Endabschnitt E1 und den zweiten Endabschnitt E2 des ersten Festkörpergelenks 80A umschliessen, sodass der erste Endabschnitt E1 und der zweite Endabschnitt E2 des ersten Festkörpergelenks 80A formschlüssig mit dem zweiten Teil 70 verbunden sind. Auf diese Weise ist gewährleistet, dass der erste Endabschnitt E1 und der zweite Endabschnitt E2 des ersten Festkörpergelenks 80A starr am zweiten Teil 70 gehalten sind.

Entsprechend können die zwei einander gegenüberliegenden, den zweiten länglichen Hohlraum 71B seitlich mit Bezug auf die zweite Ebene ME2 begrenzenden Seitenwände HSB1, HSB2 des zweiten Teils 70 derart geformt sind, dass sie den ersten Endabschnitt E1 und den zweiten Endabschnitt E2 des zweiten Festkörpergelenks 80B umschliessen, sodass der erste Endabschnitt E1 und der zweite Endabschnitt E2 des zweiten Festkörpergelenks 80B formschlüssig mit dem zweiten Teil 70 verbunden sind. Auf diese Weise ist gewährleistet, dass der erste Endabschnitt E1 und der zweite Endabschnitt E2 des zweiten Festkörpergelenks 80B starr am zweiten Teil 70 gehalten sind.

Der erste Endabschnitt E1 und der zweite Endabschnitt E2 des ersten Festkörpergelenks 80A und des zweiten Festkörpergelenks 80B können am zweiten Teil 70 befestigt werden (mit konventionellen, für eine derartige Verbindung geeigneten Befestigungsmitteln, z.B. mit Schrauben und/oder mittels Kleben).

Wie aus Fig. 3, 7 und 8 ersichtlich, sind im vorliegenden Beispiel die zwei einander gegenüberliegenden, den ersten länglichen Hohlraum 71A seitlich mit Bezug auf die erste Ebene ME1 begrenzenden Seitenwände HSA1, HSA2 des zweiten Teils 70 derart geformt, dass sie den Mittelabschnitt F des ersten Festkörpergelenks 80A umschliessen, wobei die zwei Seitenwände HSA1, HSA2 des zweiten Teils 70 senkrecht zur erste Ebene ME1 einen Abstand aufweisen, welcher grösser ist als eine Erstreckung t_4 des Mittelabschnitts F des ersten Festkörpergelenks 80A senkrecht zur ersten Ebene ME1. Auf diese Weise ist gewährleistet, dass der Mittelabschnitt F des ersten Festkörpergelenks 80A relativ zum zweiten Teil 70 bewegbar ist, wenn der erste Teil 15 relativ zum zweiten Teil 70 bewegt werden soll.

Entsprechend sind die zwei einander gegenüberliegenden, den zweiten länglichen Hohlraum 71B seitlich mit Bezug auf die zweite Ebene ME2 begrenzenden Seitenwände HSB1, HSB2 des zweiten Teils 70 derart geformt, dass sie den Mittelabschnitt F des zweiten Festkörpergelenks 80B umschliessen, wobei die zwei Seitenwände HSB1, HSB2 des zweiten Teils 70 senkrecht zur zweiten Ebene ME2 einen Abstand aufweisen, welcher grösser ist als eine Erstreckung t_4 des Mittelabschnitts F des zweiten Festkörpergelenks 80B senkrecht zur zweiten Ebene ME2. Auf diese Weise ist gewährleistet, dass der Mittelabschnitt F des zweiten Festkörpergelenks 80B relativ zum zweiten Teil 70 bewegbar ist, wenn der erste Teil 15 relativ zum zweiten Teil 70 bewegt werden soll.

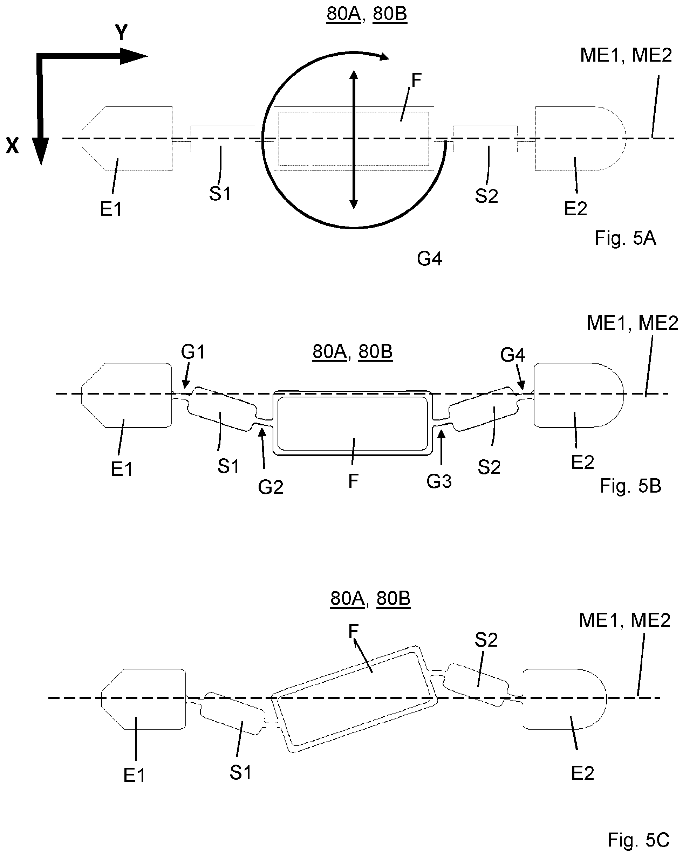

Wie Fig. 3, 5A-5C, 7 und 8 andeuten, sind im vorliegenden Beispiel das erste Festkörpergelenk 80A und das zweite Festkörpergelenk 80B der Drehgelenk-Anordnung DGA derart angeordnet, dass:
- der Mittelabschnitt F des ersten Festkörpergelenks 80A relativ zum zweiten Teil 70 in einer translatorischen Bewegung senkrecht zur ersten Ebene ME1 bewegbar ist (Fig. 5B);
- der Mittelabschnitt F des ersten Festkörpergelenks 80A relativ zum zweiten Teil 70 mittels einer Drehung um eine sich in der ersten Richtung Z erstreckende Drehachse bewegbar ist (Fig. 5C);
- der Mittelabschnitt F des zweiten Festkörpergelenks 80B relativ zum zweiten Teil 70 in einer translatorischen Bewegung senkrecht zur zweiten Ebene ME2 bewegbar ist (Fig. 5B);
- der Mittelabschnitt F des zweiten Festkörpergelenks 80A relativ zum zweiten Teil 70 mittels einer Drehung um eine sich in der ersten Richtung Z erstreckende Drehachse bewegbar ist (Fig. 5C).

Die Drehgelenk-Anordnung DGA kann derart ausgebildet sein, dass die erste Ebene ME1 und die zweite Ebene ME2 relativ zueinander derart geneigt sind, dass sich die erste Ebene ME1 und die zweite Ebene ME2 in der gemeinsamen Schnittlinie DZ unter einem Winkel α (im Folgenden "Anordnungswinkel α") schneiden, welcher grösser oder gleich 10° und kleiner oder gleich 120° ist. Die Drehgelenk-Anordnung DGA kann insbesondere derart ausgebildet sein, dass die erste Ebene ME1 und die zweite Ebene ME2 relativ zueinander derart geneigt sind, dass sich die erste Ebene ME1 und die zweite Ebene ME2 in der gemeinsamen Schnittlinie DZ unter einem Winkel schneiden, welcher grösser oder gleich 30° und kleiner oder gleich 90° ist.

Die jeweilige Grösse des Anordnungswinkels α ist relevant für die Grösse der Steifigkeiten und die Grösse von Eigenfrequenzen des aus dem ersten Teil 15, dem zweiten Teil 70, dem ersten Festkörpergelenk 80A und dem zweiten Festkörpergelenk 80B gebildeten gekoppelten Systems.

Ein Aspekt der Erfindung bezieht sich auf die Ausgestaltung des an den beiden Endabschnitten E1 und E2 beidseitig starr mit dem zweiten Teil 70 verbundenen Festkörpergelenks 80A bzw. 80B mit dem relativ zu beiden Endabschnitten E1 und E2 bewegbaren Mittelstück F, welches starr mit dem ersten Teil 15 verbunden ist, zur Koppelung des zweiten Teils 70 der Drehgelenk-Anordnung DGA mit dem ersten Teil 15 der Drehgelenk-Anordnung DGA, welches erste Teil 15 relativ zur zweiten Teil axial zur Drehachse DZ versetzt angeordnet ist (gestapelte Bauweise). Mit Hilfe der Ausgestaltung des einzelnen Festkörpergelenks 80A, 80B und des Anordnungswinkels α lassen sich die gewünschten System-Eigenfrequenzen und statischen Steifigkeiten einstellen. Die Anordnung zweier kompakter Festkörpergelenke 80A, 80B zu einer funktionierenden Einheit in Form der Kopplungseinrichtung KE ist platzsparend und kann daher besser in die Drehgelenk-Anordnung DGA integriert werden.

In Falle der Kopplungseinrichtung KE der Drehgelenk-Anordnung DGA sind die elastisch deformierbaren Stegteile S1 und S2 für die translatorischen und rotatorischen Freiheitsgrade verantwortlich. Die beiden Hauptfreiheitsgrade des Mittelabschnitts F des in den Fig. 4A-4C und 5A-5C abgebildeten Festkörpergelenkes 80A bzw.80B sind die Translation in der X-Richtung und die Rotation um die Z-Achse mit Bezug auf das in den Fig. 4A-4C und 5A-5C dargestellte Koordinatensystem mit den drei (relativ zueinander orthogonalen) Achsen X, Y, Z (X-Achse, Y-Achse, Z-Achse). Die X-Achse ist hierbei senkrecht zur ersten Ebene ME1 (in Bezug auf das erste Festkörpergelenk 80A) bzw. senkrecht zur zweiten Ebene ME2 (in Bezug auf das zweite Festkörpergelenk 80B) gerichtet.

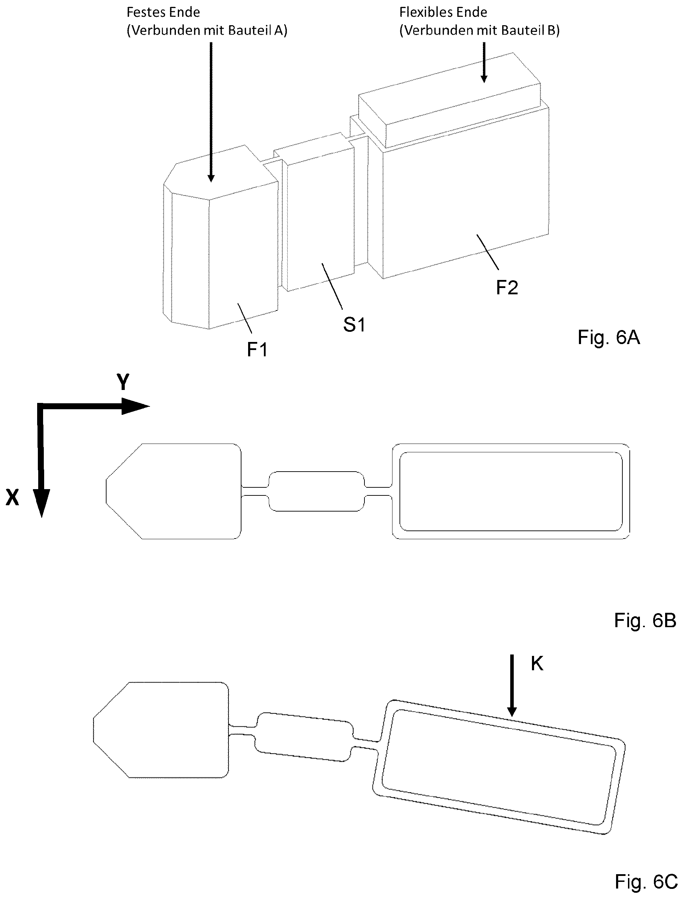

Diese beiden Hauptfreiheitsgrade zeichnen sich durch entsprechend niedrige Eigenfrequenzen und statische Steifigkeiten aus. Als tertiärer Freiheitsgrad des Mittelabschnitts F ist die Rotation um die Y-Achse (Torsion) zu nennen, welche wesentlich durch die Länge und Dicke der Stegteile S1 und S2 beeinflusst wird. Aufgrund der Tatsache, dass die beiden Endabschnitte E1 und E2 des jeweiligen Festkörpergelenks 80A bzw. 80B beidseitig starr mit dem zweiten Teil 70 verbunden sind, erfolgen Auslenkungen des Mittelabschnitts F im Zusammenhang mit Deformationen der Stegteile S1 und S2, welche Deformationen jeweils einer Kombination aus Zugspannung und Biegung (für eine Translation des Mittelabschnitts F in der Richtung der X-Achse und eine Rotation des Mittelabschnitts F um eine sich parallel zur Z-Richtung erstreckende Achse, wie in Fig. 5A, 5B und 5C dargestellt) entsprechen. Daraus resultiert eine deutlich höhere Steifigkeit in allen sechs Freiheitsgraden, verglichen mit einem konventionellen Gelenk, welches in Fig. 6A-6C dargestellt ist.

Fig. 6A-6C zeigt ein konventionelles Festkörpergelenk, welches ein mit einem ersten Bauteil A verbundenes festes Ende F1 und ein mit einem zweiten Bauteil B verbundenes flexibles Ende F2 aufweist, welches mit dem festen Ende F1 über einen elastisch deformierbaren Stegteil S1 verbunden ist. Bei einer mechanischen Belastung des flexiblen Endes F2 durch eine Kraft K erfolgt in der Regel eine Bewegung des flexiblen Endes F2 relativ zum festen Ende F1 derart, dass der Stegteil S1 durch eine Biegung deformiert wird, dabei aber nicht auf Zug belastet wird. Daraus resultiert eine geringere Steifigkeit des konventionellen Festkörpergelenks im Vergleich zur Kopplungseinrichtung KE der erfindungsgemässen Drehgelenk-Anordnung DGA.

Die oben beschriebenen starre Verbindung der beiden Endabschnitte E1 und E2 der beiden Festkörpergelenke 80A und 80B mit dem zweiten Teil 70 und die Anordnung der beiden Festkörpergelenke 80A und 80B relativ zueinander mit dem oben beschriebenen Anordnungswinkels α ermöglicht eine steife Verbindung zwischen den Endabschnitten E1 und E2 der beiden Festkörpergelenke 80A und 80B, wodurch ein kombiniertes Festkörpergelenk mit einer virtuellen Rotationsachse DZ gebildet wird. Der Rotationsfreiheitsgrad um die virtuelle Rotationsachse DZ entsteht durch eine Kombination der beiden Freiheitsgrade einer Translation des Mittelabschnitts F in der X-Richtung gemäss Fig. 5B und einer Rotation des Mittelabschnitts F um eine sich parallel zur Z-Richtung erstreckende Achse gemäss Fig. 5C für jedes der beiden Festkörpergelenke 80A und 80B.

Um zu erreichen, dass die Drehgelenkanordnung DGA eine möglichst hohe Steifigkeit mit Bezug auf eine Rotation des ersten Teils 15 relativ zum zweiten Teil 70 um die Y-Achse gemäss Fig. 1-3 aufweist, ist es sinnvoll, die beiden Festkörpergelenke 80A und 80B in möglichst grossem Abstand (in X-Richtung gemäss Fig. 1-3) voneinander zu platzieren. Die Steifigkeit mit Bezug auf eine Rotation des ersten Teils 15 relativ zum zweiten Teil 70 um die X-Achse kann über die Gestaltung der beiden Festkörpergelenke 80A, 80B und durch den Anordnungswinkel α beeinflusst werden. Die Kombination von zwei in einem Winkel α angeordneten Festkörpergelenken 80A und 80B, welche jeweils an beiden Enden fest mit dem mit dem zweiten Teil 70 verbunden sind, ermöglichen aufgrund der hohen Steifigkeit der beiden Festkörpergelenke 80A, 80B nur verhältnismässig kleine Rotationen um die Z-Achse. Um die Festkörpergelenke 80A & 80B vor Überlast zu schützen bzw. die Bewegung des Mittelstücks F zu begrenzen, können entsprechende Anschläge (entsprechend den Seitenwänden HSA1, HSA2, HSB1, HSB2) in das zweite Teil 70 integriert werden.

Im vorliegenden Beispiel soll die Rotationssteifigkeit um die erste Richtung (Z-Achse) zwischen dem zweiten Teil 70 und dem ersten Teil 15 möglichst niedrig gehalten werden, während die Steifigkeit in Y-Richtung möglichst hoch sein soll. Ein Anordnungswinkels α von ungefähr 60° bietet für die vorliegende Anwendung einen guten Kompromiss. Eine parallele Ausrichtung (α=0°) der beiden Festkörpergelenke 80A, 80B führt zu einer massiven Versteifung der Rotationssteifigkeit um die Z-Achse zwischen dem zweiten Teil 70 und dem ersten Teil 15, während die Steifigkeit in X-Richtung auf ein Minimum reduziert wird. Die Anordnung mit einem Anordnungswinkels α= 180° führt andererseits zu einer Versteifung des Systems in X-Richtung und zu einer massiven Reduktion der Steifigkeit in Y-Richtung und der Steifigkeit hinsichtlich der Rotationen des ersten Teils 15 relativ zum zweiten Teil 70 um die X-Achse und Z-Achse.

Hinsichtlich der Steifigkeiten und der Eigenfrequenzen der einzelnen Festkörpergelenke 80A und 80B gelten mit Bezug auf Fig. 4A-4C und 5A-5C die folgenden Feststellungen:
- Das einzelne Festkörpergelenk 80A und 80B ist im Wesentlichen symmetrisch bezüglich den beiden Mittelebenen XZ und YZ (Fig. 4B), wobei die Endabschnitte E1 und E2 sowie der Mittelabschnitt F in der Form variieren können.
- Das einzelne Festkörpergelenk 80A und 80B soll eine niedrige statische Steifigkeit und Eigenfrequenz bezüglich einer Translation in X-Richtung und einer Rotation um eine sich parallel zur Z-Richtung erstreckende Achse aufweisen, während die Steifigkeiten und Eigenfrequenzen für Translationen in der Y-Richtung und in der Z-Richtung und Rotationen um die X-Richtung und um die Y-Richtung möglichst hoch bleiben sollen.
- Die Steifigkeit und Eigenfrequenz bezüglich einer Translation in der X-Richtung und einer Rotation um eine sich parallel zur Z-Richtung erstreckende Achse wird massgeblich über die Stegteil-Dicke t_1 und den Abstand l_2 zwischen einem der beiden Endabschnitte E1 und E2 und dem Mittelabschnitt F beeinflusst. Je grösser der Abstand l_2, desto geringer ist die Steifigkeit und Eigenfrequenz bezüglich einer Translation in der X-Richtung und einer Rotation um eine sich parallel zur Z-Richtung erstreckende Achse. Dabei ist l_2 in der Regel kleiner als die Höhe h. Je kleiner die Stegdicke t_1, desto geringer sind Steifigkeit und Eigenfrequenz in allen Achsrichtungen.
- Die Steifigkeit und Eigenfrequenz bezüglich einer Rotation um die Y-Achse kann über die Stegdicke t_1 und t_2 sowie den Abstand l_2 beeinflusst werden. Dabei gilt: Je grösser die Stegdicken t_1 und t_2, desto grösser die Steifigkeit und Eigenfrequenz bezüglich einer Rotation um die Y-Achse. Je kleiner der Abstand l_2, desto grösser die Steifigkeit und Eigenfrequenz bezüglich einer Rotation um die Y-Achse.
- Mit einer lokalen Verdickung der Stegteile S1 und S2 auf t_2 wird die Torsionssteifigkeit und Eigenfrequenz bezüglich einer Rotation um die Y-Achse um ein Vielfaches erhöht (> Faktor 3) und die Gefahr von Instabilität in Y-Richtung durch Beulen oder Knicken reduziert. Auch für die übrigen Achsrichtungen resultiert eine Erhöhung der Steifigkeit (~ +50%) und Eigenfrequenz (~ +15%).
- Die Steifigkeit und Eigenfrequenz bezüglich einer Translation in der Z-Richtung und eine Rotation um eine sich parallel zur X-Richtung erstreckende Achse wird durch die Stegdicke t_1 und die Höhe h beeinflusst. Je grösser die Höhe h, desto höher die Steifigkeit und Eigenfrequenz bezüglich einer Translation in der Z-Richtung und eine Rotation um eine sich parallel zur X-Richtung erstreckende Achse. Vorzugsweise können die Stegdicke t_1, Stegdicke t_2, Dicke t_3, die Höhe h, und die Längen l_1 und l_2 wie folgt gewählt werden:
   - Das Verhältnis von Stegdicke t_1 zu Höhe h kann vorzugsweise im Bereich von 1:10 bis 1:30 sein;
   - das Verhältnis von Stegdicke t_1 zu Stegdicke t_2 kann vorzugsweise im Bereich von 1:2 bis 1:5 sein;
   - das Verhältnis von Stegdicke t_1 zu Dicke t_3 kann vorzugsweise im Bereich von 1:5 bis 1:30 sein;
   - das Verhältnis von Stegdicke t_1 zu Steglänge l_1 kann vorzugsweise im Bereich von 1:2 bis 1:5 sein;
   - das Verhältnis von Steglänge l_1 zu Steglänge l_2 kann vorzugsweise kleiner 1 sein.

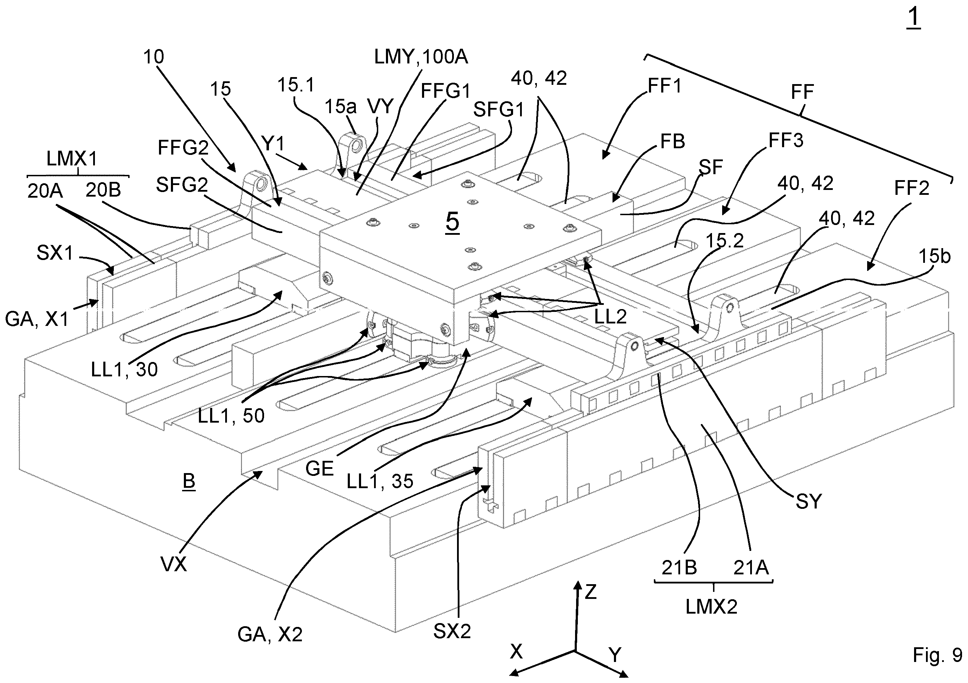

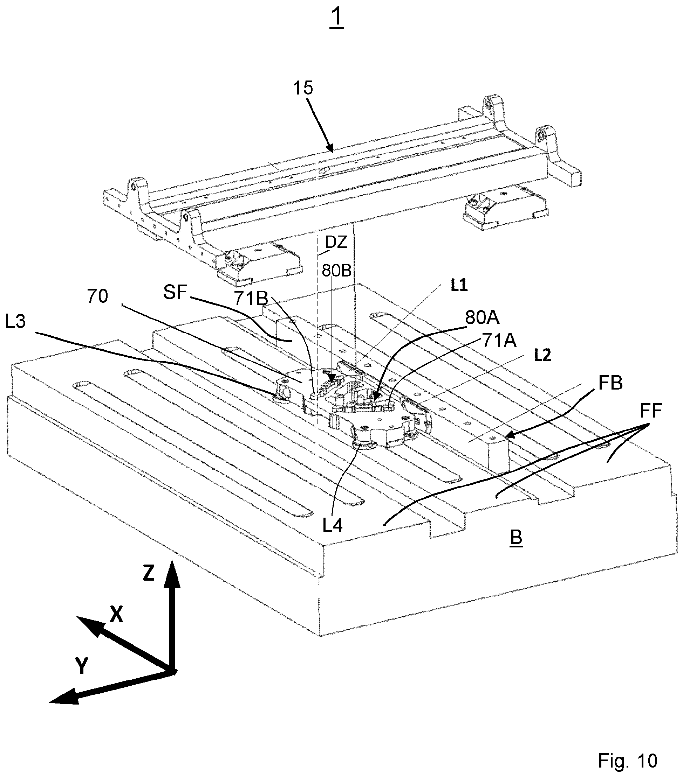

Mit Bezug auf Fig. 9 und 10 wird im Folgenden eine Positioniervorrichtung in Kombination mit einer erfindungsgemässen Drehgelenk-Anordnung DGA beschrieben.

Die Fig. 9 und 10 zeigen eine Positioniervorrichtung 1 (bzw. Teile dieser Positioniervorrichtung 1) zum Positionieren eines beweglichen Elements 5. Das bewegliche Element 5 ist im vorliegenden Beispiel konzipiert als eine bewegbare Plattform bzw. ein bewegbarer Tisch mit einer Auflagefläche, auf welcher beispielsweise ein Gegenstand platzierbar ist, welcher mittels der Positioniervorrichtung 1 zusammen mit dem beweglichen Element 5 positioniert werden soll.

Fig. 9 und 10 zeigen die Positioniervorrichtung 1 in einer perspektivischen Ansicht mit Bezug auf ein in Fig. 9 und 10 dargestelltes Koordinatensystem mit den drei Achsen X, Y, Z (X-Achse, Y-Achse, Z-Achse)

Wie aus Fig. 10 ersichtlich, umfasst die Positioniervorrichtung 1 eine Basis B, welche beispielsweise als eine Platte aus Granit realisiert sein kann und welche im vorliegenden Beispiel an einer oberen Seite eine ebene Führungsfläche FF aufweist, welche parallel zu einer zweiten Richtung (entsprechend der Richtung der X-Achse gemäss Fig. 10, im Folgenden "zweite Richtung X") und parallel zu einer dritten Richtung (entsprechend der Richtung der Y-Achse gemäss Fig. 1, im Folgenden "dritte Richtung Y") angeordnet ist.

Die Positioniervorrichtung 1 ist konzipiert, das bewegliche Element 5 parallel zur ebenen Führungsfläche FF der Basis B in der zweiten Richtung X und/oder in der dritten Richtung Y zu bewegen und dabei in vorgegebenen Positionen jeweils mit einer Genauigkeit im Sub-Mikrometer-Bereich (d.h. weniger als 1 µm) zu positionieren. Um ein schnelles Positionieren zu ermöglichen, ist vorgesehen, das bewegliche Element 5 mit einer relativ grossen Beschleunigung (2g und mehr) in der zweiten Richtung X und/oder in der dritten Richtung Y bewegen zu können.

Zu diesem Zweck weist die Positioniervorrichtung 1 eine erste Bewegungseinrichtung 10 in Gantry-Bauweise auf, welche erste Bewegungseinrichtung 10 einen über der ebenen Führungsfläche FF angeordneten, sich in der dritten Richtung Y in einem Abstand zur ebenen Führungsfläche FF erstreckenden Gantry-Balken 15 und einen Gantry-Antrieb GA zum Bewegen des Gantry-Balkens 15 relativ zur Basis B in der zweiten Richtung X umfasst. Der Gantry-Balken 15 hat eine sich in der dritten Richtung Y erstreckende Längsachse und weist mit Bezug auf diese Längsachse ein erstes Ende 15.1 und ein dem ersten Ende 15.1 gegenüberliegendes zweites Ende 15.2 auf, wobei der Gantry-Antrieb GA zwei sich in der zweiten Richtung X erstreckende erste Linearachsen X1 bzw. X2 mit je einem Linearantrieb LMX1 bzw. LMX2 umfasst. Hierbei ist der Linearantrieb LMX1 der einen ersten Linearachse X1 mit dem ersten Ende 15.1 des Gantry-Balkens 15 verbunden, sodass das erste Ende 15.1 des Gantry-Balkens 15 mittels des Linearantriebs LMX1 in der zweiten Richtung X bewegbar ist. Entsprechend ist der Linearantrieb LMX2 der anderen ersten Linear-Achse X2 mit dem zweiten Ende 15.2 des Gantry-Balkens 15 verbunden, sodass das zweite Ende 15.2 des Gantry-Balkens 15 mittels des Linearantriebs LMX2 ebenfalls in der zweiten Richtung X bewegbar ist.

Im vorliegenden Beispiel sind die Linearantriebe LMX1 und LMX2 jeweils als konventionelle Linearmotoren ausgebildet. Dementsprechend umfasst der (als Linearmotor ausgebildete) Linearantrieb LMX1 einen sich linear in der zweiten Richtung X erstreckenden Stator 20A, welcher an der Basis B befestigt ist, und einen relativ zum Stator 20A in der zweiten Richtung X bewegbaren Läufer 20B, welcher über eine Adapterplatte 15a an dem ersten Ende 15.1 des Gantry-Balkens 15 befestigt ist. Entsprechend umfasst der (als Linearmotor ausgebildete) Linearantrieb LMX2 einen sich linear in der zweiten Richtung X erstreckenden Stator 21A, welcher an der Basis B befestigt ist, und einen relativ zum Stator 21A in der zweiten Richtung X bewegbaren Läufer 21B, welcher über eine Adapterplatte 15b an dem zweiten Ende 15.2 des Gantry-Balkens 15 befestigt ist.

Sowohl der Stator 20A des Linearantriebs LMX1 als auch der Stator 21A des Linearantriebs LMX2 weisen in einem Querschnitt senkrecht zur zweiten Richtung X jeweils ein im Wesentlichen U-förmiges Profil mit zwei nebeneinander angeordneten Schenkeln auf, welche jeweils einen sich in der zweiten Richtung X über die gesamte Länge des jeweiligen Stators 20A bzw. 20B erstreckenden Spalt, d.h. einen Spalt SX1 im Falle des Stators 20A und einen Spalt SX2 im Falle des Stators 21A, begrenzen. Wie bei konventionellen Linearmotoren üblich, umfasst der Stator 20A Mittel zum Bereitstellen eines statischen magnetischen Feldes im Spalt SX1 des Stators 20A und der Stator 21A umfasst Mittel zum Bereitstellen eines statischen magnetischen Feldes im Spalt SX2 des Stators 21A. Entsprechend umfasst der Läufer 20B des Linearantriebs LMX1 eine mit einem elektrischen Wechselstrom versorgbare (in den Figuren nicht dargestellte) Spule zur Erzeugung eines magnetischen Wechselfelds und erstreckt sich räumlich derart, dass ein die Spule des Läufers 20B umfassender Abschnitt 20B-1 des Läufers 20B in den Spalt SX1 des Stators 20A ragt und der Läufer 20B in der zweiten Richtung X in diesem Spalt SX1 über eine Distanz bewegbar ist, welche der Erstreckung des Stators 20A in der zweiten Richtung X entspricht. Entsprechend umfasst der Läufer 21B des Linearantriebs LMX2 eine mit einem elektrischen Wechselstrom versorgbare (in den Figuren nicht dargestellte) Spule zur Erzeugung eines magnetischen Wechselfelds und erstreckt sich räumlich derart, dass ein die Spule des Läufers 21B umfassender Abschnitt 21B-1 des Läufers 21B in den Spalt SX2 des Stators 21A ragt und der Läufer 21B in der zweiten Richtung X in diesem Spalt SX2 über eine Distanz bewegbar ist, welche der Erstreckung des Stators 21A in der zweiten Richtung X entspricht. Um eine Bewegung des Gantry-Balkens 15 in der zweiten Richtung X zu steuern, sind die Linearantriebe LMX1 und LMX2 der beiden ersten Linearachsen X1 bzw. X2 unabhängig voneinander mittels einer (in den Figuren nicht dargestellten) Steuervorrichtung ansteuerbar.

Um eine platzsparende Anordnung der beiden ersten Linearachsen X1 bzw. X2 zu erreichen, sind die Statoren der Linearantriebe LMX1 und LMX2 der vorliegenden Ausführungsform der Positioniervorrichtung 1 gemäss Fig. 1 derart angeordnet, dass sich sowohl der Spalt SX1 des Stators 20A als auch der Spalt SX2 des Stators 21A und sowohl der Läufer 20B als auch der Läufer 21B im Wesentlichen parallel zu einer Ebene erstrecken, welche parallel zur zweiten Richtung X und senkrecht zur ebenen Führungsfläche FF der Basis B angeordnet ist, sodass sowohl der Spalt SX1 des Stators 20A als auch der Spalt SX2 des Stators 21A und sowohl der Läufer 20B als auch der Läufer 21B jeweils in der dritten Richtung Y eine wesentliche geringere Erstreckung aufweisen als in der Richtung senkrecht zur ebenen Führungsfläche FF. Diese Anordnung der beiden ersten Linearachsen X1 bzw. X2 ist vorteilhaft im Hinblick auf eine Beanspruchung einer möglichst geringen Grundfläche in einer Ebene, welche sich parallel zur zweiten Richtung X und parallel zur dritten Richtung Y erstreckt, zumal jeder der beiden Linearantriebe LMX1 und LMX2 aufgrund der jeweiligen Konstruktionen der Statoren 20A und 21A und der Konstruktionen der Läufer 20B und 21B in der vorstehend genannten Anordnung senkrecht zur ebenen Führungsfläche FF eine Erstreckung aufweisen, welche um ein Vielfaches (typischerweise um mehr als einen Faktor 2) grösser ist als die Erstreckung des jeweiligen Linearantriebs LMX1 bzw. LMX2 in der dritten Richtung Y. Letzteres ist insbesondere anhand der Darstellung der Positioniervorrichtung 1 in der Fig. 10 deutlich zu erkennen. Die vorstehend genannte Anordnung der beiden ersten Linearachsen X1 bzw. X2 ermöglicht deshalb eine Konstruktion der Positioniervorrichtung 1, welche in Richtung der dritten Richtung Y (entsprechend der Längsrichtung des Gantry-Balkens 15) eine besonders geringe räumliche Erstreckung aufweist und insbesondere im Hinblick auf die Anordnung der beiden ersten Linearachsen X1 bzw. X2 minimiert ist.

Wie in Fig. 9 angedeutet, ist das bewegliche Element 5 am Gantry-Balken 15 derart gelagert, dass das bewegliche Element 5 am Gantry-Balken 15 linear in der dritten Richtung Y bewegbar ist, wobei der Gantry-Balken 15 eine sich in der dritten Richtung Y erstreckende zweite Linearachse Y1 mit einem mit dem beweglichen Element 5 verbundenen Linearantrieb LMY zum Bewegen des beweglichen Elements 5 in der dritten Richtung Y aufweist.

Im vorliegenden Beispiel ist der Linearantrieb LMY der zweiten Linearachse Y1 ebenfalls als konventioneller Linearmotor ausgebildet und umfasst (analog zur Konstruktion der Linearantriebe LMX1 und LMX2) einen sich linear in der dritten Richtung Y erstreckenden Stator 100A, welcher an der oberen Seite des Gantry-Balkens 15 befestigt ist und sich in der dritten Richtung Y zwischen dem ersten Ende 15.1 und dem zweiten Ende 15.2 über die gesamte Länge des Gantry-Balkens 15 erstreckt, und einen relativ zum Stator 100A in der dritten Richtung Y bewegbaren Läufer 100B, welcher am beweglichen Element 5 befestigt ist.

Der Stator 100A des Linearantriebs LMY weist in einem Querschnitt senkrecht zur dritten Richtung Y ein im Wesentlichen U-förmiges Profil mit zwei nebeneinander angeordneten Schenkeln auf, welche jeweils einen sich in der dritten Richtung Y über die gesamte Länge des Stators 100A erstreckenden Spalt SY begrenzen. Der Stator 100A umfasst Mittel zum Bereitstellen eines statischen magnetischen Feldes im Spalt SY des Stators 100A. Entsprechend umfasst der Läufer 100B des Linearantriebs LMY eine mit einem elektrischen Wechselstrom versorgbare (in den Figuren nicht dargestellte) Spule zur Erzeugung eines magnetischen Wechselfelds und erstreckt sich räumlich derart, dass ein die Spule des Läufers 100B umfassender Abschnitt 100B-1 des Läufers 100B in den Spalt SY des Stators 100A ragt und der Läufer 100B in der dritten Richtung Y in diesem Spalt SY über eine Distanz bewegbar ist, welche der Erstreckung des Stators 100A in der dritten Richtung Y entspricht. Um eine Bewegung des beweglichen Elements 5 in der dritten Richtung Y zu steuern, ist der Linearantrieb LMY mittels einer (in den Figuren nicht dargestellten) Steuervorrichtung ansteuerbar.

Wie in Fig. 9 angedeutet, umfasst die Positioniervorrichtung 1 eine erste Luftlager-Einrichtung LL1 mit mehreren mit dem Gantry-Balken 15 verbundenen Luftlagern zum Führen des Gantry-Balkens an der ebenen Führungsfläche FF der Basis B. Wie aus Fig. 9 ersichtlich, weist die erste Luftlager-Einrichtung LL1 eine erste Luftlager-Anordnung 30 auf, welche mindestens ein am ersten Ende 15.1 des Gantry-Balkens 15 angeordnetes erstes horizontales Luftlager zum Führen des ersten Endes 15.1 des Gantry-Balkens 15 an einem sich in der zweiten Richtung X erstreckenden ersten Abschnitt FF1 der ebenen Führungsfläche FF umfasst. Zusätzlich weist die erste Luftlager-Einrichtung LL1 eine zweite Luftlager-Anordnung 35 auf, welche mindestens ein am zweiten Ende 15.2 des Gantry-Balkens 15 angeordnetes zweites horizontales Luftlager zum Führen des zweiten Endes 15.2 des Gantry-Balkens 15 an einem zweiten sich in der zweiten Richtung X erstreckenden Abschnitt FF2 der ebenen Führungsfläche FF umfasst. Die jeweiligen Luftlager der ersten Luftlager-Anordnung 30 und der zweiten Luftlager-Anordnung 35 haben die Aufgabe, den Gantry-Balken 15 jeweils an einem Abschnitt am ersten Ende 15.1 des Gantry-Balkens 15 und an einem Abschnitt am zweiten Ende 15.2 des Gantry-Balkens 15 auf der ebenen Führungsfläche FF zu stützen bzw. zu führen.

Wie in Fig. 9 ausserdem angedeutet, weist die erste Luftlager-Einrichtung LL1 zusätzlich eine dritte Luftlager-Anordnung 50 auf, welche mindestens ein drittes horizontales Luftlager und mindestens ein viertes horizontales Luftlager umfasst, wobei das mindestens eine dritte horizontale Luftlager und das mindestens eine vierte horizontale Luftlager an einem "mittleren Abschnitt" des Gantry-Balkens 15 zwischen dem ersten Ende 15.1 des Gantry-Balkens 15 und dem zweiten Ende 15.2 des Gantry-Balkens 15 angeordnet sind, sodass der "mittlere Abschnitt" des Gantry-Balkens 15 mittels des dritten horizontalen Luftlagers und des vierten horizontales Luftlagers an einem sich in der zweiten Richtung X erstreckenden dritten Abschnitt FF3 der ebenen Führungsfläche FF geführt ist, welcher mit Bezug auf die dritte Richtung Y zwischen dem ersten Abschnitt FF1 der ebenen Führungsfläche FF und dem zweiten Abschnitt FF2 der ebenen Führungsfläche angeordnet ist. Einzelheiten der dritten Luftlager-Anordnung 50 mit Bezug auf das vorstehend genannte mindestens eine dritte horizontale Luftlager und das vorstehend genannte mindestens ein vierte horizontale Luftlager werden im Folgenden im Zusammenhang mit Fig. 10 noch erläutert.

Als "mittlerer Abschnitt" des Gantry-Balkens 15 soll in diesem Zusammenhang ein sich in der dritten Richtung Y erstreckender Längsabschnitt des Gantry-Balkens 15 angesehen werden, welcher sich in der dritten Richtung Y über eine Länge erstreckt, welche höchstens 50% der Erstreckung des Gantry-Balkens 15 in der dritten Richtung Y beträgt, und welcher bezüglich des ersten Endes 15.1 des Gantry-Balkens 15 und des zweiten Endes 15.2 Gantry-Balkens 15 jeweils einen Abstand in der dritten Richtung Y aufweist, welcher mindestens 25% der Erstreckung des Gantry-Balkens 15 in der dritten Richtung Y beträgt.

Wie in Fig. 9 ausserdem dargestellt, ist an der Basis B neben dem dritten Abschnitt FF3 der ebenen Führungsfläche FF ein sich in der zweiten Richtung X erstreckender Führungsbalken FB angeordnet, welcher eine ebene Seitenfläche SF aufweist, welche sich parallel zur zweiten Richtung X und parallel zu einer im Wesentlichen senkrecht zur ebenen Führungsfläche FF gerichteten ersten Richtung (entsprechend der Richtung der Z-Achse gemäss Fig. 9, im Folgenden "erste Richtung Z") erstreckt. Ausserdem umfasst die dritte Luftlager-Anordnung 50 mindestens ein an dem mittleren Abschnitt des Gantry-Balkens 15 angeordnetes seitliches Luftlager zum Führen des Gantry-Balkens an der einen ebenen Seitenfläche SF des Führungsbalkens FB. Einzelheiten der dritten Luftlager-Anordnung 50 mit Bezug auf das vorstehend genannte mindestens eine seitliche Luftlager werden im Folgenden im Zusammenhang mit Fig. 10 noch erläutert.

Wie im Folgenden noch detaillierter erläutert wird, sind im vorliegenden Beispiel alle Luftlager der dritten Luftlager-Anordnung 50 Bestandteil einer eine Einheit bildenden und am Gantry-Balken 15 befestigten "Baugruppe", welche unterhalb des Gantry-Balkens 15 in einem Zwischenraum zwischen dem Gantry-Balken 15 und der ebenen Führungsfläche FF angeordnet ist und die Aufgabe hat, den Gantry-Balken 15 im Bereich des mittleren Abschnitts des Gantry-Balkens 15 mittels der horizontalen Luftlager der dritten Luftlager-Anordnung 50 im Bereich des dritten Abschnitts FF3 der ebenen Führungsfläche FF zu stützen bzw. zu führen und bei einer Bewegung in der zweiten Richtung X seitlich mittels des mindestens einen seitlichen Luftlagers der dritten Luftlager-Anordnung 50 an der ebenen Seitenfläche SF des Führungsbalkens FB zu führen. Die vorstehend genannte Baugruppe bildet demensprechend ein am Gantry-Balken 15 befestigtes "Gleitelement" GE, welches ausgebildet ist, im Betrieb der Positioniervorrichtung 1 berührungslos auf dem dritten Abschnitt FF3 der ebenen Führungsfläche FF und an der ebenen Seitenfläche SF des Führungsbalkens FB in der zweiten Richtung X zu gleiten, und zwar auf Luftkissen, welche mittels der jeweiligen horizontalen Luftlager der dritten Luftlager-Anordnung 50 zwischen dem Gleitelement GE und dem dritten Abschnitt FF3 der ebenen Führungsfläche FF erzeugbar sind, und an Luftkissen, welche mittels der jeweiligen seitlichen Luftlager der dritten Luftlager-Anordnung 50 zwischen dem Gleitelement GE und der ebenen Seitenfläche SF des Führungsbalkens FB erzeugbar sind.

Es sei darauf hingewiesen, dass jedes horizontale Luftlager der ersten Luftlager-Einrichtung LL1 bezüglich der ebenen Führungsfläche FF der Basis B und jedes seitliche Luftlager der ersten Luftlager-einrichtung LL1 bezüglich der ebenen Seitenfläche SF des Führungsbalkens FB vorgespannt ist. Entsprechend ist jedes Luftlager der zweiten Luftlager-Einrichtung LL2 bezüglich einer der ebenen Führungsflächen FFG1 bzw. FFG2 des Gantry-Balkens 15 oder bezüglich der ebenen Seitenfläche SFG2 des Gantry-Balkens 15 vorgespannt. Zum Vorspannen der jeweiligen Luftlager dienen im vorliegenden Beispiel magnetische Mittel, welche mit Bezug auf die vorliegende Erfindung nicht relevant sind und deshalb nicht näher erläutert werden sollen.

Mit Bezug auf Fig. 9 und 10 werden im Folgenden Einzelheiten des Gleitelements GE im Zusammenhang mit den Luftlagern der dritten Luftlager-Anordnung 50 erläutert. Wie insbesondere aus Fig. 10 ersichtlich, umfasst das Gleitelement GE als wesentlichen Bestandteil einen Träger 70, welcher bestimmt ist, die Luftlager der dritten Luftlager-Anordnung 50 aufzunehmen und am Gantry-Balken 15 befestigt zu werden, um die Luftlager der dritten Luftlager-Anordnung 50 in vorgegebenen Positionen mit Bezug auf den Gantry-Balken 15 zu halten. Der Träger 70 ist im vorliegenden Beispiel als ein Gehäuse ausgebildet, welches mehrere Hohlräume aufweist.

Der Träger 70 hat im vorliegenden Beispiel die Form einer ebenen Platte. Wie aus Fig. 9 und 10 ersichtlich, ist der Träger 70 am Gantry-Balken 15 derart montiert, dass sich der Träger 70 unterhalb des Gantry-Balkens 15 in einem Zwischenraum zwischen dem Gantry-Balken 15 und dem dritten Abschnitt FF3 der ebenen Führungsfläche FF parallel zur ebenen Führungsfläche FF der Basis B und parallel zur ebenen Seitenfläche SF des Führungsbalkens FB erstreckt.

Wie aus Fig. 10 ersichtlich, umfasst die dritte Luftlager-Anordnung 50 im vorliegenden Beispiel insgesamt zwei horizontale Luftlager L3 und L4, welche an einer der ebenen Führungsfläche FF der Basis B zugewandten Unterseite des Trägers 70 angeordnet sind.

Wie aus Fig. 10 ersichtlich, sind die zwei horizontalen Luftlager L3 und L4 relativ zueinander derart angeordnet, dass sie relativ zueinander einen Abstand in der zweiten Richtung X aufweisen.

Wie aus Fig. 10 ersichtlich, umfasst die dritte Luftlager-Anordnung 50 im vorliegenden Beispiel zwei seitliche Luftlager L1 bzw. L2 zum Führen des Gantry-Balkens 15 an der ebenen Seitenfläche SF des Führungsbalkens FB, wobei die zwei seitlichen Luftlager L1 und L2 relativ zueinander derart angeordnet sind, dass sie relativ zueinander einen Abstand in der zweiten Richtung X aufweisen.

Wie aus Fig. 10 ersichtlich, sind im Träger 70 an einer dem Gantry-Balken 15 zugewandten Oberseite des Trägers 70 zwei längliche, im Wesentlichen quaderförmige Hohlräume 71A bzw. 71B ausgebildet, welche jeweils eine sich senkrecht zur ersten Richtung Z bzw. sich parallel zur ebenen Führungsfläche FF der Basis B erstreckende Längsachse aufweisen und mit Bezug auf die zweite Richtung X derart angeordnet sind, dass der längliche Hohlraum 71A und der längliche Hohlraum 71B relativ zueinander einen Abstand in der zweiten Richtung X aufweisen. Wie in Fig. 10 angedeutet, dienen die länglichen Hohlräume 71A und 71 B zur Aufnahme eines ersten Festkörpergelenks 80A bzw. eines zweiten Festkörpergelenks 80B, wobei das erste Festkörpergelenk 80A dazu bestimmt ist, in den Hohlraum 71A eingesetzt zu werden, und das zweite Festkörpergelenk 80B dazu bestimmt ist, in den Hohlraum 71B eingesetzt zu werden, und die zwei Festköpergelenke 80A bzw. 80B dafür vorgesehen sind, eine Verbindung zwischen dem Träger 70 und dem Gantry-Balken 15 derart herzustellen, dass das Gleitelement GE über die zwei Festköpergelenke 80A bzw. 80B mit Bezug auf den Gantry-Balken 15 einerseits in einer stabilen Lage gehalten ist und andererseits über die zwei Festköpergelenke 80A bzw. 80B derart am Gantry-Balken 15 gelagert ist, dass das Gleitelement GE um eine sich in der ersten Richtung Z erstreckende Drehachse relativ zum Gantry-Balken 15 drehbar ist, sodass die Anordnung der zwei Festköpergelenke 80A bzw. 80B dementsprechend ein "Drehgelenk" repräsentiert, welches dazu dient, das Gleitelement GE mit dem Gantry-Balken 15 zu verbinden und am Gantry-Balken 15 beweglich (drehbar) zu halten.

Im vorliegenden Beispiel ist die Positioniervorrichtung 1 derart konzipiert, dass der Gantry-Balken 15, der Träger 70, das erste Festkörpergelenk 80A und das zweite Festkörpergelenkt 80B eine Ausführungsform der erfindungsgemässen Drehgelenk-Anordnung bilden.

Der Gantry-Balken 15, der Träger 70, das erste Festkörpergelenk 80A und das zweite Festkörpergelenk 80B der Positioniervorrichtung 1 entsprechen insbesondere strukturell und funktionell der in den Fig. 1-3 dargestellten Drehgelenk-Anordnung DGA: Dabei entspricht der Gantry-Balken 15 der Positioniervorrichtung 1 dem ersten Teil 15 der Drehgelenk-Anordnung DGA, der Träger 70 der Positioniervorrichtung 1 entspricht dem zweiten Teil 70 der Drehgelenk-Anordnung DGA, das erste Festkörpergelenk 80A der Positioniervorrichtung 1 ist identisch mit dem ersten Festkörpergelenk 80A der Drehgelenk-Anordnung DGA und das zweite Festkörpergelenk 80B der Positioniervorrichtung 1 ist identisch mit dem zweiten Festkörpergelenk 80B der Drehgelenk-Anordnung DGA.

Die im Träger 70 der Positioniervorrichtung 1 ausgebildeten länglichen Hohlräume 71A und 71B zur Aufnahme des ersten Festkörpergelenks 80A bzw. des zweiten Festkörpergelenks 80B entsprechen in analoger Weise den im zweiten Teil 70 der Drehgelenk-Anordnung DGA ausgebildeten länglichen Hohlräumen 71A und 71B.

Die vorstehend beschriebene Konstruktion des Trägers 70 ermöglicht eine Integration der zwei Festköpergelenke 80A bzw. 80B in den Träger 70. Zu diesem Zweck kann das erste Festköpergelenk 80A als Ganzes in den ersten länglichen Hohlraum 71A eingesetzt werden, sodass die beiden Endabschnitte E1 und E2 des ersten Festköpergelenk 80A starr mit dem Träger 70 verbunden werden (mit konventionellen, für eine derartige Verbindung geeignete Befestigungsmitteln, z.B. mit Schrauben und/oder mittels Kleben), während der Mittelabschnitt F des ersten Festköpergelenk 80A starr mit dem Gantry-Balken 15 verbunden wird.

Zu diesem Zweck kann das zweite Festköpergelenk 80B als Ganzes in den zweiten länglichen Hohlraum 71B eingesetzt werden, sodass die beiden Endabschnitte E1 und E2 des zweiten Festköpergelenk 80B starr mit dem Träger 70 verbunden werden (mit konventionellen, für eine derartige Verbindung geeignete Befestigungsmitteln, z.B. mit Schrauben und/oder mittels Kleben), während der Mittelabschnitt F des zweiten Festköpergelenk 80B starr mit dem Gantry-Balken 15 verbunden wird.

Wie Fig. 10 andeutet, besteht sowohl das erste Festkörpergelenk 80A als auch das zweite Festkörpergelenk 80B jeweils aus einem länglichen Festkörper (z.B. aus Stahl), welcher sich entlang einer zur ersten Richtung Z parallelen Ebene senkrecht zur ersten Richtung Z erstreckt und eine senkrecht zur ersten Richtung Z angeordnete Längsachse aufweist.

Wie in Fig. 1 und 10 angedeutet, wird in diesem Zusammenhang angenommen, dass ein das erste Festkörpergelenk 80A bildendender erster länglicher Festköper sich entlang einer zur ersten Richtung Z parallelen ersten Ebene ME1 erstreckt und dass ein das zweite Festkörpergelenk 80B bildendender zweiter länglicher Festköper sich entlang einer zur ersten Richtung Z parallelen zweiten Ebene ME2 erstreckt.

Das erste Festkörpergelenk 80A und das zweite Festkörpergelenk 80B sind ausgebildet, den Träger 70 bzw. das Gleitelement GE in einer stabilen Ruhelage mit Bezug auf den Gantry-Balken 15 zu halten, wenn sich beide Festkörpergelenke 80A und 80B jeweils in ihrem undefomierten Grundzustand befinden (wie in Fig. 9 dargestellt). Dadurch, dass der erste Stegteil S1 und der zweite Stegteil S2 des ersten Festkörpergelenks 80A und der erste Stegteil S1 und der zweite Stegteil S2 des zweiten Festkörpergelenks 80B jeweils elastisch deformierbar ausgebildet sind, und dadurch, dass der Mittelabschnitt F des ersten Festkörpergelenks 80A (im undeformierten Grundzustand des ersten Festkörpergelenks 80A) in einer Richtung senkrecht zur ersten Ebene ME1 sowohl zum Wandabschnitt HSA1 als auch zum Wandabschnitt HSA2 jeweils einen Abstand aufweist und ausserdem der Mittelabschnitt F des zweiten Festkörpergelenks 80B (im undeformierten Grundzustand des zweiten Festkörpergelenks 80B) in einer Richtung senkrecht zur zweiten Ebene ME2 sowohl zum Wandabschnitt HSB1 als auch zum Wandabschnitt HSB2 jeweils einen Abstand aufweist, ist der Träger 70 bzw. das Gleitelement GE mittels des ersten Festkörpergelenks 80A und des zweiten Festkörpergelenks 80B derart am Gantry-Balken 15 gehalten, dass der Träger 70 bzw. das Gleitelement GE relativ zum Gantry-Balken 15 bewegbar ist, sofern der Mittelabschnitt F des ersten Festkörpergelenks 80A nicht an einen der Wandabschnitte HSA1 bzw. HSA2 stösst und nicht einer der Wandabschnitte HSA1 bzw. HSA2 eine entsprechende Bewegung des Trägers 70 bzw. des Gleitelements GE relativ zum Gantry-Balken 15 blockiert und/oder sofern der Mittelabschnitt F des zweiten Festkörpergelenks 80B nicht an einen der Wandabschnitte HSB1 bzw. HSB2 stösst und nicht einer der Wandabschnitte HSB1 bzw. HSB2 eine entsprechende Bewegung des Trägers 70 bzw. des Gleitelements GE relativ zum Gantry-Balken 15 blockiert.

Im Falle der Positioniervorrichtung 1 ist von Interesse, dass die Anordnung des ersten Festkörpergelenks 80A und des zweiten Festkörpergelenks 80B eine Verbindung zwischen dem Träger 70 bzw. dem Gleitelement GE und dem Gantry-Balken 15 repräsentiert, welche einerseits eine möglichst hohe Steifigkeit mit Bezug auf eine Translation des Trägers 70 bzw. des Gleitelements GE relativ zum Gantry-Balken 15 in der zweiten Richtung X und in der dritten Richtung Y und in der ersten Richtung Z gewährleistet, andererseits aber eine möglichst geringe Steifigkeit mit Bezug auf eine Rotation des Trägers 70 bzw. des Gleitelements GE relativ zum Gantry-Balken 15 um eine sich in der ersten Richtung Z erstreckende Drehachse aufweist.

Um die vorstehend genannten Anforderungen zu erfüllen, sind das erste Festkörpergelenk 80A und das zweite Festkörpergelenk 80B relativ zueinander derart am Träger 70 angeordnet, dass die erste Ebene ME1 und die zweite Ebene ME2 nicht parallel zueinander angeordnet sind, sondern relativ zueinander derart geneigt sind, dass die erste Ebene ME1 und die zweite Ebene ME2 eine sich parallel zur ersten Richtung Z erstreckende gemeinsame Schnittlinie DZ bilden (wie in Fig. 1 dargestellt). In diesem Fall bilden die erste Ebene ME1 und die zweite Ebene ME2 mit Bezug auf die gemeinsame Schnittlinie DZ einen Winkel α, welcher grösser als 0° und kleiner als 180° sein muss. Um eine hinreichend hohe Steifigkeit der Anordnung des ersten Festkörpergelenks 80A und des zweiten Festkörpergelenks 80B mit Bezug auf eine Translation des Trägers 70 bzw. des Gleitelements GE relativ zum Gantry-Balken 15 in der zweiten Richtung X und in der dritten Richtung Y zu gewährleisten, sollte der Winkel α vorzugsweise die Bedingung 30° ≤ α ≤ 90° erfüllen. Im Falle des in Fig. 9 und 10 dargestellten Beispiels beträgt der Winkel α ca. 60°.

Eine Anordnung des ersten Festkörpergelenks 80A und des zweiten Festkörpergelenks 80B derart, dass die erste Ebene ME1 und die zweite Ebene ME2 mit Bezug auf die gemeinsame Schnittlinie DZ einen Winkel α von ca. 60° bilden, stellt im vorliegenden Fall eine guten Kompromiss dar, derart, dass die Steifigkeit der Anordnung des ersten Festkörpergelenks 80A und des zweiten Festkörpergelenks 80B mit Bezug auf eine Rotation des Trägers 70 bzw. des Gleitelements GE relativ zum Gantry-Balken 15 um die gemeinsame Schnittlinie DZ der ersten Ebene ME1 und der zweiten Ebene ME2 hinreichend gering ist und die Steifigkeit der Anordnung des ersten Festkörpergelenks 80A und des zweiten Festkörpergelenks 80B mit Bezug auf eine Translation des Trägers 70 bzw. des Gleitelements GE relativ zum Gantry-Balken 15 in der zweiten Richtung X und in der dritten Richtung Y hinreichend hoch ist.

Die gemeinsame Schnittlinie DZ der ersten Ebene ME1 und der zweiten Ebene ME2 bilden in diesem Zusammenhang eine (sich in der ersten Richtung Z erstreckende) "virtuelle" Drehachse, um welche der Träger 70 bzw. das Gleitelements GE relativ zum Gantry-Balken 15 mittels der Anordnung des ersten Festkörpergelenks 80A und des zweiten Festkörpergelenks 80B drehbar gelagert ist.

Durch eine geeignete Wahl der Anordnung der Wandabschnitte HSA1 und/oder HSA2 und/oder HSB1 und/oder HSB2 kann demnach ein maximaler Drehwinkel vorgeben werden, um welchen der Träger 70 aus seiner Ruhelage um die "virtuelle" Drehachse DZ drehbar ist. Auf diese Weise können das erste Festkörpergelenk 80A und das zweite Festkörpergelenk 80B vor einer mechanischen Überlastung bewahrt werden. Im Falle der Positioniervorrichtung 1 kann es beispielsweise zweckmässig sein, dass der Träger 70 relativ zum Gantry-Balken 15 um eine "virtuelle" Drehachse DZ zumindest um einen Winkel von ±0.1° drehbar ist.

## Patentansprüche

1. Drehgelenk-Anordnung (DGA), umfassend
ein erstes Teil (15),
ein zweites Teil (70) und
eine Kopplungseinrichtung (KE) mit mindestens einem Festkörpergelenk (80A, 80B) zum Verbinden des ersten Teils (15) und des zweiten Teils (70) derart, dass das zweite Teil relativ zum ersten Teil um eine sich in einer ersten Richtung (Z) erstreckende Drehachse (DZ) drehbar ist,
wobei das erste Teil (15) und das zweite Teil (70) jeweils eine Erstreckung senkrecht zur Drehachse (DZ) aufweisen, wobei das zweite Teil relativ zum ersten Teil axial zur Drehachse (DZ) um eine Distanz versetzt angeordnet ist,
**dadurch gekennzeichnet, dass**
die Kopplungseinrichtung (KE) ein erstes Festkörpergelenk (80A) und ein zweites Festkörpergelenk (80B) aufweist,
wobei das erste Festkörpergelenk (80A) aus einem ersten länglichen Festkörper besteht, welcher sich entlang einer zur ersten Richtung (Z) parallelen ersten Ebene (ME1) senkrecht zur ersten Richtung (Z) erstreckt und eine senkrecht zur ersten Richtung (Z) angeordnete Längsachse aufweist, wobei der erste längliche Festkörper folgende in Richtung der Längsachse des ersten länglichen Festkörpers hintereinander angeordnete Längsabschnitte aufweist:
- einen ersten Endabschnitt (E1), welcher ein erstes Ende des ersten länglichen Festkörpers bildet;
- einen zweiten Endabschnitt (E2), welcher ein dem ersten Ende des ersten länglichen Festkörpers in Richtung der Längsachse des ersten länglichen Festkörpers gegenüberliegendes zweites Ende des ersten länglichen Festkörpers bildet;
- einen zwischen dem ersten Endabschnitt und dem zweiten Endabschnitt des ersten länglichen Festkörpers angeordneten Mittelabschnitt (F);
- einen zwischen dem ersten Endabschnitt (E1) und dem Mittelabschnitt (F) des ersten länglichen Festkörpers angeordneten, mit dem ersten Endabschnitt (E1) und dem Mittelabschnitt (F) verbundenen ersten Stegteil (S1);
- einen zwischen dem zweiten Endabschnitt (E2) und dem Mittelabschnitt (F) des ersten länglichen Festkörpers angeordneten, mit dem zweiten Endabschnitt (E2) und dem Mittelabschnitt (F) des ersten länglichen Festkörpers verbundenen zweiten Stegteil (S2);
wobei das zweite Festkörpergelenk (80B) aus einem zweiten länglichen Festkörper besteht, welcher sich entlang einer zur ersten Richtung (Z) parallelen zweiten Ebene (ME2) senkrecht zur ersten Richtung (Z) erstreckt und eine senkrecht zur ersten Richtung (Z) angeordnete Längsachse aufweist, wobei der zweite längliche Festkörper folgende in Richtung der Längsachse des zweiten länglichen Festkörpers hintereinander angeordnete Längsabschnitte aufweist:
- einen ersten Endabschnitt (E1), welcher ein erstes Ende des zweiten länglichen Festkörpers bildet;
- einen zweiten Endabschnitt (E2), welcher ein dem ersten Ende des zweiten länglichen Festkörpers in Richtung der Längsachse des zweiten länglichen Festkörpers gegenüberliegendes zweites Ende des zweiten länglichen Festkörpers bildet;
- einen zwischen dem ersten Endabschnitt und dem zweiten Endabschnitt des zweiten länglichen Festkörpers angeordneten Mittelabschnitt (F);
- einen zwischen dem ersten Endabschnitt (E1) und dem Mittelabschnitt (F) des zweiten länglichen Festkörpers angeordneten, mit dem ersten Endabschnitt und dem Mittelabschnitt verbundenen ersten Stegteil (S1);
- einen zwischen dem zweiten Endabschnitt (E2) und dem Mittelabschnitt (F) des zweiten länglichen Festkörpers angeordneten, mit dem zweiten Endabschnitt (E2) und dem Mittelabschnitt (F) des zweiten länglichen Festkörpers verbundenen zweiten Stegteil (S2);
wobei das erste Teil (15) mit dem zweiten Teil (70) über das erste Festkörpergelenk (80A) und das zweite Festkörpergelenk (80B) derart verbunden ist,
dass der erste Endabschnitt (E1) des ersten länglichen Festkörpers und der zweite Endabschnitt (E2) des ersten länglichen Festkörpers starr mit dem zweiten Teil (70) und der Mittelabschnitt (F) des ersten länglichen Festkörpers starr mit dem ersten Teil (15) verbunden sind und
dass der erste Endabschnitt (E1) des zweiten länglichen Festkörpers und der zweite Endabschnitt (E2) des zweiten länglichen Festkörpers starr mit dem zweiten Teil (70) und der Mittelabschnitt (F) des zweiten länglichen Festkörpers starr mit dem ersten Teil (15) verbunden sind,
wobei die erste Ebene (ME1) und die zweite Ebene (ME2) relativ zueinander derart geneigt sind, dass die erste Ebene (ME1) und die zweite Ebene (ME2) eine sich parallel zur ersten Richtung (Z) erstreckende gemeinsame Schnittlinie (DZ) bilden,
wobei der erste Stegteil (S1) und der zweite Stegteil (S2) des ersten länglichen Festkörpers des ersten Festkörpergelenks (80A) senkrecht zur ersten Ebene (ME1) jeweils eine Erstreckung (t_1, t_2) aufweisen, welche geringer ist als eine Erstreckung (t_3) des ersten Endabschnitts (E1) des ersten länglichen Festkörpers senkrecht zur ersten Ebene (ME1), eine Erstreckung (t_3) des zweiten Endabschnitts (E2) des ersten länglichen Festkörpers senkrecht zur ersten Ebene (ME1) und eine Erstreckung (t_4) des Mittelabschnitts (F) des ersten länglichen Festkörpers senkrecht zur ersten Ebene (ME1), sodass der erste Stegteil (S1) und der zweite Stegteil (S2) des ersten länglichen Festkörpers elastisch deformierbar sind und der Mittelabschnitt (F) des ersten Festkörpergelenks (80A) relativ zum ersten Endabschnitt (E1) des ersten Festkörpergelenks (80A) und zum zweiten Endabschnitt (E2) des ersten Festkörpergelenks (80A) bewegbar ist;
wobei der erste Stegteil (S1) und der zweite Stegteil (S2) des zweiten länglichen Festkörpers des zweiten Festkörpergelenks (80B) senkrecht zur zweiten Ebene (ME2) jeweils eine Erstreckung (t_1, t_2) aufweisen, welche geringer ist als eine Erstreckung (t_3) des ersten Endabschnitts (E1) des zweiten länglichen Festkörpers senkrecht zur zweiten Ebene (ME2), eine Erstreckung (t_3) des zweiten Endabschnitts (E2) des zweiten länglichen Festkörpers senkrecht zur zweiten Ebene (ME2) und eine Erstreckung (t_4) des Mittelabschnitts (F) des zweiten länglichen Festkörpers senkrecht zur zweiten Ebene (ME2), sodass der erste Stegteil (S1) und der zweite Stegteil (S2) des zweiten länglichen Festkörpers elastisch deformierbar sind und der Mittelabschnitt (F) des zweiten Festkörpergelenks (80B) relativ zum ersten Endabschnitt (E1) des zweiten Festkörpergelenks (80B) und zum zweiten Endabschnitt (E2) des zweiten Festkörpergelenks (80B) bewegbar ist;
wobei das zweite Teil (70) mittels des ersten Festkörpergelenks (80A) und des zweiten Festkörpergelenks (80B) an dem ersten Teil (15) um die gemeinsame Schnittlinie (DZ) der ersten Ebene (ME1) und der zweiten Ebene (ME2) drehbar gelagert ist.

2. Drehgelenk-Anordnung (DGA) nach Anspruch 1, wobei
das erste Festkörpergelenk (80A) in einem undeformierten Zustand des ersten Festkörpergelenks (80A) symmetrisch zur ersten Ebene (ME1) ausbildet ist, und/oder
das zweite Festkörpergelenk (80B) in einem undeformierten Zustand des zweiten Festkörpergelenks (80B) symmetrisch zur zweiten Ebene (ME2) ausgebildet ist.

3. Drehgelenk-Anordnung (DGA) nach Anspruch 1 oder 2, wobei der erste Endabschnitt (E1) des ersten länglichen Festkörpers des ersten Festkörpergelenks (80A) in der ersten Richtung (Z) eine Erstreckung (h) aufweist, welche grösser ist als die Erstreckung (t_3) des ersten Endabschnitts (E1) des ersten länglichen Festkörpers senkrecht zur ersten Ebene (ME1); und/oder
der zweite Endabschnitt (E2) des ersten länglichen Festkörpers des ersten Festkörpergelenks (80A) in der ersten Richtung (Z) eine Erstreckung (h) aufweist, welche grösser ist als die Erstreckung (t_3) des zweiten Endabschnitts (E2) des ersten länglichen Festkörpers senkrecht zur ersten Ebene (ME1); und/oder
der Mittelabschnitt (F) des ersten länglichen Festkörpers des ersten Festkörpergelenks (80A) in der ersten Richtung (Z) eine Erstreckung (hF) aufweist, welche grösser ist als die Erstreckung (t_4) des Mittelabschnitts (F) des ersten länglichen Festkörpers senkrecht zur ersten Ebene (ME1); und/oder
der erste Stegteil (S1) des ersten länglichen Festkörpers des ersten Festkörpergelenks (80A) in der ersten Richtung (Z) eine Erstreckung (h) aufweist, welche grösser ist als die Erstreckung (t_2) des ersten Stegteils (S1) des ersten länglichen Festkörpers senkrecht zur ersten Ebene (ME1); und/oder
der zweite Stegteil (S2) des ersten länglichen Festkörpers des ersten Festkörpergelenks (80A) in der ersten Richtung (Z) eine Erstreckung (h) aufweist, welche grösser ist als die Erstreckung (t_2) des zweiten Stegteils (S2) des ersten länglichen Festkörpers senkrecht zur ersten Ebene (ME1); und/oder
der erste Endabschnitt (E1) des zweiten länglichen Festkörpers des zweiten Festkörpergelenks (80B) in der ersten Richtung (Z) eine Erstreckung (h) aufweist, welche grösser ist als die Erstreckung (t_3) des ersten Endabschnitts (E1) des zweiten länglichen Festkörpers senkrecht zur zweiten Ebene (ME2); und/oder
der zweite Endabschnitt (E2) des zweiten länglichen Festkörpers des zweiten Festkörpergelenks (80B) in der ersten Richtung (Z) eine Erstreckung (h) aufweist, welche grösser ist als die Erstreckung (t_3) des zweiten Endabschnitts (E2) des zweiten länglichen Festkörpers senkrecht zur zweiten Ebene (ME2); und/oder
der Mittelabschnitt (F) des zweiten länglichen Festkörpers des zweiten Festkörpergelenks (80B) in der ersten Richtung (Z) eine Erstreckung (hF) aufweist, welche grösser ist als die Erstreckung (t_4) des Mittelabschnitts (F) des zweiten länglichen Festkörpers senkrecht zur zweiten Ebene (ME2); und/oder
der erste Stegteil (S1) des zweiten länglichen Festkörpers des zweiten Festkörpergelenks (80B) in der ersten Richtung (Z) eine Erstreckung (h) aufweist, welche grösser ist als die Erstreckung (t_2) des ersten Stegteils (S1) des zweiten länglichen Festkörpers senkrecht zur zweiten Ebene (ME2); und/oder
der zweite Stegteil (S2) des zweiten länglichen Festkörpers des zweiten Festkörpergelenks (80B) in der ersten Richtung (Z) eine Erstreckung (h) aufweist, welche grösser ist als die Erstreckung (t_2) des zweiten Stegteils (S2) des zweiten länglichen Festkörpers senkrecht zur zweiten Ebene (ME2).

4. Drehgelenk-Anordnung (DGA) nach einem der Ansprüche 1-3, wobei
das erste Festkörpergelenk (80A) in einem undeformierten Zustand des ersten Festkörpergelenks (80A) und das zweite Festkörpergelenk (80B) in einem undeformierten Zustand des zweiten Festkörpergelenks (80B) relativ zueinander derart angeordnet sind, dass das erste Festkörpergelenk (80A) und das zweite Festkörpergelenk (80B) symmetrisch bezüglich einer dritten Ebene (E3) angeordnet sind, welche sich parallel zur ersten Richtung (Z) erstreckt, wobei die gemeinsame Schnittlinie (DZ) der ersten Ebene (ME1) und der zweiten Ebene (ME2) sich in der dritten Ebene (E3) erstreckt.

5. Drehgelenk-Anordnung (DGA) nach einem der Ansprüche 1-3, wobei
das erste Festkörpergelenk (80A) relativ zum zweiten Festkörpergelenk (80B) derart angeordnet ist, dass das erste Festkörpergelenk (80A) senkrecht zur ersten Richtung (Z) einen Abstand zum zweiten Festkörpergelenk (80B) aufweist.

6. Drehgelenk-Anordnung (DGA) nach einem der Ansprüche 1-5, wobei das zweite Teil (70) einen ersten länglichen Hohlraum (71A) aufweist, welcher sich in der ersten Richtung (Z) entlang der ersten Ebene (ME1) erstreckt, und das erste Festkörpergelenk (80A) im ersten länglichen Hohlraum (71A) derart angeordnet ist, dass sich das erste Festkörpergelenk (80A) in der ersten Richtung (Z) zumindest über einen Teil seiner Erstreckung in der ersten Richtung (Z) durch den ersten länglichen Hohlraum (71A) erstreckt;
wobei das zweite Teil (70) einen zweiten länglichen Hohlraum (71B) aufweist, welcher sich in der ersten Richtung (Z) entlang der zweiten Ebene (ME2) erstreckt, und das zweite Festkörpergelenk (80B) im zweiten länglichen Hohlraum (71B) derart angeordnet ist, dass sich das zweite Festkörpergelenk (80B) in der ersten Richtung (Z) zumindest über einen Teil seiner Erstreckung in der ersten Richtung (Z) durch den zweiten länglichen Hohlraum (71B) erstreckt.

7. Drehgelenk-Anordnung (DGA) nach Anspruch 6,
wobei sich der erste längliche Hohlraum (71A) entlang der ersten Ebene (ME1) derart erstreckt, dass eine Längsachse des ersten länglichen Hohlraums (71A) parallel zur ersten Ebene (ME1) und senkrecht zur ersten Richtung (Z) angeordnet ist und der erste längliche Hohlraum (71A) seitlich mit Bezug auf die erste Ebene (ME1) durch zwei einander gegenüberliegende Seitenwände (HSA1, HSA2) des zweiten Teils (70) begrenzt ist, welche sich jeweils in der ersten Richtung (Z) parallel zur ersten Ebene (ME1) erstrecken und relativ zueinander einen Abstand in einer Richtung senkrecht zur ersten Ebene (ME1) aufweisen;
wobei sich der zweite längliche Hohlraum (71B) entlang der zweiten Ebene (ME2) derart erstreckt, dass eine Längsachse des zweiten länglichen Hohlraums (71B) parallel zur zweiten Ebene (ME2) und senkrecht zur ersten Richtung (Z) angeordnet ist und der zweite längliche Hohlraum (71B) seitlich mit Bezug auf die zweite Ebene (ME2) durch zwei einander gegenüberliegende Seitenwände (HSB1, HSB2) des zweiten Teils (70) begrenzt ist, welche sich jeweils in der ersten Richtung (Z) parallel zur zweiten Ebene (ME2) erstrecken und relativ zueinander einen Abstand in einer Richtung senkrecht zur zweiten Ebene (ME2) aufweisen.

8. Drehgelenk-Anordnung (DGA) nach Anspruch 6 oder 7,
wobei die zwei einander gegenüberliegenden, den ersten länglichen Hohlraum (71A) seitlich mit Bezug auf die erste Ebene (ME1) begrenzenden Seitenwände (HSA1, HSA2) des zweiten Teils (70) derart geformt sind, dass sie den ersten Endabschnitt (E1) und den zweiten Endabschnitt (E2) des ersten Festkörpergelenks (80A) umschliessen, sodass der erste Endabschnitt (E1) und der zweite Endabschnitt (E2) des ersten Festkörpergelenks (80A) formschlüssig mit dem zweiten Teil (70) verbunden sind;
wobei die zwei einander gegenüberliegenden, den zweiten länglichen Hohlraum (71B) seitlich mit Bezug auf die zweite Ebene (ME2) begrenzenden Seitenwände (HSB1, HSB2) des zweiten Teils (70) derart geformt sind, dass sie den ersten Endabschnitt (E1) und den zweiten Endabschnitt (E2) des zweiten Festkörpergelenks (80B) umschliessen, sodass der erste Endabschnitt (E1) und der zweite Endabschnitt (E2) des zweiten Festkörpergelenks (80B) formschlüssig mit dem zweiten Teil (70) verbunden sind.

9. Drehgelenk-Anordnung (DGA) nach einem der Ansprüche 6 - 8,
wobei die zwei einander gegenüberliegenden, den ersten länglichen Hohlraum (71A) seitlich mit Bezug auf die erste Ebene (ME1) begrenzenden Seitenwände (HSA1, HSA2) des zweiten Teils (70) derart geformt sind, dass sie den Mittelabschnitt (F) des ersten Festkörpergelenks (80A) umschliessen, wobei die zwei einander gegenüberliegenden, den ersten länglichen Hohlraum (71A) seitlich mit Bezug auf die erste Ebene (ME1) begrenzenden Seitenwände (HSA1, HSA2) des zweiten Teils (70) senkrecht zur erste Ebene (ME1) einen Abstand aufweisen, welcher grösser ist als eine Erstreckung (t_4) des Mittelabschnitts (F) des ersten Festkörpergelenks (80A) senkrecht zur ersten Ebene (ME1), sodass der Mittelabschnitt (F) des ersten Festkörpergelenks (80A) relativ zum zweiten Teil (70) bewegbar ist;
wobei die zwei einander gegenüberliegenden, den zweiten länglichen Hohlraum (71B) seitlich mit Bezug auf die zweite Ebene (ME2) begrenzenden Seitenwände (HSB1, HSB2) des zweiten Teils (70) derart geformt sind, dass sie den Mittelabschnitt (F) des zweiten Festkörpergelenks (80B) umschliessen, wobei die zwei einander gegenüberliegenden, den zweiten länglichen Hohlraum (71B) seitlich mit Bezug auf die zweite Ebene (ME2) begrenzenden Seitenwände (HSB1, HSB2) des zweiten Teils (70) senkrecht zur zweiten Ebene (ME2) einen Abstand aufweisen, welcher grösser ist als eine Erstreckung (t_4) des Mittelabschnitts (F) des zweiten Festkörpergelenks (80B) senkrecht zur zweiten Ebene (ME2), sodass der Mittelabschnitt (F) des zweiten Festkörpergelenks (80B) relativ zum zweiten Teil (70) bewegbar ist.

10. Drehgelenk-Anordnung (DGA) nach einem der Ansprüche 6 - 8,
wobei der Mittelabschnitt (F) des ersten Festkörpergelenks (80A) relativ zum zweiten Teil (70) in einer translatorischen Bewegung senkrecht zur ersten Ebene (ME1) bewegbar ist; und/oder
wobei der Mittelabschnitt (F) des ersten Festkörpergelenks (80A) relativ zum zweiten Teil (70) mittels einer Drehung um eine sich in der ersten Richtung (Z) erstreckende Drehachse bewegbar ist; und/oder
wobei der Mittelabschnitt (F) des zweiten Festkörpergelenks (80B) relativ zum zweiten Teil (70) in einer translatorischen Bewegung senkrecht zur zweiten Ebene (ME2) bewegbar ist; und/oder
wobei der Mittelabschnitt (F) des zweiten Festkörpergelenks (80B) relativ zum zweiten Teil (70) mittels einer Drehung um eine sich in der ersten Richtung (Z) erstreckende Drehachse bewegbar ist.

11. Drehgelenk-Anordnung (DGA) nach einem der Ansprüche 1 - 10,
wobei die erste Ebene (ME1) und die zweite Ebene (ME2) relativ zueinander derart geneigt sind, dass sich die erste Ebene (ME1) und die zweite Ebene (ME2) in der gemeinsamen Schnittlinie (DZ) unter einem Winkel schneiden, welcher grösser oder gleich 10° und kleiner oder gleich 120° ist.

12. Drehgelenk-Anordnung (DGA) nach einem der Ansprüche 1-11, wobei die erste Ebene (ME1) und die zweite Ebene (ME2) relativ zueinander derart geneigt sind, dass sich die erste Ebene (ME1) und die zweite Ebene (ME2) in der gemeinsamen Schnittlinie (DZ) unter einem Winkel schneiden, welcher grösser oder gleich 30° und kleiner oder gleich 90° ist.

13. Positioniervorrichtung (1), mit einer Drehgelenk-Anordnung (DGA) nach einem der Ansprüche 1 - 12 und einer Linearführungsvorrichtung (B, FB) zum Führen des ersten Teils (15) oder des zweiten Teils (70) der Drehgelenk-Anordnung (DGA), wobei
das erste Teil der Drehgelenk-Anordnung (DGA) mittels der Linearführungsvorrichtung derart geführt ist, dass das erste Teil linear in einer zweiten Richtung (X) bewegbar ist, welche sich senkrecht zur ersten Richtung (Z) erstreckt, oder
das zweite Teil (70) der Drehgelenk-Anordnung (DGA) mittels der Linearführungsvorrichtung (B, FB) derart geführt ist, dass das zweite Teil (70) linear in einer zweiten Richtung (X) bewegbar ist, welche sich senkrecht zur ersten Richtung (Z) erstreckt.

14. Positioniervorrichtung (1) nach Anspruch 13, wobei,
falls das zweite Teil (70) mittels der Linearführungsvorrichtung (B, FB) geführt ist,
mindestens ein mit dem ersten Teil (15) der Drehgelenk-Anordnung (DGA) verbundener Linearantrieb (LMX1, LMX2) zum Bewegen des ersten Teils (15) in der zweiten Richtung (X) vorhanden ist.

15. Positioniervorrichtung nach Anspruch 13 oder 14,
wobei die Linearführungsvorrichtung eine Basis (B) mit mindestens einer ebenen Führungsfläche (FF) und/oder einen Führungsbalken (FB) mit mindestens einer ebenen Führungsfläche (SF) umfasst und das zweite Teil (70) mittels mindestens einem Luftlager (L1, L2, L3, L4) an der ebenen Führungsfläche der Basis (B) und/oder an der ebenen Führungsfläche (SF) des Führungsbalken (FB) geführt ist.

16. Positioniervorrichtung (1) nach Anspruch 13, wobei,
falls das erste Teil mittels der Linearführungsvorrichtung geführt ist,
mindestens ein mit dem zweiten Teil der Drehgelenk-Anordnung verbundener Linearantrieb zum Bewegen des zweiten Teils in der zweiten Richtung (X) vorhanden ist.

17. Positioniervorrichtung nach Anspruch 13 oder 16,
wobei die Linearführungsvorrichtung eine Basis (B) mit mindestens einer ebenen Führungsfläche (FF) und/oder einen Führungsbalken (FB) mit mindestens einer ebenen Führungsfläche (SF) umfasst und das erste Teil mittels mindestens einem Luftlager an der ebenen Führungsfläche der Basis (B) und/oder an der ebenen Führungsfläche (SF) des Führungsbalken (FB) geführt ist.

## Claims

1. A rotary joint arrangement (DGA), comprising
a first part (15),
a second part (70) and
a coupling means (KE) comprising at least one solid body joint (80A, 80B) for connecting the first part (15) and the second part (70) in such a way that the second part is enabled be rotated relative to the first part about an axis of rotation (DZ) extending in a first direction (Z),
wherein the first part (15) and the second part (70) each have an extension perpendicular to the axis of rotation (DZ),
wherein the second part is arranged relative to the first part so as to be offset by a distance axially to the axis of rotation (DZ),
**characterized in that**
the coupling means (KE) has a first solid body joint (80A) and a second solid body joint (80B),
wherein the first solid body joint (80A) consists of a first elongate solid body, which extends perpendicular to the first direction (Z) along a first plane (ME1) parallel to the first direction (Z), and which has a longitudinal axis arranged perpendicular to the first direction (Z), wherein the first elongate solid body has the following longitudinal sections, which are arranged one behind another in the direction of the longitudinal axis of the first elongate solid body:
- a first end section (E1), which forms a first end of the first elongate solid body;
- a second end section (E2), which forms a second end of the first elongate solid body located opposite the first end of the first elongate solid body in the direction of the longitudinal axis of the first elongate solid body;
- a central section (F) arranged between the first end section and the second end section of the first elongate solid body;
- a first web part (S1) arranged between the first end section (E1) and the central section (F) of the first elongate solid body, connected to the first end section (E1) and the central section (F);
- a second web part (S2) arranged between the second end section (E2) and the central section (F) of the first elongate solid body, connected to the second end section (E2) and the central section (F) of the first elongate solid body;
wherein the second solid body joint (80B) consists of a second elongate solid body, which extends perpendicular to the first direction (Z) along a second plane (ME2) parallel to the first direction (Z), and which has a longitudinal axis arranged perpendicular to the first direction (Z), wherein the second elongate solid body has the following longitudinal sections, which are arranged one behind another, in the direction of the longitudinal axis of the second elongate solid body:
- a first end section (E1), which forms a first end of the second elongate solid body;
- a second end section (E2), which forms a second end of the second elongate solid body located opposite the first end of the second elongate solid body in the direction of the longitudinal axis of the second elongate solid body;
- a central section (F) arranged between the first end section and the second end section of the second elongate solid body;
- a first web part (S1) arranged between the first end section (E1) and the central section (F) of the second elongate solid body, connected to the first end section and the central section;
- a second web part (S2) arranged between the second end section (E2) and the central section (F) of the second elongate solid body, connected to the second end section (E2) and the central section (F) of the second elongate solid body;
wherein the first part (15) is connected to the second part (70) via the first solid body joint (80A) and the second solid body joint (80B) in such a way
that the first end section (E1) of the first elongate solid body and the second end section (E2) of the first elongate solid body are rigidly connected to the second part (70), and the central section (F) of the first elongate solid body is rigidly connected to the first part (15) and
that the first end section (E1) of the second elongate solid body and the second end section (E2) of the second elongate solid body are rigidly connected to the second part (70), and the central section (F) of the second elongate solid body is rigidly connected to the first part (15),
wherein the first plane (ME1) and the second plane (ME2) are inclined relative to one another in such a way that the first plane (ME1) and the second plane (ME2) form a common intersection line (DZ), which extends parallel to the first direction (Z),
wherein the first web part (S1) and the second web part (S2) of the first elongate solid body of the first solid body joint (80A) each have an extension (t_1, t_2) perpendicular to the first plane (ME1), which is smaller than an extension (t_3) of the first end section (E1) of the first elongate solid body perpendicular to the first plane (ME1), an extension (t_3) of the second end section (E2) of the first elongate solid body perpendicular to the first plane (ME1) and an extension (t_4) of the central section (F) of the first elongate solid body perpendicular to the first plane (ME1), so that the first web part (S1) and the second web part (S2) of the first elongate solid body are elastically deformable, and the central section (F) of the first solid body joint (80A) is enabled be moved relative to the first end section (E1) of the first solid body joint (80A) and to the second end section (E2) of the first solid body joint (80A);
wherein the first web part (S1) and the second web part (S2) of the second elongate solid body of the second solid body joint (80B) each have an extension (t_1, t_2) perpendicular to the second plane (ME2), which is smaller than an extension (t_3) of the first end section (E1) of the second elongate solid body perpendicular to the second plane (ME2), an extension (t_3) of the second end section (E2) of the second elongate solid body perpendicular to the second plane (ME2) and an extension (t_4) of the central section (F) of the second elongate solid body perpendicular to the second plane (ME2), so that the first web part (S1) and the second web part (S2) of the second elongate solid body are elastically deformable, and the central section (F) of the second solid body joint (80B) is enabled be moved relative to the first end section (E1) of the second solid body joint (80B) and to the second end section (E2) of the second solid body joint (80B);
wherein the second part (70) is rotatably mounted on the first part (15) about the common intersection line (DZ) of the first plane (ME1) and of the second plane (ME2) by means of the first solid body joint (80A) and the second solid body joint (80B).

2. The rotary joint arrangement (DGA) according to claim 1, wherein
in an undeformed state of the first solid body joint (80A), the first solid body joint (80A) is formed symmetrically to the first plane (ME1), and/or
in an undeformed state of the second solid body joint (80B), the second solid body joint (80B) is formed symmetrically to the second plane (ME2).

3. The rotary joint arrangement (DGA) according to claim 1 or 2, wherein
in the first direction (Z), the first end section (E1) of the first elongate solid body of the first solid body joint (80A) has an extension (h), which is larger than the extension (t_3) of the first end section (E1) of the first elongate solid body perpendicular to the first plane (ME1); and/or
in the first direction (Z), the second end section (E2) of the first elongate solid body of the first solid body joint (80A) has an extension (h), which is larger than the extension (t_3) of the second end section (E2) of the first elongate solid body perpendicular to the first plane (ME1); and/or
in the first direction (Z), the central section (F) of the first elongate solid body of the first solid body joint (80A) has an extension (hF), which is larger than the extension (t_4) of the central section (F) of the first elongate solid body perpendicular to the first plane (ME1); and/or
in the first direction (Z), the first web part (S1) of the first elongate solid body of the first solid body joint (80A) has an extension (h), which is larger than the extension (t_2) of the first web part (S1) of the first elongate solid body perpendicular to the first plane (ME1); and/or
in the first direction (Z), the second web part (S2) of the first elongate solid body of the first solid body joint (80A) has an extension (h), which is larger than the extension (t_2) of the second web part (S2) of the first elongate solid body perpendicular to the first plane (ME1); and/or
in the first direction (Z), the first end section (E1) of the second elongate solid body of the second solid body joint (80B) has an extension (h), which is larger than the extension (t_3) of the first end section (E1) of the second elongate solid body perpendicular to the second plane (ME2); and/or
in the first direction (Z), the second end section (E2) of the second elongate solid body of the second solid body joint (80B) has an extension (h), which is larger than the extension (t_3) of the second end section (E2) of the second elongate solid body perpendicular to the second plane (ME2); and/or
in the first direction (Z), the central section (F) of the second elongate solid body of the second solid body joint (80B) has an extension (hF), which is larger than the extension (t_4) of the central section (F) of the second elongate solid body perpendicular to the second plane (ME2); and/or
in the first direction (Z), the first web part (S1) of the second elongate solid body of the second solid body joint (80B) has an extension (h), which is larger than the extension (t_2) of the first web part (S1) of the second elongate solid body perpendicular to the second plane (ME2); and/or
in the first direction (Z), the second web part (S2) of the second elongate solid body of the second solid body joint (80B) has an extension (h), which is larger than the extension (t_2) of the second web part (S2) of the second elongate solid body perpendicular to the second plane (ME2).

4. The rotary joint arrangement (DGA) according to one of claims 1-3,
wherein
in an undeformed state of the first solid body joint (80A), the first solid body joint (80A), and, in an undeformed state of the second solid body joint (80B), the second solid body joint (80B) are arranged relative to one another in such a way that the first solid body joint (80A) and the second solid body joint (80B) are arranged symmetrically with respect to a third plane (E3), which extends parallel to the first direction (Z), wherein the common intersection line (DZ) of the first plane (ME1) and of the second plane (ME2) extends in the third plane (E3).

5. The rotary joint arrangement (DGA) according to one of claims 1-3,
wherein
the first solid body joint (80A) is arranged relative to the second solid body joint (80B) in such a way that the first solid body joint (80A) has a distance from the second solid body joint (80B) perpendicular to the first direction (Z).

6. The rotary joint arrangement (DGA) according to one of claims 1-5,
wherein the second part (70) has a first elongate hollow space (71A), which, in the first direction (Z), extends along the first plane (ME1), and the first solid body joint (80A) is arranged in the first elongate hollow space (71A) in such a way that, in the first direction (Z), the first solid body joint (80A) extends through the first elongate hollow space (71A) in the first direction (Z) at least over a portion of its extension;
wherein the second part (70) has a second elongate hollow space (71B), which, in the first direction (Z), extends along the second plane (ME2), and the second solid body joint (80B) is arranged in the second elongate hollow space (71B) in such a way that, in the first direction (Z), the second solid body joint (80B) extends through the second elongate hollow space (71B) in the first direction (Z) at least over a portion of its extension.

7. The rotary joint arrangement (DGA) according to claim 6,
wherein the first elongate hollow space (71A) extends along the first plane (ME1) in such a way that a longitudinal axis of the first elongate hollow space (71A) is arranged parallel to the first plane (ME1) and perpendicular to the first direction (Z), and the first elongate hollow space (71A) is limited laterally with respect to the first plane (ME1) by means of two side walls (HSA1, HSA2) of the second part (70), which are located opposite one another and which each extend in the first direction (Z) parallel to the first plane (ME1) and have a distance relative to one another in a direction perpendicular to the first plane (ME1);
wherein the second elongate hollow space (71B) extends along the second plane (ME2) in such a way that a longitudinal axis of the second elongate hollow space (71B) is arranged parallel to the second plane (ME2) and perpendicular to the first direction (Z), and the second elongate hollow space (71B) is limited laterally with respect to the second plane (ME2) by two side walls (HSB1, HSB2) of the second part (70), which are located opposite one another and which each extend in the first direction (Z) parallel to the second plane (ME2) and which have a distance relative to one another in a direction perpendicular to the second plane (ME2).

8. The rotary joint arrangement (DGA) according to claim 6 or 7,
wherein the two side walls (HSA1, HSA2) of the second part (70), which are located opposite one another and which laterally limit the first elongate hollow space (71A) with respect to the first plane (ME1), are formed in such a way that they enclose the first end section (E1) and the second end section (E2) of the first solid body joint (80A), so that the first end section (E1) and the second end section (E2) of the first solid body joint (80A) are connected in a positive manner to the second part (70);
wherein the two side walls (HSB1, HSB2) of the second part (70), which are located opposite one another and which laterally limit the second elongate hollow space (71B) with respect to the second plane (ME2), are formed in such a way that they enclose the first end section (E1) and the second end section (E2) of the second solid body joint (80B), so that the first end section (E1) and the second end section (E2) of the second solid body joint (80B) are connected in a positive manner to the second part (70).

9. The rotary joint arrangement (DGA) according to one of claims 6 - 8,
wherein the two side walls (HSA1, HSA2) of the second part (70), which are located opposite one another and which laterally limit the first elongate hollow space (71A) with respect to the first plane (ME1), are formed in such a way that they enclose the central section (F) of the first solid body joint (80A), wherein, perpendicular to the first plane (ME1), the two side walls (HSA1, HSA2) of the second part (70), which are located opposite one another and which laterally limit the first elongate hollow space (71A) with respect to the first plane (ME1), have a distance perpendicular to the first plane (ME1), which is larger than an extension (t_4) of the central section (F) of the first solid body joint (80A) perpendicular to the first plane (ME1), so that the central section (F) of the first solid body joint (80A) is enabled be moved relative to the second part (70);
wherein the two side walls (HSB1, HSB2) of the second part (70), which are located opposite one another and which laterally limit the second elongate hollow space (71B) with respect to the second plane (ME2), are formed in such a way that they enclose the central section (F) of the second solid body joint (80B), wherein, perpendicular to the second plane (ME2), the two side walls (HSB1, HSB2) of the second part (70), which are located opposite one another and which laterally limit the second elongate hollow space (71B) with respect to the second plane (ME2), have a distance, which is larger than an extension (t_4) of the central section (F) of the second solid body joint (80B) perpendicular to the second plane (ME2), so that the central section (F) of the second solid body joint (80B) is enabled to be moved relative to the second part (70).

10. The rotary joint arrangement (DGA) according to one of claims 6 - 8,
wherein the central section (F) of the first solid body joint (80A) is enabled to be moved relative to the second part (70) in a translatory movement perpendicular to the first plane (ME1); and/or
wherein the central section (F) of the first solid body joint (80A) is enabled to be moved relative to the second part (70) by means of a rotation about an axis of rotation extending in the first direction (Z); and/or
wherein the central section (F) of the second solid body joint (80B) is enabled to be moved relative to the second part (70) in a translatory movement perpendicular to the second plane (ME2); and/or
wherein the central section (F) of the second solid body joint (80B) can be moved relative to the second part (70) by means of a rotation about an axis of rotation extending in the first direction (Z).

11. The rotary joint arrangement (DGA) according to one of claims 1 - 10,
wherein the first plane (ME1) and the second plane (ME2) are inclined relative to one another in such a way that the first plane (ME1) and the second plane (ME2) intersect in the common intersection line (DZ) at an angle, which is larger than or equal to 10° and smaller than or equal to 120°.

12. The rotary joint arrangement (DGA) according to one of claims 1-11,
wherein the first plane (ME1) and the second plane (ME2) are inclined relative to one another in such a way that the first plane (ME1) and the second plane (ME2) intersect in the common intersection line (DZ) at an angle, which is larger than or equal to 30° and smaller than or equal to 90°.

13. A positioning device (1), comprising a rotary joint arrangement (DGA) according to one of claims 1 - 12 and a linear guide device (B, FB) for guiding the first part (15) or the second part (70) of the rotary joint arrangement (DGA), wherein
the first part of the rotary joint arrangement (DGA) is guided by means of the linear guide device in such a way that the first part is enabled to be moved linearly in a second direction (X), which extends perpendicular to the first direction (Z), or
the second part (70) of the rotary joint arrangement (DGA) is guided by means of the linear guide device (B, FB) in such a way that the second part (70) is enabled to be moved linearly in a second direction (X), which extends perpendicular to the first direction (Z).

14. The positioning device (1) according to claim 13, wherein, if the second part (70) is guided by means of the linear guide device (B, FB),
at least one linear drive (LMX1, LMX2), which is connected to the first part (15) of the rotary joint arrangement (DGA), is present for moving the first part (15) in the second direction (X).

15. The positioning device according to claim 13 or 14,
wherein the linear guide device comprises a base (B) comprising at least one flat guide surface (FF) and/or a guide beam (FB) comprising at least one flat guide surface (SF), and the second part (70) is guided by means of at least one air bearing (L1, L2, L3, L4) on the flat guide surface of the base (B) and/or on the flat guide surface (SF) of the guide beam (FB).

16. The positioning device (1) according to claim 13, wherein, if the first part is guided by means of the linear guide device,
at least one linear drive, which is connected to the second part of the rotary joint arrangement, is present for moving the second part in the second direction (X).

17. The positioning device according to claim 13 or 16,
wherein the linear guide device comprises a base (B) comprising at least one flat guide surface (FF) and/or a guide beam (FB) comprising at least one flat guide surface (SF) and the first part is guided by means of at least one air bearing on the flat guide surface of the base (B) and/or on the flat guide surface (SF) of the guide beam (FB).

## Revendications

1. Ensemble à articulation rotative (DGA), comprenant une première partie (15),
une deuxième partie (70) et
un dispositif d'accouplement (KE) avec au moins une articulation de corps fixe (80A, 80B) pour relier la première partie (15) et la deuxième partie (70) de telle manière que la deuxième partie peut tourner par rapport à la première partie autour d'un axe de rotation (DZ) s'étendant dans une première direction (Z),
sachant que la première partie (15) et la deuxième partie (70) comportent respectivement une extension perpendiculairement à l'axe de rotation (DZ),
sachant que la deuxième partie est disposée par rapport à la première partie décalée d'une distance axialement à l'axe de rotation (DZ),
**caractérisé en ce que**
le dispositif d'accouplement (KE) comporte une première articulation de corps fixe (80A) et une deuxième articulation de corps fixe (80B),
sachant que la première articulation de corps fixe (80A) est composée d'un premier corps fixe longitudinal, lequel s'étend le long d'un premier plan (ME1) parallèle à la première direction (Z) perpendiculairement à la première direction (Z) et comporte un axe longitudinal disposé perpendiculairement à la première direction (Z), sachant que le premier corps fixe longitudinal comporte des sections longitudinales disposées se suivant les unes derrière les autres en direction de l'axe longitudinal du premier corps fixe longitudinal :
- une première section finale (E1), laquelle forme une première extrémité du premier corps fixe longitudinal,
- une deuxième section finale (E2), laquelle forme une deuxième extrémité du premier corps fixe longitudinal, opposée à la première extrémité du premier corps fixe longitudinal en direction de l'axe longitudinal du premier corps fixe longitudinal,
- une section médiane (F) disposée entre la première section finale et la deuxième section finale du premier corps fixe longitudinal,
- une première partie nervurée (S1) disposée entre la première section finale (E1) et la section médiane (F) du premier corps fixe longitudinal, reliée à la première section finale (E1) et à la section médiane (F),
- une deuxième partie nervurée (S2) disposée entre la deuxième section finale (E2) et la section médiane (F), reliée à la deuxième section finale (E2) et à la section médiane (F) du premier corps fixe longitudinal,
sachant que la deuxième articulation de corps fixe (80B) est composée d'un deuxième corps fixe longitudinal, lequel s'étend le long d'un deuxième plan (ME2) parallèle à une première direction (Z) perpendiculairement à la première direction (Z) et comporte un axe longitudinal disposé perpendiculairement à la première direction (Z), sachant que le deuxième corps fixe longitudinal comporte des sections longitudinales disposées se suivant les unes derrière les autres en direction de l'axe longitudinal du deuxième corps fixe longitudinal :
- une première section finale (E1), laquelle forme une première extrémité du deuxième corps fixe longitudinal,
- une deuxième section finale (E2), laquelle forme une deuxième extrémité du deuxième corps fixe longitudinal, opposée à la première extrémité du deuxième corps fixe longitudinal en direction de l'axe longitudinal du deuxième corps fixe longitudinal,
- une section médiane (F) disposée entre la première section finale et la deuxième section finale du deuxième corps fixe longitudinal,
- une première partie nervurée (S1) disposée entre la première section finale (E1) et la section médiane (F) du deuxième corps fixe longitudinal, reliée à la première section finale et à la section médiane,
- une deuxième partie nervurée (S2) disposée entre la deuxième section finale (E2) et la section médiane (F) du deuxième corps fixe longitudinal, reliée à la deuxième section finale (E2) et à la section médiane (F) du deuxième corps fixe longitudinal,
sachant que la première partie (15) est reliée à la deuxième partie (70) par la première articulation de corps fixe (80A) et la deuxième articulation de corps fixe (80B) de telle manière que
la première section finale (E1) du premier corps fixe longitudinal et la deuxième section finale (E2) du premier corps fixe longitudinal sont reliées rigidement à la deuxième partie (70) et la section médiane (F) du premier corps fixe longitudinal est reliée rigidement à la première partie (15), et
que la première section finale (E1) du deuxième corps fixe longitudinal et la deuxième section finale (E2) du deuxième corps fixe longitudinal sont reliées rigidement à la deuxième partie (70) et la section médiane (F) du deuxième corps fixe longitudinal rigidement à la première partie (15),
sachant que le premier plan (ME1) et le deuxième plan (ME2) sont inclinés l'un par rapport à l'autre de telle manière que le premier plan (ME1) et le deuxième plan (ME2) forment une ligne de coupe commune (DZ) s'étendant parallèlement à la première direction (Z),
sachant que la première partie nervurée (S1) et la deuxième partie nervurée (S2) du premier corps fixe longitudinal de la première articulation de corps fixe (80A) comportent respectivement perpendiculairement au premier plan (ME1) une extension (t_1, t_2), laquelle est plus faible qu'une extension (t_3) de la première section finale (E1) du premier corps fixe longitudinal perpendiculairement au premier plan (ME1), une extension (t_3) de la deuxième section finale (E2) du premier corps fixe longitudinal perpendiculairement au premier plan (ME1) et une extension (t_4) de la section médiane (F) du premier corps fixe longitudinal perpendiculairement au premier plan (ME1) de telle sorte que la première partie nervurée (S1) et la deuxième partie nervurée (S2) du premier corps fixe longitudinal peuvent être élastiquement déformées et la section médiane (F) de la première articulation de corps fixe (80A) peut être mobile par rapport à la première section finale (E1) de la première articulation de corps fixe (80A) et par rapport à la deuxième section finale (E2) de la première articulation de corps fixe (80A), sachant que la première partie nervurée (S1) et la deuxième partie nervurée (S2) du deuxième corps fixe longitudinal de la deuxième articulation de corps fixe (80B) comportent respectivement perpendiculairement au deuxième plan (ME2) une extension (t_1, t_2), laquelle est plus faible qu'une extension (t_3) de la première section finale (E1) du deuxième corps fixe longitudinal perpendiculairement au deuxième plan (ME2), une extension (t_3) de la deuxième section finale (E2) du deuxième corps fixe longitudinal perpendiculairement au deuxième plan (ME2) et une extension (t_4) de la section médiane (F) du deuxième corps fixe longitudinal perpendiculairement au deuxième plan (ME2) de telle sorte que la première partie nervurée (S1) et la deuxième partie nervurée (S2) du deuxième corps fixe longitudinal peuvent être élastiquement déformées et la section médiane (F) de la deuxième articulation de corps fixe (80B) peut être mobile par rapport à la première section finale (E1) de la deuxième articulation de corps fixe (80B) et par rapport à la deuxième section finale (E2) de la deuxième articulation de corps fixe (80B),
sachant que la deuxième partie (70) est logée pouvant tourner au moyen de la première articulation de corps fixe (80A) et de la deuxième articulation de corps fixe (80B) sur la première partie (15) autour de la ligne de coupe commune (DZ) du premier plan (ME1) et du deuxième plan (ME2).

2. Ensemble à articulation rotative (DGA) selon la revendication 1, sachant que
la première articulation fixe (80A) dans un état non déformé de la première articulation fixe (80A) est constituée de façon symétrique par rapport au premier plan (ME1), et/ou
la deuxième articulation fixe (80B) dans un état non déformé de la deuxième articulation fixe (80B) est constituée de façon symétrique par rapport au deuxième plan (ME2).

3. Ensemble à articulation rotative (DGA) selon la revendication 1 ou 2, sachant que
la première section finale (E1) du premier corps fixe longitudinal de la première articulation fixe (80A) comporte dans la première direction (Z) une extension (h), laquelle est plus grande que l'extension (t_3) de la première section finale (E1) du premier corps fixe longitudinal perpendiculairement au premier plan (ME1), et/ou
la deuxième section finale (E2) du premier corps fixe longitudinal de la première articulation fixe (80A) comporte dans la première direction (Z) une extension (h), laquelle est plus grande que l'extension (t_3) de la deuxième section finale (E2) du premier corps fixe longitudinal perpendiculairement au premier plan (ME1), et/ou
la section médiane (F) du premier corps fixe longitudinal de la première articulation de corps fixe (80A) comporte dans la première direction (Z) une extension (hF), laquelle est plus grande que l'extension (t_4) de la section médiane (F) du premier corps fixe longitudinal perpendiculairement au premier plan (ME1), et/ou
la première partie nervurée (S1) du premier corps fixe longitudinal de la première articulation de corps fixe (80A) comporte dans la première direction (Z) une extension (h), laquelle est plus grande que l'extension (t_2) de la première parie nervurée (S1) du premier corps fixe longitudinal perpendiculairement au premier plan (ME1), et/ou
la deuxième partie nervurée (S2) du premier corps fixe longitudinal de la première articulation de corps fixe (80A) comporte dans la première direction (Z) une extension (h), laquelle est plus grande que l'extension (t_2) de la deuxième partie nervurée (S2) du premier corps fixe longitudinal perpendiculairement au premier plan (ME1), et/ou
la première section finale (E1) du deuxième corps fixe longitudinal de la deuxième articulation de corps fixe (80B) comporte dans la première direction (Z) une extension (h), laquelle est plus grande que l'extension (t_3) de la première section finale (E1) du deuxième corps fixe longitudinal perpendiculairement au deuxième plan (ME2), et/ou
la deuxième section finale (E2) du deuxième corps fixe longitudinal de la deuxième articulation de corps fixe (80B) comporte dans la première direction (Z) une extension (h), laquelle est plus grande que l'extension (t_3) de la deuxième section finale (E2) du deuxième corps fixe longitudinal perpendiculairement au deuxième plan (ME2), et/ou
la section médiane (F) du deuxième corps fixe longitudinal de la deuxième articulation de corps fixe (80B) comporte dans la première direction (Z) une extension (hF), laquelle est plus grande que l'extension (t_4) de la section médiane (F) du deuxième corps fixe longitudinal perpendiculairement au deuxième plan (ME2), et/ou
la première partie nervurée (S1) du deuxième corps fixe longitudinal de la deuxième articulation de corps fixe (80B) comporte dans la première direction (Z) une extension (h), qui est plus grande que l'extension (t_2) de la première partie nervurée (S1) du deuxième corps fixe longitudinal perpendiculairement au deuxième plan (ME2), et/ou
la deuxième partie nervurée (S2) du deuxième corps fixe longitudinal de la deuxième articulation de corps fixe (80B) comporte dans la première direction (Z) une extension (h), qui est plus grande que l'extension (t_2) de la deuxième partie nervurée (S2) du deuxième corps fixe longitudinal perpendiculairement au deuxième plan (ME2).

4. Ensemble à articulation rotative (DGA) selon l'une quelconque des revendications 1 - 3,
sachant que
la première articulation fixe (80A) dans un état non déformé de la première articulation fixe (80A) et la deuxième articulation de corps fixe (80B) dans un état non déformé de la deuxième articulation de corps fixe (80B) sont disposées l'une par rapport à l'autre de telle manière que la première articulation de corps fixe (80A) et la deuxième articulation de corps fixe (80B) sont disposées de façon symétrique par rapport à un troisième plan (E3), lequel s'étend parallèlement à la première direction (Z), sachant que la ligne de coupe commune (DZ) du premier plan (ME1) et du deuxième plan (ME2) s'étend dans le troisième plan (E3).

5. Ensemble à articulation rotative (DGA) selon l'une quelconque des revendications 1 - 3,
sachant que
la première articulation de corps fixe (80A) est disposée par rapport à la deuxième articulation de corps fixe (80B) de telle manière que la première articulation de corps fixe (80A) comporte perpendiculairement à la première direction (Z) un intervalle par rapport à la deuxième articulation fixe (80B).

6. Ensemble à articulation rotative (DGA) selon l'une quelconque des revendications 1 - 5,
sachant que la deuxième partie (70) comporte un premier espace creux (71A) longitudinal, lequel s'étend dans la première direction (Z) le long du premier plan (ME1) et la première articulation de corps fixe (80A) est disposée dans le premier espace creux longitudinal (71A) de telle manière que la première articulation de corps fixe (80A) s'étend dans la première direction (Z) au moins sur une partie de son extension dans la première direction (Z) à travers le premier espace creux longitudinal (71A),
sachant que la deuxième partie (70) comporte un deuxième espace creux (71B) longitudinal, lequel s'étend dans la première direction (Z) le long du deuxième plan (ME2) et la deuxième articulation de corps fixe (80B) est disposée dans le deuxième espace creux longitudinal (71B) de telle manière que la deuxième articulation de corps fixe (80B) s'étend dans la première direction (Z) au moins sur une partie de son extension dans la première direction (Z) à travers le deuxième espace creux longitudinal (71B).

7. Ensemble à articulation rotative (DGA) selon la revendication 6,
sachant que le premier espace creux (71A) longitudinal s'étend le long du premier plan (ME1) de telle manière qu'un axe longitudinal du premier espace creux longitudinal (71A) est disposé parallèlement au premier plan (ME1) et perpendiculairement à la première direction (Z) et le premier espace creux longitudinal (71A) est délimité latéralement par rapport au premier plan (ME1) par deux parois latérales (HSA1, HSA2) opposées de la deuxième partie (70), lesquelles s'étendent respectivement dans la première direction (Z) parallèlement au premier plan (ME1) et comportent l'une par rapport à l'autre un intervalle dans une direction perpendiculairement au premier plan (ME1),
sachant que le deuxième espace creux longitudinal (71B) s'étend le long du deuxième plan (ME2) de telle manière qu'un axe longitudinal du deuxième espace creux longitudinal (71B) est disposé parallèlement au deuxième plan (ME2) et perpendiculairement à la première direction (Z) et le deuxième espace creux longitudinal (71B) est délimité latéralement par rapport au deuxième plan (ME2) par deux parois latérales (HSB1, HSB2) opposées de la deuxième partie (70), lesquelles s'étendent respectivement dans la première direction (Z) parallèlement au deuxième plan (ME2) et comportent l'une par rapport à l'autre un intervalle dans une direction perpendiculairement au deuxième plan (ME2).

8. Ensemble à articulation rotative (DGA) selon la revendication 6 ou 7,
sachant que les deux parois latérales (HSA1, HSA2) opposées l'une à l'autre de la deuxième partie (70), délimitant latéralement le premier espace creux longitudinal (71A) par rapport au premier plan (ME1) sont formées de telle manière qu'elles entourent la première section finale (E1) et la deuxième section finale (E2) de la première articulation de corps fixe (80A) de telle sorte que la première section finale (E1) et la deuxième section finale (E2) de la première articulation de corps fixe (80A) sont reliées par conformité de forme à la deuxième partie (70),
sachant que les deux parois latérales (HSB1, HSB2) opposées l'une à l'autre de la deuxième partie (70), délimitant latéralement le deuxième espace creux longitudinal (71B) par rapport au deuxième plan (ME2) sont formées de telle manière qu'elles entourent la première section finale (E1) et la deuxième section finale (E2) de la deuxième articulation de corps fixe (80B) de telle sorte que la première section finale (E1) et la deuxième section finale (E2) de la deuxième articulation de corps fixe (80B) sont reliées par conformité de forme à la deuxième partie (70).

9. Ensemble à articulation rotative (DGA) selon l'une quelconque des revendications 6 - 8,
sachant que les deux parois latérales (HSA1, HSA2) de la deuxième partie (70), opposées l'une à l'autre, délimitant le premier espace creux (71A) longitudinal latéralement par rapport au premier plan (ME1) sont formées de telle manière qu'elles entourent la section médiane (F) de la première articulation fixe (80A), sachant que les deux parois latérales (HSA1, HSA2) de la deuxième partie (70), opposées l'une à l'autre, délimitant le premier espace creux (71A) longitudinal latéralement par rapport au premier plan (ME1) comportent perpendiculairement au premier plan (ME1) un intervalle, lequel est plus grand qu'une extension (t_4) de la section médiane (F) de la première articulation de corps fixe (80A) perpendiculairement au premier plan (ME1) de telle sorte que la section médiane (F) de la première articulation de corps fixe (80A) peut être mobile par rapport à la deuxième partie (70), sachant que les deux parois latérales (HSB1, HSB2) de la deuxième partie (70), opposées l'une à l'autre, délimitant le deuxième espace creux (71B) longitudinal latéralement par rapport au deuxième plan (ME2) sont formées de telle manière, qu'elles entourent la section médiane (F) de la deuxième articulation fixe (80B), sachant que les deux parois latérales (HSB1, HSB2) de la deuxième partie (70), opposées l'une à l'autre, délimitant le deuxième espace creux (71B) longitudinal latéralement par rapport au deuxième plan (ME2) comportent perpendiculairement au deuxième plan (ME2) un intervalle, lequel est plus grand qu'une extension (t_4) de la section médiane (F) de la deuxième articulation de corps fixe (80B) perpendiculairement au deuxième plan (ME2) de telle sorte que la section médiane (F) de la deuxième articulation de corps fixe (80B) peut être mobile par rapport à la deuxième partie (70).

10. Ensemble à articulation rotative (DGA) selon l'une quelconque des revendications 6 - 8,
sachant que la section médiane (F) de la première articulation de corps fixe (80A) peut être mobile par rapport à la deuxième partie (70) dans un mouvement translatoire perpendiculairement au premier plan (ME1), et/ou
sachant que la section médiane (F) de la première articulation de corps fixe (80A) peut être mobile par rapport à la deuxième partie (70) au moyen d'une rotation autour d'un axe de rotation s'étendant dans la première direction (Z), et/ou
sachant que la section médiane (F) de la deuxième articulation de corps fixe (80B) peut être mobile par rapport à la deuxième partie (70) au moyen d'un mouvement translatoire perpendiculairement au deuxième plan (ME2), et/ou
sachant que la section médiane (F) de la deuxième articulation de corps fixe (80B) peut être mobile par rapport à la deuxième partie (70) au moyen d'une rotation autour d'un axe de rotation s'étendant dans la première direction (Z).

11. Ensemble à articulation rotative (DGA) selon l'une quelconque des revendications 1 - 10,
sachant que le premier plan (ME1) et le deuxième plan (ME2) sont inclinés l'un par rapport à l'autre de telle sorte que le premier plan (ME1) et le deuxième plan (ME2) se croisent dans une ligne de coupe commune (DZ) sous un angle, lequel est plus grand ou égal à 10° et plus petit ou égal à 120°.

12. Ensemble à articulation rotative (DGA) selon l'une quelconque des revendications 1 - 11,
sachant que le premier plan (ME1) et le deuxième plan (ME2) sont inclinés l'un par rapport à l'autre de telle sorte que le premier plan (ME1) et le deuxième plan (ME2) se croisent dans une ligne de coupe commune (DZ) sous un angle, lequel est plus grand ou égal à 30° et plus petit ou égal à 90°.

13. Dispositif de positionnement (1), avec un ensemble à articulation rotative (DGA) selon l'une quelconque des revendications 1 - 12 et un dispositif de guidage linéaire (B, FB) pour guider la première partie (15) ou la deuxième partie (70) de l'ensemble à articulation rotative (DGA), sachant que
la première partie de l'ensemble à articulation rotative (DGA) est guidée au moyen du dispositif de guidage linéaire de telle manière que la première partie peut être mobile de façon linéaire dans une deuxième direction (X), laquelle s'étend vers la première direction (Z), ou
la deuxième partie (70) de l'ensemble à articulation rotative (DGA) est guidée au moyen du dispositif de guidage linéaire (B, FB) de telle manière que la deuxième partie (70) peut être mobile de façon linéaire dans une deuxième direction (X), laquelle s'étend vers la première direction (Z).

14. Dispositif de positionnement (1) selon la revendication 13, sachant qu'
au cas où la deuxième partie (70) est guidée au moyen du dispositif de guidage linéaire (B, FB),
au moins un entraînement linéaire (LMX1, LMX2) relié à la première partie (15) de l'ensemble à articulation rotative (DGA) est présent pour déplacer la première partie (15) dans la deuxième direction (X).

15. Dispositif de positionnement selon la revendication 13 ou 14,
sachant que le dispositif de guidage linéaire comprend une base (B) avec au moins une surface de guidage (FF) plane et/ou une poutre de guidage (FB) avec au moins une surface de guidage (SF) plane et la deuxième partie (70) est guidée au moyen d'au moins un palier à air (L1, L2, L3, L4) sur la surface de guidage plane de la base (B) et/ou sur la surface de guidage plane (SF) de la poutre de guidage (FB).

16. Dispositif de positionnement (1) selon la revendication 13, sachant qu'
au cas où la première partie est guidée au moyen du dispositif de guidage linéaire,
au moins un entraînement linéaire relié à la deuxième partie de l'ensemble à articulation rotative est présent pour déplacer la deuxième partie dans la deuxième direction (X).

17. Dispositif de positionnement selon la revendication 13 ou 16,
sachant que le dispositif de guidage linéaire comprend une base (B) avec au moins une surface de guidage (FF) plane et/ou une poutre de guidage (FB) avec au moins une surface de guidage (SF) plane et la première partie est guidée au moyen d'au moins un palier à air sur la surface de guidage plane de la base (B) et/ou sur la surface de guidage plane (SF) de la poutre de guidage (FB).
